(19) Europäisches Patentamt / European Patent Office / Office européen des brevets

(11) **EP 4 354 125 B1**

(12) **EUROPEAN PATENT SPECIFICATION**

(45) Date of publication and mention
of the grant of the patent:
**20.05.2026 Bulletin 2026/21**

(21) Application number: **22820291.7**

(22) Date of filing: **09.06.2022**

(51) International Patent Classification (IPC):
**G01N 22/00** *(2006.01)* **G01B 15/04** *(2006.01)*

(52) Cooperative Patent Classification (CPC):
**G01N 22/00; G01B 15/04**

(86) International application number:
**PCT/JP2022/023224**

(87) International publication number:
**WO 2022/260112 (15.12.2022 Gazette 2022/50)**

(54) **IMAGING DEVICE AND IMAGING METHOD**

BILDGEBUNGSVORRICHTUNG UND BILDGEBUNGSVERFAHREN

DISPOSITIF D'IMAGERIE ET PROCÉDÉ D'IMAGERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2021 JP 2021098329**

(43) Date of publication of application:
**17.04.2024 Bulletin 2024/16**

(73) Proprietor: **Integral Geometry Science Inc.**
**Kobe-shi, Hyogo 657-8501 (JP)**

(72) Inventors:
• **KIMURA, Kenjiro**
**Kobe-shi, Hyogo 657-8501 (JP)**
• **KIMURA, Noriaki**
**Kobe-shi, Hyogo 657-8501 (JP)**
• **KIMURA, Fumitoshi**
**Kobe-shi, Hyogo 657-8501 (JP)**

(74) Representative: **KATZAROV S.A.**
**Geneva Business Center**
**12 Avenue des Morgines**
**1213 Petit-Lancy (CH)**

(56) References cited:
WO-A1-2014/125815 WO-A1-2015/136936
WO-A1-2017/057524 WO-A1-2021/020387
JP-A- 2000 514 917 JP-A- 2017 509 416
JP-A- 2018 512 985 JP-A- 2019 510 593
JP-A- 2020 031 714 JP-B2- 6 557 747
US-A1- 2004 034 307

• LING WANG ET AL: "Passive imaging using distributed apertures in multiple-scattering environments;Passive imaging using distributed apertures in multiple-scattering environments", INVERSE PROBLEMS, INSTITUTE OF PHYSICS PUBLISHING, BRISTOL, GB, vol. 26, no. 6, 7 May 2010 (2010-05-07), pages 65002, XP020192521, ISSN: 0266-5611, DOI: 10.1088/0266-5611/26/6/065002

• MARENGO EDWIN A: "Quasi-Born approximation scattering and inverse scattering of multiple scattering targets", IET RADAR SONAR NAVIGATION, THE INSTITUTION OF ENGINEERING AND TECHNOLOGY, UK, vol. 11, no. 8, 1 August 2017 (2017-08-01), pages 1276 - 1284, XP006062475, ISSN: 1751-8784, DOI: 10.1049/IET-RSN.2016.0622

• MARGARET CHENEY ET AL: "Imaging that exploits multipath scattering from point scatterers; Imaging that exploits multipath scattering from point scatterers", INVERSE PROBLEMS, INSTITUTE OF PHYSICS PUBLISHING, BRISTOL, GB, vol. 20, no. 5, 1 October 2004 (2004-10-01), pages 1691 - 1711, XP020030716, ISSN: 0266-5611, DOI: 10.1088/0266-5611/20/5/023

EP 4 354 125 B1

- **KIM JERRY ET AL: "Tuning to Resonances With Iterative Time Reversal", IEEE TRANSACTIONS ON ANTENNAS AND PROPAGATION, IEEE, USA, vol. 64, no. 10, 1 October 2016 (2016-10-01), pages 4343 - 4354, XP011624898, ISSN: 0018-926X, [retrieved on 20161004], DOI: 10.1109/TAP.2016.2593718**

**Description**

[Technical Field]

The present disclosure relates to an imaging device and the like that uses waves to visualize the three-dimensional structure of one or more scatterers included in an object in a region.

[Background Art]

Patent Literature (PTL) 1, PTL 2, PTL 3, PTL 4, and PTL 5 disclose techniques related to imaging devices and the like that use waves to visualize the three-dimensional structure of each scatterer included in an object in a region.

For example, with the technique disclosed in PTL 1, a beam transmitted from a microwave transmitter is incident on the object to be inspected, and the amplitude and phase of the scattered beams are detected by a microwave detector. The dielectric constant distribution is then calculated from the output signal of the microwave detector, and a section of the object is displayed.

[Citation List]

[Patent Literature]

[PTL 1] Japanese Unexamined Patent Application Publication No. S62-66145
[PTL 2] International Patent Application Publication No. WO2014/125815
[PTL 3] International Patent Application Publication No. WO2015/136936
[PTL 4] International Patent Application Publication No. WO2021/020387
[PTL 5] International Patent Application Publication No. WO2021/053971

[Summary of Invention]

[Technical Problem]

However, it is not easy to visualize the three-dimensional structure of each scatterer included in an object in a region using waves. Specifically, when the state in the region is known, obtaining the data of the scattered waves radiated from the region relative to the waves incident on the region is called a forward problem, which is easy. On the other hand, when the scattered wave data is known, obtaining the state in the region is called an inverse problem, which is not easy.

In addition, for a single wave transmission, a plurality of scattering (reflections) may occur in the region. In other words, not only the first-order scattering corresponding to single scattering, but also the second-order scattering corresponding to two scattering, the third-order scattering corresponding to three scattering and the like may occur. Scattering more than once is also called multiple scattering. In some cases, data on scattered waves caused by multiple scattering may be obtained through measurement. An analytical method that considers only the first-order scattering but does not consider multiple scattering cannot accurately obtain the state in the region.

In view of the above, the present disclosure provides an imaging device and the like that is capable of visualizing, with high accuracy, the three-dimensional structure of one or more scatterers included in an object in a region, using waves.

[Solution to Problem]

An imaging device according to one aspect of the present disclosure includes: a plurality of transmitters which are disposed on both sides of a region to be measured, and each of which transmits a wave to the region; a plurality of receivers which are disposed on the both sides, and each of which receives the wave; and an information processing circuit which derives an imaging function corresponding to a scattering field function related to scattering of the wave according to a correspondence between (i) measurement data obtained by the plurality of transmitters and the plurality of receivers and (ii) a composition of a plurality of functions related to multiple first-order scattering forming multiple scattering, and visualizes a three-dimensional structure of a scatterer included in an object in the region, using the imaging function.

General and specific aspects disclosed above may be implemented using a system, a device, a method, an integrated circuit, a computer program, or a computer-readable non-transitory recording medium such as a CD-ROM, or any combination of systems, devices, methods, integrated circuits, computer programs, or recording media.

[Advantageous Effects of Invention]

According to the present disclosure, it is possible to visualize, with high accuracy, the three-dimensional structure of one or more scatterers included in an object in a region, using waves.

[Brief Description of Drawings]

[FIG. 1]

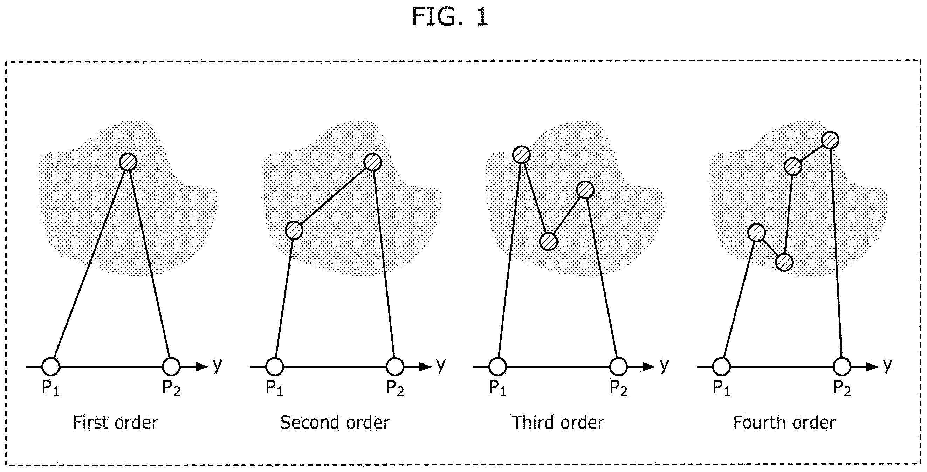

FIG. 1 is a conceptual diagram illustrating an example of multiple scattering orders according to an embodiment.
[FIG. 2]

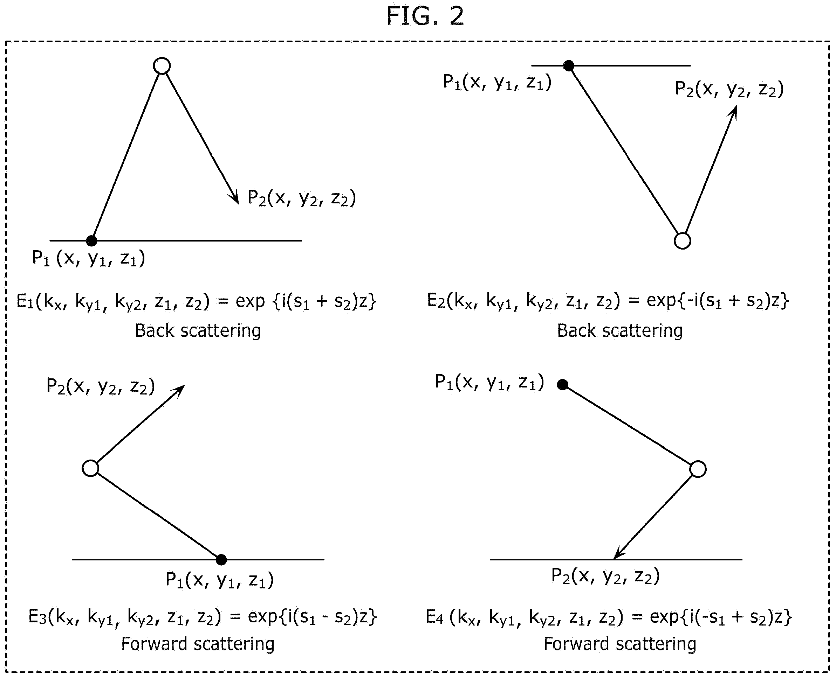

FIG. 2 is a diagram illustrating four types of scattering states corresponding to four types of fundamental solutions of a scattering field equation.
[FIG. 3]

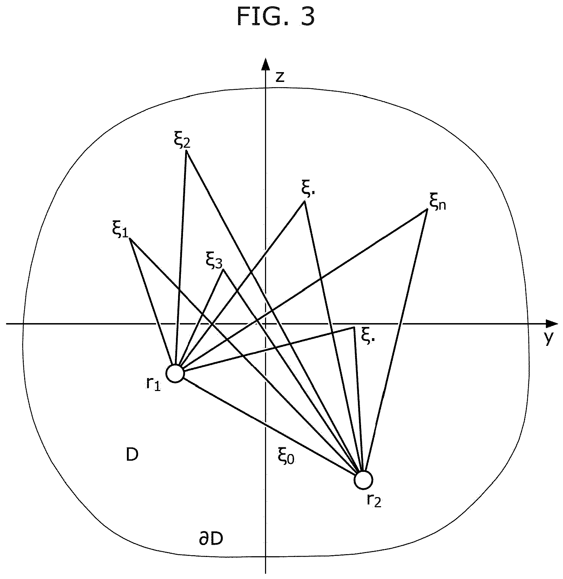

FIG. 3 is a conceptual diagram relating to a definition of the Green's function.
[FIG. 4]

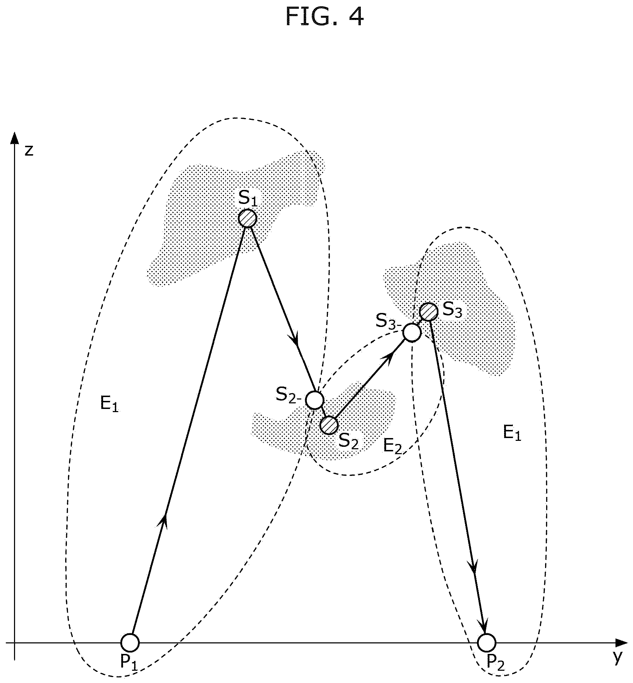

FIG. 4 is a conceptual diagram illustrating an application example of fundamental solutions of a scattering field.
[FIG. 5]

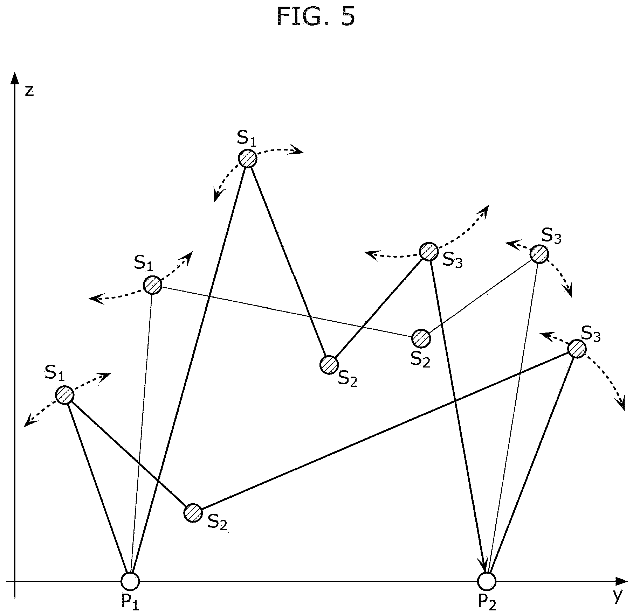

FIG. 5 illustrates wave propagation paths.
[FIG. 6]

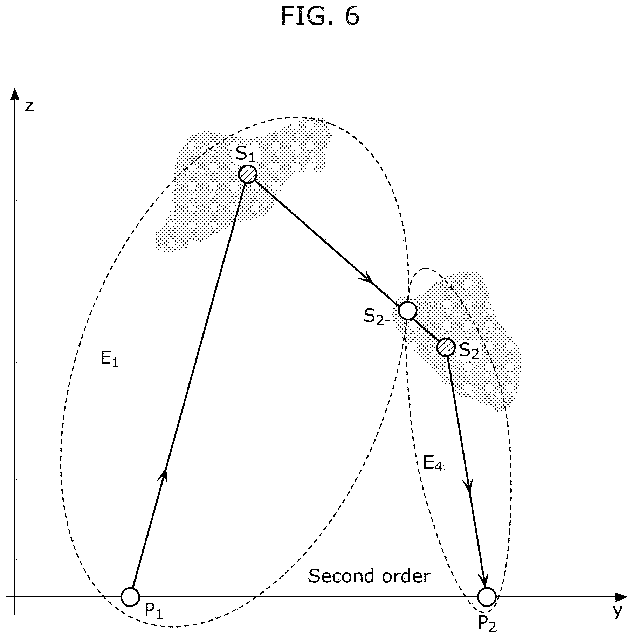

FIG. 6 is a conceptual diagram illustrating an application example of fundamental solutions of a scattering field related to second-order scattering.
[FIG. 7]

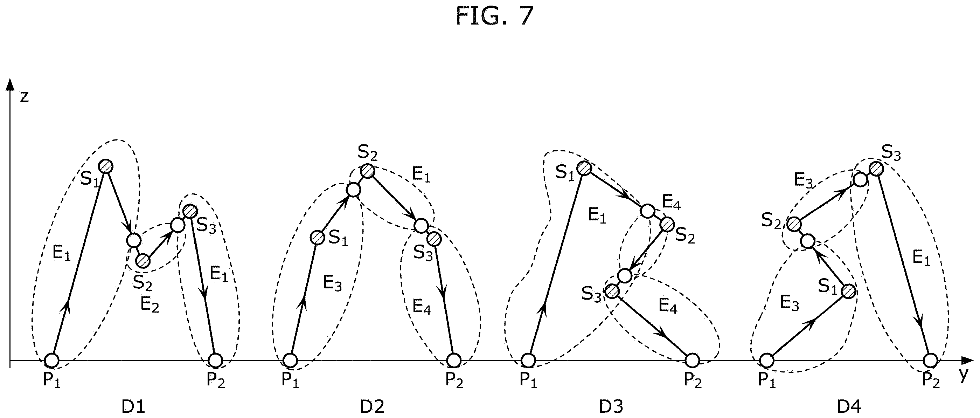

FIG. 7 illustrates four types of scattering models related to third-order scattering.
[FIG. 8]

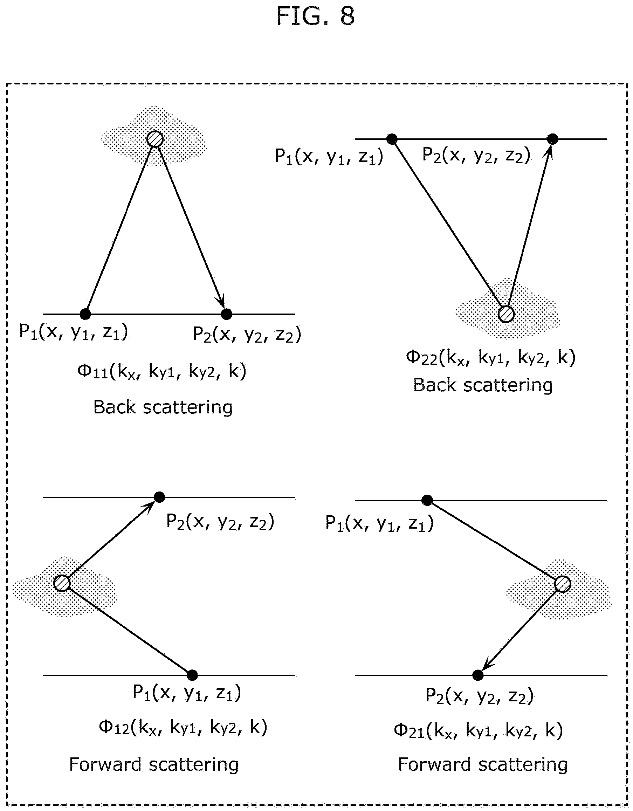

FIG. 8 illustrates definitions of four types of measurement data.
[FIG. 9]

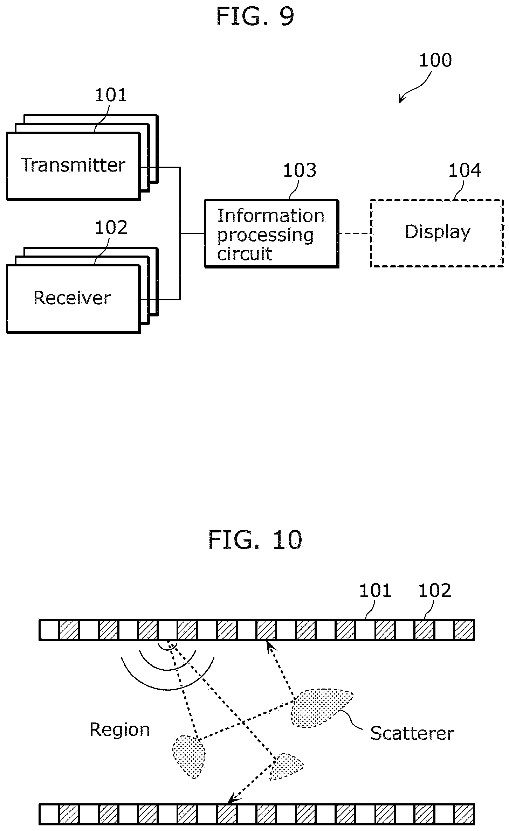

FIG. 9 is a block diagram illustrating a basic configuration of an imaging device according to the embodiment.
[FIG. 10]
FIG. 10 is a conceptual diagram illustrating an example of a relation between a plurality of transmitters, a plurality of receivers, and a region.
[FIG. 11]

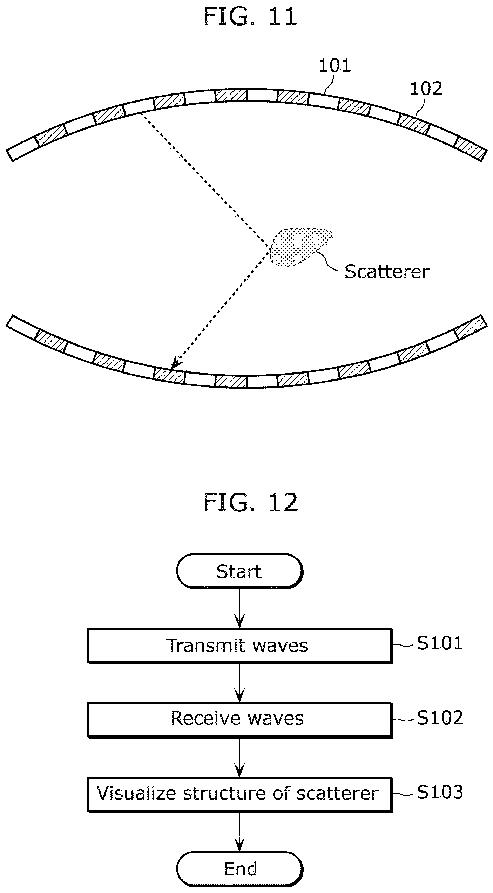

FIG. 11 is a conceptual diagram illustrating a variation of the relation between the plurality of transmitters, the plurality of receivers, and the region.
[FIG. 12]
FIG. 12 is a flowchart illustrating a basic operation of the imaging device according to the embodiment.
[FIG. 13]

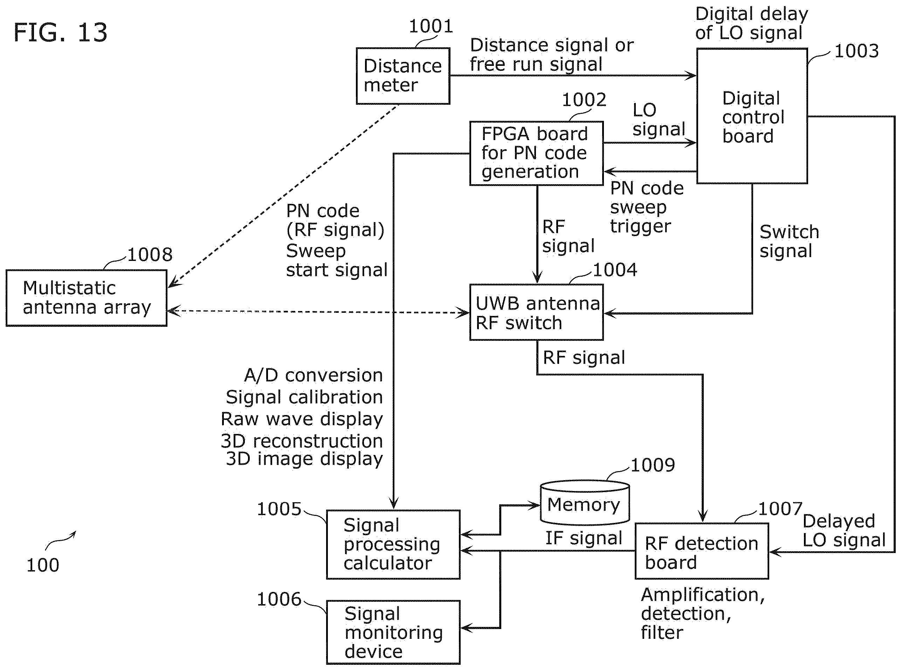

FIG. 13 is a block diagram illustrating a specific configuration of the imaging device according to the embodiment.

[Description of Embodiment]

An imaging device according to one aspect of the present disclosure includes: a plurality of transmitters which are disposed on both sides of a region to be measured, and each of which transmits a wave to the region; a plurality of receivers which are disposed on the both sides, and each of which receives the wave; and an information processing circuit which derives an imaging function corresponding to a scattering field function related to scattering of the wave according to a correspondence between (i) measurement data obtained by the plurality of transmitters and the plurality of receivers and (ii) a composition of a plurality of functions related to multiple first-order scattering forming multiple scattering, and visualizes a three-dimensional structure of a scatterer included in an object in the region, using the imaging function.

This allows the imaging device to apply the correspondence between the measurement data and the composition of a plurality of functions related to multiple first-order scattering to derive an imaging function for visualizing the three-dimensional structure of each scatterer included in an object in a region. Multiple scattering is assumed to be a combination of multiple first-order scattering. Hence, the imaging device is capable of analytically solving the inverse problem of scattering, including multiple scattering, according to this correspondence. Accordingly, the imaging device is capable of visualizing, with high accuracy, the three-dimensional structure of each scatterer included in an object in a region.

For example, the information processing circuit derives the imaging function corresponding to the scattering field function by solving an equation of the scattering field function based on the measurement data. The scattering field function is expressed by

[Math. 1]

$$\phi(x, y_1, y_2, z_1, z_2, k) = \iint_D \frac{e^{ik\rho_1}}{\rho_1} \frac{e^{ik\rho_2}}{\rho_2} \varepsilon(\xi, \eta, \zeta) d\xi d\eta d\zeta$$

where $(x, y_1, z_1)$ denotes a transmission position of the wave, $(x, y_2, z_2)$ denotes a reception position of the wave, k denotes a wave number of the wave, D denotes the region, $(\xi, \eta, \zeta)$ corresponds to a reflection position of the wave, $\varepsilon$ corresponds to an unknown reflectance at the reflection position, $\rho_1$ denotes a distance from the transmission position to the reflection position, and $\rho_2$ denotes a distance from the reflection position to the reception position. The equation is expressed by

[Math. 2]

$$\left[ \frac{1}{4} \Delta_5{}^2 - \frac{1}{c^2} \partial_t{}^2 \partial_x{}^2 - (\partial_{y_1}{}^2 + \partial_{z_1}{}^2)(\partial_{y_2}{}^2 + \partial_{z_2}{}^2) \right] \phi = 0$$

where $\Delta_5$ denotes a Laplace operator related to x, $y_1$, $y_2$, $z_1$, and $z_2$, c denotes a propagation velocity of the wave, and t denotes a time taken from transmission of the wave to reception of the wave.

This allows the imaging device to visualize, with high accuracy, the three-dimensional structure of each scatterer included in an object in a region, according to the scattering field function associated with the scattering phenomenon and the equation satisfied by the scattering field function.

Moreover, for example, the information processing circuit derives an analytical solution of the equation based on the measurement data, and derives the imaging function based on the analytical solution, and the analytical solution is expressed by

[Math. 3]

$$\phi(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k) e^{is_1(k_x, k_{y_1}, k_{y_2})z_1} e^{is_2(k_x, k_{y_1}, k_{y_2})z_2} dk_x dk_{y_1} dk_{y_2}$$

where $k_x$, $k_{y_1}$, and $k_{y_2}$ denote wave numbers related to x, $y_1$, and $y_2$ of the scattering field function, $a(k_x, k_{y_1}, k_{y_2}, k)$ denotes a function based on $k_x$, $k_{y_1}$, $k_{y_2}$, and k, $s_1(k_x, k_{y_1}, k_{y_2})$ denotes a function based on $k_x$, $k_{y_1}$, and $k_{y_2}$, and $s_2(k_x, k_{y_1}, k_{y_2})$ denotes a function based on $k_x$, $k_{y_1}$, and $k_{y_2}$.

This allows the imaging device to visualize, with high accuracy, the three-dimensional structure of each scatterer included in an object in a region according to the analytical solution of the equation satisfied by the scattering field function associated with the scattering phenomenon.

Moreover, for example, the imaging function is expressed by

[Math. 4]

$$\rho(x, y, z) = \lim_{t \to 0} \left[ \frac{1}{2\pi} \int_{-\infty}^{\infty} \phi(x, y, y, z, z, k) e^{-ickt} dk \right]$$

where (x, y, z) denotes a position of an imaging target.

This allows the imaging device to visualize, with high accuracy, the three-dimensional structure of each scatterer included in an object in a region according to the imaging function appropriately associated with the scattering field function.

Moreover, for example, the multiple scattering is expressed using four functions of a spectral space corresponding to four fundamental solutions of an equation of the scattering field function, a relation between the measurement data and the four functions is expressed by a non-linear integral equation, and the information processing circuit: derives the four functions from the measurement data according to the non-linear integral equation; and derives the imaging function corresponding to the scattering field function, using the four functions.

This allows the imaging device to visualize, with high accuracy, the three-dimensional structure of each scatterer included in an object in a region according to a relational expression that expresses multiple scattering.

Moreover, for example, the measurement data is expressed by

[Math. 5]

$$\Phi_{ij}_{\substack{i,j=1,2}}$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions, the information processing circuit uses

[Math. 6]

$$\Phi_{ij}_{\substack{i,j=1,2}} = a_{m_1}_{\substack{m_1=1,2,3,4}}$$

$$+ \frac{1}{(2\pi)^1} \int f_2 \left[ a_{m_1} a_{m_2} \right]_{\substack{m_1,m_2=1,2,3,4}} d\Bbbk_{f_2}$$

$$+ \frac{1}{(2\pi)^2} \int f_3 \left[ a_{m_1} a_{m_2} a_{m_3} \right]_{\substack{m_1,m_2,m_3=1,2,3,4}} d\Bbbk_{f_3}$$

$$+ \cdots$$

$$+ \frac{1}{(2\pi)^{L-1}} \int f_L \left[ a_{m_1} a_{m_2} a_{m_3} \cdots a_{m_L} \right]_{\substack{m_1,m_2,m_3,\cdots,m_L=1,2,3,4}} d\Bbbk_{f_L}$$

to derive

[Math. 7]

$$a_{m_1}_{\substack{m_1=1,2,3,4}}$$

from which an effect of multiple scattering has been removed, where $a_1$, $a_2$, $a_3$, and $a_4$ expressed by $a_{m1}$, $a_{m2}$, $a_{m3}$, ..., $a_{mL}$ correspond to $a(k_x, k_{y1}, k_{y2}, k)$ in the analytical solution related to the four scattering states, $f_2$, $f_3$, ..., $f_L$ denote products of 2, 3, ..., L variables in square brackets corresponding to 2, 3, ..., L scattering applied from transmission of the wave to reception of the wave, respectively,

[Math. 8]

$$\Bbbk_{f_2}, \Bbbk_{f_3}, \cdots, \Bbbk_{f_L}$$

denote wave number vectors related to coordinate variables included in 2, 3, ..., L variables in square brackets of $f_2$, $f_3$, ...,

$f_L$, and the information processing circuit uses, as the scattering field function,

[Math. 9]

$$\phi_{m_1}(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_{m_1}(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$m_1 = 1, 2, 3, 4$$

to derive, as the imaging function,

[Math. 10]

$$\rho(x, y, z) = \lim_{t \to 0} \left[ \frac{1}{2\pi} \int_{-\infty}^{\infty} \phi_{m_1}(x, y, y, z, z, k) e^{-ickt} dk \right]$$

This allows the imaging device to visualize, with high accuracy, the three-dimensional structure of each scatterer included in an object in a region according to the equation based on the multiple scattering theory.

Moreover, for example, the measurement data is expressed by

[Math. 11]

$$\Phi_{ij}$$

$$i, j = 1, 2$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions, the information processing circuit uses

[Math. 12]

$$a_m \Big|_{m=1,2,3,4} = \Phi_{ij} \Big|_{ij=1,2}$$

$$- \frac{1}{(2\pi)^1} \int g_2 \Big[ \Phi_{m_1 n_1} \Phi_{m_2 n_2} \Big]_{\substack{m_1,n_1=1,2 \\ m_2,n_2=1,2}} d\mathbb{k}_{g_2}$$

$$- \frac{1}{(2\pi)^2} \int g_3 \Big[ \Phi_{m_1 n_1} \Phi_{m_2 n_2} \Phi_{m_3 n_3} \Big]_{\substack{m_1,n_1=1,2 \\ m_2,n_2=1,2 \\ m_3,n_3=1,2}} d\mathbb{k}_{g_3}$$

$$- \cdots$$

$$- \frac{1}{(2\pi)^{L-1}} \int g_L \Big[ \Phi_{m_1 n_1} \Phi_{m_2 n_2} \Phi_{m_3 n_3} \cdots \Phi_{m_L n_L} \Big]_{\substack{m_1,n_1=1,2 \\ m_2,n_2=1,2 \\ m_3,n_3=1,2 \\ \cdots \\ m_L,n_L=1,2}} d\mathbb{k}_{g_L}$$

to derive

[Math. 13]

$$a_m \Big|_{m=1,2,3,4}$$

from which an effect of multiple scattering has been removed, where $a_1$, $a_2$, $a_3$, and $a_4$ expressed by $a_m$ correspond to $a(k_x, k_{y1}, k_{y2}, k)$ in the analytical solution related to the four scattering states, $\Phi_{11}$, $\Phi_{12}$, $\Phi_{21}$, and $\Phi_{22}$ expressed by $\Phi_{m1n1}$, $\Phi_{m2n2}$, $\Phi_{m3n3}$, ..., $\Phi_{mLnL}$ correspond to the measurement data related to the four scattering states, $g_2$, $g_3$, ..., $g_L$ denote products of 2, 3, ..., L variables in square brackets corresponding to 2, 3, ..., L scattering applied from transmission of the wave to reception of the wave, respectively,

[Math. 14]

$$\mathbb{k}_{g_2}, \mathbb{k}_{g_3}, \cdots, \mathbb{k}_{g_L}$$

denote wave number vectors related to coordinate variables included in 2, 3, ..., L variables in square brackets of $g_2$, $g_3$, ..., $g_L$, and the information processing circuit uses, as the scattering field function,

[Math. 15]

$$\phi_m(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_m(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$m = 1, 2, 3, 4$$

to derive, as the imaging function,

[Math. 16]

$$\rho(\mathrm{x, y, z}) = \underset{t \to 0}{Lim} \left[ \frac{1}{2\pi} \int_{-\infty}^{\infty} \phi_m(x, y, y, z, z, k) e^{-ickt} dk \right]$$

This allows the imaging device to visualize, with high accuracy, the three-dimensional structure of each scatterer included in an object in a region according to the equation in which the measurement data is properly associated based on the multiple scattering theory.

Moreover, for example, the measurement data is expressed by

[Math. 17]

$$\Phi_{ij}$$
$$i,j=1,2$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions, the information processing circuit uses

[Math. 18]

$$\Phi_{11}(k_x, k_{y_1}, k_{y_2}, k)$$

$$= a_1(k_x, k_{y_1}, k_{y_2}, k)$$

$$+ \frac{1}{(2\pi)} \iiint a_1(k_{x_a}, k_{y_1}, k_\eta, k) a_4(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$+ \frac{1}{(2\pi)^2} \iiint \iint a_1(k_{xa}, k_{y_1}, -k_{\eta_2}, k) a_2(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_1(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_1(k_{xa}, k_{y_1}, -k_{\eta_2}, k) a_4(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_3(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ O(a^4)$$

to derive $a_1$ from which an effect of multiple scattering has been removed, where $\delta$ denotes a delta function, $k_{xa}$, $k_{xb}$, and $k_{xc}$ are variables corresponding to $k_x$, $k_\eta$ and $k_{\eta 2}$ are variables corresponding to $k_{y1}$, $k_{\eta 3}$ is a variable corresponding to $k_{y2}$, and $O(a^4)$ is a term corresponding to a fourth or higher order scattering, and the information processing circuit uses, as the scattering field function,

[Math. 19]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

to derive, as the imaging function,

[Math. 20]

$$\rho(x, y, z) = \lim_{t \to 0} \left[ \frac{1}{2\pi} \int_{-\infty}^{\infty} \phi_1(x, y, y, z, z, k) e^{-ickt} dk \right]$$

This allows the imaging device to visualize, with high accuracy, the three-dimensional structure of each scatterer included in an object in a region according to the equation in which the scattering phenomenon is concretely expressed based on the multiple scattering theory.

Moreover, for example, the measurement data is expressed by

[Math. 21]

$$\Phi_{ij}$$
$$i, j = 1, 2$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions, the information processing circuit uses

[Math. 22]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k)\Phi_{21}(k_{x_b}, -k_\eta, k_{y_2}, k)\delta(k_{xa} + k_{xb} - k_x)$$

$$\cdot \delta\left(s_2(k_{xa}, k_{y_1}, k_\eta) - s_1(k_{xb}, -k_\eta, k_{y_2})\right)dk_{x_a}dk_{x_b}dk_\eta$$

$$- \frac{1}{(2\pi)^2} \iiint \iint \Phi_{11}(k_{xa}, k_{y_1}, -k_{\eta_2}, k)\Phi_{22}(k_{xb}, k_{\eta_2}, -k_{\eta_3}, k)\Phi_{11}(k_{xc}, k_{\eta_3}, k_{y_2}, k)$$

$$\cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right)dk_{xa}dk_{xb}dk_{xc}dk_{\eta_2}dk_{\eta_3}$$

$$- \frac{1}{(2\pi)^2} \iiint \iint \Phi_{12}(k_{xa}, k_{y_1}, -k_{\eta_2}, k)\Phi_{11}(k_{xb}, k_{\eta_2}, -k_{\eta_3}, k)\Phi_{21}(k_{xc}, k_{\eta_3}, k_{y_2}, k)$$

$$\cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right)dk_{xa}dk_{xb}dk_{xc}dk_{\eta_2}dk_{\eta_3}$$

$$- \frac{1}{(2\pi)^2} \iiint \iint \Phi_{11}(k_{xa}, k_{y_1}, -k_{\eta_2}, k)\Phi_{21}(k_{xb}, k_{\eta_2}, -k_{\eta_3}, k)\Phi_{21}(k_{xc}, k_{\eta_3}, k_{y_2}, k)$$

$$\cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right)dk_{xa}dk_{xb}dk_{xc}dk_{\eta_2}dk_{\eta_3}$$

$$- \frac{1}{(2\pi)^2} \iiint \iint \Phi_{12}(k_{xa}, k_{y_1}, -k_{\eta_2}, k)\Phi_{12}(k_{xb}, k_{\eta_2}, -k_{\eta_3}, k)\Phi_{11}(k_{xc}, k_{\eta_3}, k_{y_2}, k)$$

$$\cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right)dk_{xa}dk_{xb}dk_{xc}dk_{\eta_2}dk_{\eta_3}$$

to derive $a_1$ from which an effect of multiple scattering has been removed, where $\delta$ denotes a delta function, $k_{xa}$, $k_{xb}$, and $k_{xc}$ are variables corresponding to $k_x$, $k_\eta$ and $k_{\eta 2}$ are variables corresponding to $k_{y1}$, $k_{\eta 3}$ is a variable corresponding to $k_{y2}$, and the information processing circuit uses, as the scattering field function,

[Math. 23]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2})z_1} e^{i s_2(k_x, k_{y_1}, k_{y_2})z_2} dk_x dk_{y_1} dk_{y_2}$$

to derive, as the imaging function,

[Math. 24]

$$\rho(x, y, z) = \underset{t \to 0}{Lim} \left[ \frac{1}{2\pi} \int_{-\infty}^{\infty} \phi_1(x, y, y, z, z, k) e^{-ickt} dk \right]$$

This allows the imaging device to visualize, with high accuracy, the three-dimensional structure of each scatterer included in an object in a region according to the equation in which the scattering phenomenon is concretely expressed based on the multiple scattering theory and the measurement data is properly associated.

Moreover, for example, the measurement data is expressed by

[Math. 25]

$$\Phi_{ij}$$
$$i, j = 1, 2$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions, the information processing circuit uses

[Math. 26]

$$a_1\left(k_x, k_{y_1}, k_{y_2}, k\right)$$

$$= \Phi_{11}\left(k_x, k_{y_1}, k_{y_2}, k\right)$$

$$- \frac{1}{(2\pi)} \iiint \Phi_{11}\left(k_{x_a}, k_{y_1}, k_\eta, k\right) \Phi_{21}\left(k_{x_b}, -k_\eta, k_{y_2}, k\right) \delta(k_{xa} + k_{xb} - k_x)$$

$$\cdot \delta\left(s_2\left(k_{xa}, k_{y_1}, k_\eta\right) - s_1\left(k_{xb}, -k_\eta, k_{y_2}\right)\right) dk_{x_a} dk_{x_b} dk_\eta$$

$$- \frac{1}{(2\pi)^2} \iiint \iint \left\{ \Phi_{11}\left(k_{xa}, k_{y_1}, -k_{\eta_2}, k\right) \Phi_{22}\left(k_{xb}, k_{\eta_2}, -k_{\eta_3}, k\right) \Phi_{11}\left(k_{xc}, k_{\eta_3}, k_{y_2}, k\right) \right.$$

$$+ \Phi_{12}\left(k_{xa}, k_{y_1}, -k_{\eta_2}, k\right) \Phi_{11}\left(k_{xb}, k_{\eta_2}, -k_{\eta_3}, k\right) \Phi_{21}\left(k_{xc}, k_{\eta_3}, k_{y_2}, k\right)$$

$$+ \Phi_{11}\left(k_{xa}, k_{y_1}, -k_{\eta_2}, k\right) \Phi_{21}\left(k_{xb}, k_{\eta_2}, -k_{\eta_3}, k\right) \Phi_{21}\left(k_{xc}, k_{\eta_3}, k_{y_2}, k\right)$$

$$\left. + \Phi_{12}\left(k_{xa}, k_{y_1}, -k_{\eta_2}, k\right) \Phi_{12}\left(k_{xb}, k_{\eta_2}, -k_{\eta_3}, k\right) \Phi_{11}\left(k_{xc}, k_{\eta_3}, k_{y_2}, k\right) \right\}$$

$$\cdot \delta(k_{xa} + k_{xb} + k_{xc} - k_x) \delta\left(s_1\left(k_{xb}, k_{\eta_2}, -k_{\eta_3}\right) - s_2\left(k_{xa}, k_{y_1}, -k_{\eta_2}\right)\right)$$

$$\cdot \delta\left(s_2\left(k_{xb}, k_{\eta_2}, -k_{\eta_3}\right) - s_1\left(k_{xc}, k_{\eta_3}, k_{y_2}\right)\right) \quad dk_{xa} dk_{xb} dk_{xc} dk_{\eta_2} dk_{\eta_3}$$

to derive $a_1$ from which an effect of multiple scattering has been removed, where $\delta$ denotes a delta function, $k_{xa}$, $k_{xb}$, and $k_{xc}$ are variables corresponding to $k_x$, $k_\eta$ and $k_{\eta 2}$ are variables corresponding to $k_{y1}$, $k_{\eta 3}$ is a variable corresponding to $k_{y2}$, and the information processing circuit uses, as the scattering field function,

[Math. 27]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

to derive, as the imaging function,

[Math. 28]

$$\rho(\mathrm{x}, \mathrm{y}, \mathrm{z}) = \lim_{t \to 0} \left[ \frac{1}{2\pi} \int_{-\infty}^{\infty} \phi_1(x, y, y, z, z, k) e^{-ickt} dk \right]$$

This allows the imaging device to visualize, with high accuracy, the three-dimensional structure of each scatterer included in an object in a region according to the equation rearranged based on the multiple scattering theory.

Moreover, for example, an imaging method according to one aspect of the present disclosure includes: transmitting, by each of a plurality of transmitters disposed on both sides of the region, a wave to a region to be measured; receiving, by each of a plurality of receivers disposed on the both sides, the wave from the region; and deriving an imaging function corresponding to a scattering field function related to scattering of the wave according to a correspondence between (i) measurement data obtained by the plurality of transmitters and the plurality of receivers and a composition of a plurality of functions related to multiple first-order scattering forming multiple scattering, and visualizing a three-dimensional structure of a scatterer included in an object in the region, using the imaging function.

This allows the correspondence between the measurement data and the composition of a plurality of functions related to multiple first-order scattering to be applied to derive an imaging function for visualizing the three-dimensional structure of each scatterer included in an object in a region. Multiple scattering is assumed to be a combination of multiple first-order scattering. Accordingly, it is possible to analytically solve the inverse problem of scattering, including multiple scattering, according to this correspondence. As a result, it is possible to visualize, with high accuracy, the three-dimensional structure of each scatterer included in an object in a region, using waves.

Hereinafter, an embodiment will be described with reference to the drawings. It should be noted that the embodiment described below shows a general or specific example. The numerical values, shapes, materials, structural elements, the arrangement and connection of the structural elements, steps, the order of steps, etc., illustrated in the following embodiment are mere examples.

In the following description, in particular, the techniques and the like disclosed in PTL 2, PTL 3, PTL 4, and PTL 5 can be referred to as known techniques. Moreover, in the following description, radio waves such as microwaves are mainly assumed to be waves, but the waves are not limited to radio waves such as microwaves. In addition, imaging based on scattering can be referred to as scattering tomography. Accordingly, the imaging device and the imaging method in the following description can also be referred to as a scattering tomography device and a scattering tomography method, respectively.

[Embodiment]

An imaging device according to the present embodiment uses waves to visualize the three-dimensional structure of one or more scatterers included in an object in a region. Hereinafter, the imaging device according to the present embodiment will be described in detail including the underlying techniques and theories.

<I Outline>

Scattering field theory has been constructed to image the inside of an object using waves such as microwaves. The scattering field theory is not only theoretically novel, but also useful in practice. Since it is possible to instantly calculate an accurate three-dimensional reconstructed image from measured (measurement) data, it is expected to be applied to the field of diagnostic imaging, and the like. In the present disclosure, the scattering field theory is advanced to solve the difficult inverse scattering problem of multiple scattering (multiple reflections), and an imaging device and an imaging method using the advanced scattering field theory are provided.

For example, in the inverse scattering reconstruction theory where the measurement surface on which a transmission position and a reception position are arranged is a curved surface, function φ as shown in (1-1) below is defined.

[Math.29]

$$\phi(x, y_1, y_2, z_1, z_2, k) = \iint_D \frac{e^{ik\rho_1}}{\rho_1} \frac{e^{ik\rho_2}}{\rho_2} \varepsilon(\xi, \eta, \zeta) d\xi d\eta d\zeta$$

$$\cdots (1-1)$$

Here, $(x, y_1, z_1)$ denotes the coordinates of the wave radiation position, and $(x, y_2, z_2)$ denotes the coordinates of the wave reception position. Radiation may also be referred to as transmission. Moreover, k denotes the wave number of wave, and D denotes the region to be measured. $\varepsilon(\xi, \eta, \zeta)$ denotes the function of the dielectric constant at the position $(\xi, \eta, \zeta)$, and corresponds to the wave reflectance at the position $(\xi, \eta, \zeta)$. $(\xi, \eta, \zeta)$ corresponds to the reflection position of the wave. $\rho_1$ denotes the distance from the transmission position to the reflection position, and $\rho_2$ denotes the distance from the reflection position to the reception position. Note that $\varepsilon(\xi, \eta, \zeta)$ is unknown.

The phenomenon, in which waves are scattered at the point where the value of the dielectric constant function $\varepsilon$ $(\xi, \eta, \zeta)$ is large, is considered as a function with respect to the wave radiation position and the wave reception position. By defining the radiation position and the reception position throughout the region, the above φ is used as a scattering field function that indicates the scattering field. The scattering field function satisfies the partial differential equation as shown in (1-2) below.

[Math. 30]

$$\left[ \frac{1}{4}\Delta_5^2 - \frac{1}{c^2}\partial_t^2\partial_x^2 - (\partial_{y_1}^2 + \partial_{z_1}^2)(\partial_{y_2}^2 + \partial_{z_2}^2) \right]\phi = 0$$

$$\cdots (1-2)$$

Here, $\Delta_5$ denotes the five-dimensional Laplace operator related to x, $y_1$, $y_2$, $z_1$ and $z_2$, $\partial$ denotes the partial differential of the variable indicated by the suffix, c denotes the wave propagation velocity, and t denotes time. The general solution of the differential equation in (1-2) is expressed as shown in (1-3) below.

[Math.31]

$$\phi(x, y_1, y_2, z_1, z_2, k)$$

$$= \frac{1}{(2\pi)^3}\int_{-\infty}^{\infty}\int_{-\infty}^{\infty}\int_{-\infty}^{\infty} e^{-i(k_x x + k_{y_1} y_1 + k_{y_2} y_2)} a(k_x, k_{y_1}, k_{y_2}, k) e^{is_1(k_x, k_{y_1}, k_{y_2})z_1} e^{is_2(k_x, k_{y_1}, k_{y_2})z_2} dk_x dk_{y_1} dk_{y_2}$$

$$\cdots (1-3)$$

Here, $k_x$, $k_{y1}$, and $k_{y2}$ denote wave numbers related to x, $y_1$, and $y_2$ of the scattering field function. Since the solution of a single fourth-order partial differential equation is completely determined by the measurement value (radar reflection data) at the region boundary, $a(k_x, k_{y1}, k_{y2}, k)$ that is the kernel function of the general solution is also found by Fourier transform. Then, by applying the limit values of $y_2 \rightarrow y_1$ and $t \rightarrow 0$ to φ, an imaging function ρ is obtained. For example, the imaging function ρ is expressed as shown in (1-4) below.

[Math. 32]

$$\rho(x, y, z) = \lim_{t \to 0}\left[ \frac{1}{2\pi}\int_{-\infty}^{\infty} \phi(x, y, y, z, z, k)e^{-ickt}dk \right]$$

$$\cdots (1-4)$$

In the above process, the scattering field function $\varphi(x, y_1, y_2, z_1, z_2, k)$ is directly connected to the measurement value (radar reflection data) at the boundary of the region based on the assumption that there is no multiple scattering. For example, the shape of the boundary surface is defined by the curve $z=f(y)$ on the z-y plane. The data obtained by Fourier transforming the radar reflection data measured at the boundary surface with respect to (x, t) is expressed by $\Phi(k_x, y_I, y_J, k)$. Under the assumption that there is no multiple scattering, (1-5) shown below is assumed to hold true.
[Math.33]

$$\Phi(k_x, y_I, y_J, k)$$
$$= \frac{1}{(2\pi)^2} \int_{-\infty}^{\infty} \int_{-\infty}^{\infty} e^{-i(k_{y_1} y_I + k_{y_2} y_J)} a_{I,J}(k_x, k_{y_1}, k_{y_2}, k)$$
$$\cdot e^{is_1(k, k_x, k_{y_1}, k_{y_2})z_I} e^{is_2(k, k_x, k_{y_1}, k_{y_2})z_J} dk_{y_1} dk_{y_2}$$

$$\cdots (1-5)$$

However, when multiple scattering is not allowed to be ignored, second-order, third-order, and fourth-order scattering may be present, as illustrated in FIG. 1.

FIG. 1 is a conceptual diagram illustrating an example of multiple scattering (multiple reflections) orders according to the embodiment. In FIG. 1, $P_1$ denotes the transmission position and $P_2$ denotes the reception position. A signal is transmitted from $P_1$ and received at $P_2$ through a number of reflections corresponding to the order in the region. A plurality of reflections are referred to as multiple reflections or multiple scattering.

The present disclosure describes a solving method for solving the inverse problem of scattering including multiple scattering as described above, and an imaging device and an imaging method using the solving method.

In order to perform the inverse analysis of multiple scattering, radar reflection data across the boundaries of the region is used. Multiple scattering of second or higher order is expressed by a combination (composition) of four types of fundamental solutions, $E_1$, $E_2$, $E_3$, and $E_4$ of the partial differential equation of the scattering field.

FIG. 2 illustrates four types of scattering states corresponding to four types of fundamental solutions of a scattering field equation. The scattering state can also be referred to as a scattering model. Multiple scattering is expressed by the composition of these four fundamental solutions ($E_1, E_2, E_3, E_4$). The functions of the spectral space that are $a_1, a_2, a_3$, and $a_4$ are introduced corresponding to $E_1, E_2, E_3$ and $E_4$. In order to determine these from the measurement data, two back scattering and one forward scattering are measured.

Inverse scattering analysis of multiple scattering in the three-dimensional region is a difficult problem. However, the present disclosure provides the solution of the inverse scattering problem using scattering field theory.

<II Scattering field theory>

<II-1 Simple propagation function>

The Helmholtz equation of wave propagation is expressed by (2-1) below.
[Math.34]

$$(\Delta_3 + k^2)\phi(x - \xi, y - \eta, z - \varsigma, k) = 0$$

$$\cdots (2-1)$$

Here, $\varphi$ is an unknown function that denotes the vibration displacement at the position (x, y, z), $\Delta_3$ denotes the three-dimensional Laplacian operator, k denotes the wave number, and $(\xi, \eta, \zeta)$ denotes the position of the wave source.

The equation obtained by Fourier transforming $\varphi$ with respect to (x, y, t) is expressed as shown in (2-2) below.
[Math.35]

$$\tilde{\phi}(k_x,k_y,z-\varsigma,k) = \int_{-\infty}^{\infty} e^{ickt}dt \int_{-\infty}^{\infty} e^{ik_y(y-\eta)}dy \int_{-\infty}^{\infty} e^{ik_x(x-\xi)}\phi(x-\xi,y-\eta,z-\varsigma,t)dx$$

$$\cdots(2-2)$$

Here, $k_x$ denotes the wave number related to x, and $K_y$ denotes the wave number related to y. Equation (2-1) is transformed into, for example, as shown in (2-3) and (2-4) below.
[Math.36]

$$\{\partial_z^2 + (k^2 - k_x^2 - k_y^2)\}\tilde{\phi}(k_x,k_y,z,k) = 0$$

$$\cdots(2-3)$$

[Math. 37]

$$\phi(x-\xi,y-\eta,z-\varsigma,k)$$
$$= \frac{1}{(2\pi)^2}\iint e^{-ik_y(y-\eta)}e^{-ik_x(x-\xi)}a(k_x,k_y,k)e^{\pm i(z-\varsigma)\sqrt{k^2-k_x^2-k_y^2}}dk_x dk_y$$

$$\cdots(2-4)$$

Here, $\partial_z^2$ denotes a second partial differential with respect to z, and $a(k_x, k_y, k)$ is a function related to $(k_x, k_y, k)$.

<II-2 Fundamental solution of scattering field>

FIG. 3 is a conceptual diagram relating to the definition of the Green's function. Hereinafter, unless otherwise specified, the transmission position and the reception position have the same x-coordinate. When the transmission position and the reception position are $r_1 = (x, y_1, z_1)$ and $r_2 = (x, y_2, z_2)$ respectively, the Green's function is defined as shown in (2-5) below.
[Math. 38]

$$G(\mathbf{r}_1,\mathbf{r}_2,\omega) = \iiint_D \varphi(\mathbf{r}_1 \to \xi \to \mathbf{r}_2,\omega)d\xi$$

$$\cdots(2-5)$$

This integral kernel function denotes the signal strength of the wave that exits $r_1$, is reflected at point $\xi$, and returns to point $r_2$. $\omega$ is the angular frequency. This Green's function is materialized using a new function name as shown in (2-6) below. Here, $\varepsilon$ is a function of dielectric constant.
[Math. 39]

$$\phi(x,y_1,y_2,z_1,z_2) = \iint_D \frac{e^{ik\rho_1}}{\rho_1}\frac{e^{ik\rho_2}}{\rho_2}\varepsilon(\xi,\eta,\zeta)d\xi d\eta d\zeta$$
$$\rho_1 = \sqrt{(x-\xi)^2 + (y_1-\eta)^2 + (z_1-\zeta)^2}$$
$$\rho_2 = \sqrt{(x-\xi)^2 + (y_2-\eta)^2 + (z_2-\zeta)^2}$$

$$\cdots(2-6)$$

The above $\varphi(x, y_1, y_2, z_1, z_2)$ is the solution of the partial differential equation of the scattering field as shown in (2-7) below.
[Math. 40]

$$\left[\frac{1}{4}\Delta_5{}^2 - (ik)^2\partial_x{}^2 - (\partial_{y_1}{}^2 + \partial_{z_1}{}^2)(\partial_{y_2}{}^2 + \partial_{z_2}{}^2)\right]\phi = 0$$

$$\cdots(2-7)$$

Next, the solution of Equation (2-7) is considered. First, by performing multiple Fourier transforms on φ with respect to t, x, $y_1$, and $y_2$ and performing conversion on Equation (2-7), (2-8) below is obtained. Here $D_{z1}$ and $D_{z2}$ denote partial derivatives related to $z_1$ and $z_2$, respectively.
[Math. 41]

$$\{(D_{z_1}{}^2 + D_{z_2}{}^2 - k_x{}^2 - k_{y_1}{}^2 - k_{y_2}{}^2)^2 - 4k^2k_x{}^2 - 4(D_{z_1}{}^2 - k_{y_1}{}^2)(D_{z_2}{}^2 - k_{y_2}{}^2)\}\tilde{\phi} = 0$$

$$\cdots(2-8)$$

Equation (2-8) has four solutions, which are expressed as shown (2-9) below.
[Math. 42]

$$E_1(k_x, k_{y_1}, k_{y_2}, z_1, z_2) = \exp\{i(s_1 + s_2)z\}$$
$$E_2(k_x, k_{y_1}, k_{y_2}, z_1, z_2) = \exp\{-i(s_1 + s_2)z\}$$
$$E_3(k_x, k_{y_1}, k_{y_2}, z_1, z_2) = \exp\{i(s_1 - s_2)z\}$$
$$E_4(k_x, k_{y_1}, k_{y_2}, z_1, z_2) = \exp\{i(-s_1 + s_2)z\}$$
$$\cdots(2-9)$$

Here, $s_1$ and $s_2$ are expressed as shown in (2-10) below.
[Math. 43]

$$s_1(k_x, k_{y_1}, k_{y_2}) = \frac{\sqrt{k^2 - k_{y_1}{}^2}\sqrt{\left(\sqrt{k^2 - k_{y_1}{}^2} + \sqrt{k^2 - k_{y_2}{}^2}\right)^2 - k_x{}^2}}{\sqrt{k^2 - k_{y_1}{}^2} + \sqrt{k^2 - k_{y_2}{}^2}}$$

$$s_2(k_x, k_{y_1}, k_{y_2}) = \frac{\sqrt{k^2 - k_{y_2}{}^2}\sqrt{\left(\sqrt{k^2 - k_{y_1}{}^2} + \sqrt{k^2 - k_{y_2}{}^2}\right)^2 - k_x{}^2}}{\sqrt{k^2 - k_{y_1}{}^2} + \sqrt{k^2 - k_{y_2}{}^2}}$$

$$\cdots(2-10)$$

The scattering corresponding to each of the four fundamental solutions of Equation (2-9) is as illustrated in FIG. 2. Of these four fundamental solutions, $E_3$ and $E_4$ have a temporally retrograde relationship with each other, and are not independent from each other. Accordingly, $E_1$, $E_2$, and $E_3$ are independent fundamental solutions. The four general solutions of Equation (2-7) corresponding to the four fundamental solutions are expressed as shown in (2-11) below.
[Math.44]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2})$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$\phi_2(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_2(k_x, k_{y_1}, k_{y_2})$$

$$\cdot e^{-i s_1(k_x, k_{y_1}, k_{y_2}) z_1} e^{-i s_2(k_x, k_{y_1}, k_{y_2}) z_2} dk_x dk_{y_1} dk_{y_2}$$

$$\phi_3(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_3(k_x, k_{y_1}, k_{y_2})$$

$$\cdot e^{i s_1(k_x, k_{y_1}, k_{y_2}) z_1} e^{-i s_2(k_x, k_{y_1}, k_{y_2}) z_2} dk_x dk_{y_1} dk_{y_2}$$

$$\phi_4(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_4(k_x, k_{y_1}, k_{y_2})$$

$$\cdot e^{-i s_1(k_x, k_{y_1}, k_{y_2}) z_1} e^{i s_2(k_x, k_{y_1}, k_{y_2}) z_2} dk_x dk_{y_1} dk_{y_2}$$

$$\cdots (2-1 1)$$

The four general solutions of Equation (2-11) shown above can be regarded as four scattering field functions corresponding to the four first-order scattering models illustrated in FIG. 2. The scattering field function corresponding to multiple scattering is derived based on the composition of the four scattering field functions.

<III Multiple scattering>

<III-1 Multiple scattering orders>

The multiple scattering orders are as illustrated in FIG. 1. The multiple scattering of each order illustrated in FIG. 1 also includes different geometrical variations at the positions where the scattering occurs. The characteristics differ depending on the positive and negative signs of the z-coordinate component of each directional vector of incidence and scattering at the position where scattering occurs. The fact that the characteristics differ depending on the positive and negative signs of the z-coordinate component of each directional vector of incidence and scattering has been described in the fundamental solution of the scattering field in Chapter II.

<III-2 Outline of approach using scattering field theory of multiple scattering>

FIG. 4 is a conceptual diagram illustrating an application example of the fundamental solutions of the scattering field. Specifically, FIG. 4 illustrates a third-order scattering model to which a plurality of fundamental solutions are applied. For example, in the third-order scattering model illustrated in FIG. 4, the fundamental solutions $E_1$ and $E_2$ of the scattering field are used in the regions inside the dashed lines. The following (3-1) indicates the relations between the paths and the fundamental solutions.
[Math.45]

$$P_1 \rightarrow S_1 \rightarrow S_{2-} \quad : E_1$$

$$S_{2-} \rightarrow S_2 \rightarrow S_{3-} \quad : E_2$$

$$S_{3-} \rightarrow S_3 \rightarrow P_2 \quad : E_1$$

$$\cdot \cdot \cdot (3-1)$$

Scattered points $S_1$, $S_2$, $S_3$ are arbitrary points in the regions, but the condition that the geometric rules are followed is imposed on scattered points $S_1$, $S_2$, $S_3$, and the like. Specifically, the sign of the z-coordinate component of the directional vector indicated by the arrow representing wave propagation in FIG. 4 is maintained. Moreover, $P_1$, $P_2$, $S_2$, and $S_3$ move within the measurement plane under the condition that their x coordinates are identical to each other. In addition, the z coordinates of $P_1$ and $P_2$ are identical to each other. However, it is assumed that there are no restrictions on the x-coordinate of $S_1$.

FIG. 5 illustrates wave propagation paths. Specifically, FIG. 5 illustrates a plurality of propagation paths for common transmission position $P_1$ and common reception point $P_2$ when the fundamental solutions $E_1$ and $E_2$ are used. These propagation paths conform to the above geometric rules.

The back scattering amplitude measured on the y-axis is expressed as shown in (3-2) below.
[Math. 46]

$$\Phi_1(\mathbf{P}_1, \mathbf{P}_2, k) = G_1(\mathbf{P}_1, \mathbf{P}_2, k)$$

$$+ \iiint G_1(\mathbf{P}_1, \mathbf{S}_{2-}, k) \cdot G_2(\mathbf{S}_{2-}, \mathbf{S}_{3-}, k) \cdot G_1(\mathbf{S}_{3-}, \mathbf{P}_2, k) d\mathbf{S}_2 d\mathbf{S}_3$$

$$+ \cdots$$

$$\cdot \cdot \cdot (3-2)$$

Here, G (specifically, $G_1$ and $G_2$) is a Green's function, and is defined as shown in (3-3) below.
[Math. 47]

$$G(\mathbf{r}_1, \mathbf{r}_2, \omega) = \iiint_D \varphi(\mathbf{r}_1 \rightarrow \xi \rightarrow \mathbf{r}_2, \omega) d\xi$$

$$\cdot \cdot \cdot (3-3)$$

Here,

$$[\text{Math. 48}]$$

$$\varphi(\mathbf{r}_1 \rightarrow \xi \rightarrow \mathbf{r}_2, \omega)$$

denotes the signal strength of the wave that exits $r_1$, is reflected at point $\xi$, and returns to point $r_2$. Suffixes 1 and 2 given to the Green's function correspond to the fundamental solutions $E_1$ and $E_2$. In a theory that does not consider multiple scattering, the equation in (3-4) below can be obtained ignoring the second and subsequent terms from the right side of Equation (3-2).
[Math. 49]

$$G_1(\mathbf{P}_1, \mathbf{P}_2, k) = \Phi_1(\mathbf{P}_1, \mathbf{P}_2, k)$$

$$\cdot \cdot \cdot (3-4)$$

$a_1(k_x, ky_1, k_{y2}, k)$ in Equation (2-11) is obtained from Equation (3-4) by Fourier transform. By substituting the approximate function thus obtained into the integral sign on the right side of Equation (3-3), $G_1(P_1, P_2, k)$ that takes into account multiple scattering is obtained, and more accurate $a_1(k_x, k_{y1}, k_{y2}, k)$ is obtained.

The right side of Equation (3-2) includes a new function $G_2(S_{2^-}, S_{3^-}, k)$. In order to obtain this by measurement, the measurement result on a surface with a different z value than the one described above is used. When $\Phi_2(P_1, P_2, k)$ denotes the measurement result on a surface with a different z value, (3-5) below holds true.

[Math. 50]

$$G_2(\mathbf{P}_1, \mathbf{P}_2, k) = \Phi_2(\mathbf{P}_1, \mathbf{P}_2, k)$$

$$\cdots (3-5)$$

With this, more accurate $a_1(k_x, k_{y1}, k_{y2}, k)$ is obtained from Equation (3-2).

<III-3 Formulation of inverse scattering problem in multiple scattering>

(1) Second-order scattering

FIG. 6 is a conceptual diagram illustrating an application example of the fundamental solutions of a scattering field related to the second-order scattering. The second-order scattering corresponds to, as illustrated in FIG. 6, the form in which the fundamental solutions $E_1$ and $E_4$ of the scattering field equation are connected by $S_{2^-}$. $S_{2^-}$ is assumed to be as close as possible to $S_2$. The fundamental solutions $E_3$ and $E_4$ satisfy the condition that no direct wave propagating directly from $S_{2^-}$ to $P_2$ is included.

The paths of the second-order scattering are limited to the path illustrated in FIG. 6 and the path in which $P_1$ and $P_2$ in FIG. 6 are interchanged (symmetrically transformed path). The fundamental solutions $E_1$ and $E_4$ are applied as in FIG. 6, and the function names are given as (3-6) below.

[Math. 51]

$$P_1 \rightarrow S_1 \rightarrow S_{2^-} \quad : \phi_{P_1 S_1 S_{2^-}}(x, y_1, \eta_{2^-}, z, \varsigma_{2^-}, k)$$

$$S_{2^-} \rightarrow S_2 \rightarrow P_2 \quad : \phi_{S_{2^-} S_2 P_2}(x, \eta_{2^-}, y_2, \varsigma_{2^-}, z, k)$$

$$\cdots (3-6)$$

Here $(x, y_1, z)$ corresponds to the position of $P_1$, $(x, y_2, z)$ corresponds to the position of $P_2$, and $(x, \eta_{2^-}, \varsigma_{2^-})$ corresponds to the position of $S_{2^-}$. The specific equation of (3-6) is expressed as shown in (3-7) below according to Equation (2-11).

[Math. 52]

$$\phi_{P_1 S_1 S_{2^-}}(x, y_1, \eta_{2^-}, z, \varsigma_{2^-}, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{\eta_{2^-}} \eta_{2^-})} a_1(k_x, k_{y_1}, k_{\eta_{2^-}}, k)$$

$$\cdot e^{is_1(k_x, k_{y_1}, k_{\eta_{2^-}})z} e^{is_2(k_x, k_{y_1}, k_{\eta_{2^-}})\varsigma_{2^-}} dk_x dk_{y_1} dk_{\eta_{2^-}}$$

$$\phi_{S_{2^-} S_2 P_2}(x, \eta_{2^-}, y_2, \varsigma_{2^-}, z, k)$$

$$= \frac{1}{(2\pi)^3} \int_{-\infty}^{\infty} \int_{-\infty}^{\infty} \int_{-\infty}^{\infty} e^{-i(k_x x + k_{\eta_{2^-}} \eta_{2^-} + k_{y_2} y_2)} a_4(k_x, k_{\eta_{2^-}}, k_{y_2}, k)$$

$$\cdot e^{-is_1(k_x, k_{\eta_{2^-}}, k_{y_2})\varsigma_{2^-}} e^{is_2(k_x, k_{\eta_{2^-}}, k_{y_2})z} dk_x dk_{\eta_{2^-}} dk_{y_2}$$

$$\cdots (3-7)$$

The composition of the above functions corresponding to the second-order multiple scattering path $P_1 \rightarrow S_1 \rightarrow$

$S_{2-}$ -> $S_2$ -> $P_2$ is expressed as shown in (3-8) below.
[Math. 53]

$$\Phi_2(x, y_1, y_2, z, k) = \phi_{P_1 S_1 S_{2-}}(x, y_1, \eta_{2-}, z, \varsigma_{2-}, k)\phi_{S_{2-} S_2 P_2}(x, \eta_{2-}, y_2, \varsigma_{2-}, z, k)$$

$$\cdots (3-8)$$

By applying $\eta_2 \to \eta$ and $\zeta_2 \to \zeta$ to Equation (3-8) and performing integration with respect to the coordinates $(\eta, \zeta)$ of point $S_2$, (3-9) below is obtained.
[Math. 54]

$$\Psi_2(x, y_1, y_2, z, k) = \iint \phi_{P_1 S_1 S_{2-}}(x, y_1, \eta, z, \varsigma, k)\phi_{S_{2-} S_2 P_2}(x, \eta, y_2, \varsigma, z, k)d\eta d\varsigma$$

$$\cdots (3-9)$$

By substituting Equation (3-7) into Equation (3-9), (3-10) below is obtained. In order to avoid confusion, suffixes such as a, b, + and - are appropriately given to variables in (3-10) below.
[Math. 55]

$$\Psi_2(x, y_1, y_2, z, k)$$

$$= \frac{1}{(2\pi)^6} \iiint \iiint \iint e^{-i(k_{xa}x + k_{y_1}y_1 + k_{\eta_-}\eta)} a_1(k_{xa}, k_{y_1}, k_{\eta_-}, k)$$

$$\cdot e^{is_1(k_{xa}, k_{y_1}, k_{\eta_-})z} e^{is_2(k_{xa}, k_{y_1}, k_{\eta_-})\varsigma} dk_{xa} dk_{y_1} dk_{\eta_-}$$

$$\cdot e^{-i(k_{xb}x + k_{\eta_+}\eta + k_{y_2}y_2)} a_4(k_{xb}, k_{\eta_+}, k_{y_2}, k)$$

$$\cdot e^{-is_1(k_{xb}, k_{\eta_+}, k_{y_2})\varsigma} e^{is_2(k_{xb}, k_{\eta_+}, k_{y_2})z} dk_{xb} dk_{\eta_+} dk_{y_2} d\eta d\varsigma$$

$$= \frac{1}{(2\pi)^4} \iiint \iiint e^{-i(k_{xa}x + k_{y_1}y_1)} e^{-i(k_{xb}x + k_{y_2}y_2)}$$

$$\cdot \delta(k_{\eta_-} + k_{\eta_+})\delta\left(s_2(k_{xa}, k_{y_1}, k_{\eta_-}) - s_1(k_{xb}, k_{\eta_+}, k_{y_2})\right)$$

$$\cdot a_1(k_{xa}, k_{y_1}, k_{\eta_-}, k)a_4(k_{xb}, k_{\eta_+}, k_{y_2}, k)$$

$$\cdot e^{is_1(k_{xa}, k_{y_1}, k_{\eta_-})z} e^{is_2(k_{xb}, k_{\eta+}, k_{y_2})z} dk_{xa} dk_{xb} dk_{y_1} dk_{y_2} dk_{\eta_-} dk_{\eta_+}$$

$$\cdots (3-10)$$

Here, $\delta$ denotes a delta function. $\delta(k_{\eta-} + k_{\eta+})$ and $\delta(s2(k_{xa}, k_{y1}, k_{\eta-}) - s1(k_{xb}, k_{\eta+}, k_{y2}))$ in Equation (3-10) have the same input and output at the connection point $S_{2-}$. (3-11) below is obtained by Fourier transforming Equation (3-10) with respect to $(x, y_1, y_2)$ at z=0.
[Math. 56]

$$\tilde{\Psi}_2(k_x, k'_{y_1}, k'_{y_2}, 0, k)$$

$$= \iiint \Psi_2(x, y_1, y_2, z = 0, k) e^{ik_x x} e^{ik'_{y_1} y_1} e^{ik'_{y_2} y_2} dx dy_1 dy_2$$

$$= \frac{1}{(2\pi)} \iiint a_1(k_{x_a}, k'_{y_1}, k_\eta, k) a_4(k_{x_b}, -k_\eta, k'_{y_2}, k)$$

$$\cdot \delta(k_{xa} + k_{xb} - k_x) \delta\left(s_2(k_{xa}, k_{y_1}, k_\eta) - s_1(k_{xb}, -k_\eta, k_{y_2})\right)$$

$$\cdot dk_{x_a} dk_{x_b} dk_\eta$$

$$\cdots (3-11)$$

(2) Third-order scattering

FIG. 4 illustrates an application example of the fundamental solutions of the scattering field related to the third-order scattering. Referring to FIG. 4, the scattering field functions as shown in (3-12) below are defined. The suffixes 2- and 3- given to $\eta$ and $\zeta$ correspond to just before point $S_2$ and just before point $S_3$, respectively.
[Math. 57]

$$P_1 \rightarrow S_1 \rightarrow S_{2-} \quad : \phi_{P_1 S_1 S_{2-}}(x, y_1, \eta_{2-}, z, \varsigma_{2-}, k)$$

$$S_{2-} \rightarrow S_2 \rightarrow S_{3-} \quad : \phi_{S_{2-1} S_2 S_{3-}}(x, \eta_{2-}, \eta_{3-}, \varsigma_{2-}, \varsigma_{3-}, k)$$

$$S_{3-} \rightarrow S_3 \rightarrow P_2 \quad : \phi_{S_{3-} S_3 P_2}(x, \eta_{3-}, y_2, \varsigma_{3-}, z, k)$$

$$\cdots (3-12)$$

The functions on the right side in (3-12) correspond to the general solutions of the scattering field of first-order scattering, and are functions as shown in (3-13) below.
[Math. 58]

$$\phi_{P_1 S_1 S_{2-}}(x, y_1, \eta_{2-}, z, \varsigma_{2-}, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{\eta_{2-}} \eta_{2-})} a_1(k_x, k_{y_1}, k_{\eta_{2-}}, k)$$

$$\cdot e^{is_1(k_x, k_{y_1}, k_{\eta 2-})z} e^{is_2(k_x, k_{y_1}, k_{\eta_{2-}})\varsigma_2} dk_x dk_{y_1} dk_{\eta_{2-}}$$

$$\phi_{S_{2-} S_2 S_{3-}}(x, \eta_{2-}, \eta_{3-}, \varsigma_{2-}, \varsigma_{3-}, k)$$

$$= \frac{1}{(2\pi)^3} \int_{-\infty}^{\infty} \int_{-\infty}^{\infty} \int_{-\infty}^{\infty} e^{-i(k_x x + k_{\eta_{2-}} \eta_{2-} + k_{\eta_{3-}} \eta_{3-})} a_2(k_x, k_{\eta_{2-}}, k_{\eta_{3-}}, k)$$

$$\cdot e^{-is_1(k_x, k_{\eta_{2-}}, k_{\eta_{3-}})\varsigma_{2-}} e^{-is_2(k_x, k_{\eta_1}, k_{\eta_2})\varsigma_{3-}} dk_x dk_{\eta_{2-}} dk_{\eta_{3-}}$$

$$\phi_{S_{3-} S_3 P_2}(x, \eta_{3-}, y_2, \varsigma_{3-}, z, k)$$

$$= \frac{1}{(2\pi)^3} \int_{-\infty}^{\infty} \int_{-\infty}^{\infty} \int_{-\infty}^{\infty} e^{-i(k_x x + k_{\eta_{3-}} \eta_{3-} + k_{y_2} y_2)} a_1(k_x, k_{\eta_{3-}}, k_{y_2}, k)$$

$$\cdot e^{is_1(k_x, k_{\eta_{3-}}, k_{y_2})\varsigma_{3-}} e^{is_2(k_x, k_{\eta_{3-}}, k_{y_2})z} dk_x dk_{\eta_{3-}} dk_{y_2}$$

$$\cdots (3-13)$$

The composition of the above equations corresponds to the third-order multiple scattering path $P_1 \to S_1 \to S_2 \to S_3 \to P_2$, which is expressed as shown in (3-14) below.
[Math. 59]

$$\Phi_3(x, y_1, y_2, z, k)$$

$$= \phi_{P_1 S_1 S_{2-}}(x, y_1, \eta_{2-}, z, \varsigma_{2-}, k) \phi_{S_{2-} S_2 S_{3-}}(x, \eta_{2-}, \eta_{3-}, \varsigma_{2-}, \varsigma_{3-}, k)$$

$$\cdot \phi_{S_{3-} S_3 P_2}(x, \eta_{3-}, y_2, \varsigma_{3-}, z, k)$$

$$\cdots (3-14)$$

By applying $\eta_2 \to \eta_2$, $\eta_3 \to \eta_3$, $\varsigma_2 \to \varsigma_2$ and $\varsigma_3 \to \varsigma_3$ to Equation (3-14) and performing integration with respect to the coordinates $(\eta_2, \varsigma_2)$ and $(\eta_3, \varsigma_3)$ at points $S_2$ and $S_3$, (3-15) below is obtained.
[Math. 60]

$$\Psi_3(x, y_1, y_2, z, k)$$

$$= \iint \iint \phi_{P_1 S_1 S_{2-}}(x, y_1, \eta_2, z, \varsigma_2, k) \phi_{S_{2-} S_2 S_{3-}}(x, \eta_2, \eta_3, \varsigma_2, \varsigma_3, k)$$

$$\cdot \phi_{S_{3-} S_3 P_2}(x, \eta_{3-}, y_2, \varsigma_{3-}, z, k) d\eta_2 d\varsigma_2 d\eta_3 d\varsigma_3$$

$$\cdots (3-15)$$

The function obtained by the above process denotes the third-order scattering amplitude as seen from $P_1$ and $P_2$. By substituting (3-13) into (3-15), (3-16) below is obtained. In (3-16) below, + and - are appropriately given to the suffix of wave number k to avoid confusion in the integral sign.
[Math. 61]

$$\Psi_3(x,y_1,y_2,z,k)$$

$$= \frac{1}{(2\pi)^9} \iiint \iiint \iiint \iint \iint e^{-i(k_{xa}x+k_{y_1}y_1+k_{\eta_{2-}}\eta_2)} a_1(k_{xa},k_{y_1},k_{\eta_{2-}},k)$$

$$\cdot e^{is_1(k_{xa},k_{y_1},k_{\eta_{2-}})z} e^{is_2(k_{xa},k_{y_1},k_{\eta_{2-}})\varsigma_2} dk_{xa} dk_{y_1} dk_{\eta_{2-}}$$

$$\cdot e^{-i(k_{xb}x+k_{\eta_{2+}}\eta_2+k_{\eta_{3-}}\eta_3)} a_2(k_{xb},k_{\eta_{2+}},k_{\eta_{3-}},k)$$

$$\cdot e^{-is_1(k_{xb},k_{\eta_{2+}},k_{\eta_{3-}})\varsigma_2} e^{-is_2(k_{xb},k_{\eta_{2+}},k_{\eta_{3-}})\varsigma_3} dk_{xb} dk_{\eta_{2+}} dk_{\eta_{3-}}$$

$$\cdot e^{-i(k_{xc}x+k_{\eta_{3+}}\eta_3+k_{y_2}y_2)} a_1(k_{xc},k_{\eta_{3+}},k_{y_2},k)$$

$$\cdot e^{is_1(k_{xc},k_{\eta_{3+}},k_{y_2})\varsigma_3} e^{is_2(k_{xc},k_{\eta_{3+}},k_{y_2})z} dk_{xc} dk_{\eta_{3+}} dk_{y_2} d\eta_2 d\varsigma_2 d\eta_3 d\varsigma_3$$

$$\cdots (3-16)$$

In the scattering field theory, there is a relational expression as shown in (3-17) below.
[Math. 62]

$$s_1(k_{xb},k_{\eta_{1b}},k_{\eta_{2b}}) + s_2(k_{xb},k_{\eta_{1b}},k_{\eta_{2b}}) = \sqrt{\left(\sqrt{k^2-k_{\eta_{1b}}^2}+\sqrt{k^2-k_{\eta_{2b}}^2}\right)^2-k_{xb}^2}$$

$$\cdots (3-17)$$

By performing integration with respect to $\eta$ and $\zeta$ in (3-16), (3-18) below is obtained.
[Math. 63]

$$\Psi_3(x, y_1, y_2, z, k)$$

$$= \frac{1}{(2\pi)^9} \iiint \iiint \iiint \iint \iint e^{-i(k_{xa}x + k_{y_1}y_1 + k_{\eta_{2-}}\eta_2)} a_1(k_{xa}, k_{y_1}, k_{\eta_{2-}}, k)$$

$$\cdot e^{is_1(k_{xa}, k_{y_1}, k_{\eta_{2-}})z} e^{is_2(k_{xa}, k_{y_1}, k_{\eta_{2-}})\varsigma_2} dk_{xa} dk_{y_1} dk_{\eta_{2-}}$$

$$\cdot e^{-i(k_{xb}x + k_{\eta_{2+}}\eta_2 + k_{\eta_{3-}}\eta_3)} a_2(k_{xb}, k_{\eta_{2+}}, k_{\eta_{3-}}, k)$$

$$\cdot e^{-is_1(k_{xb}, k_{\eta_{2+}}, k_{\eta_{3-}})\varsigma_2} e^{-is_2(k_{xb}, k_{\eta_{2+}}, k_{\eta_{3-}})\varsigma_3} dk_{xb} dk_{\eta_{2+}} dk_{\eta_{3-}}$$

$$\cdot e^{-i(k_{xc}x + k_{\eta_{3+}}\eta_3 + k_{y_2}y_2)} a_1(k_{xc}, k_{\eta_{3+}}, k_{y_2}, k)$$

$$\cdot e^{is_1(k_{xc}, k_{\eta_{3+}}, k_{y_2})\varsigma_3} e^{is_2(k_{xc}, k_{\eta_{3+}}, k_{y_2})z} dk_{xc} dk_{\eta_{3+}} dk_{y_2} d\eta_2 d\varsigma_2 d\eta_3 d\varsigma_3$$

$$= \frac{1}{(2\pi)^5} \iiint \iiint \iiint e^{-i(k_{xa}x + k_{y_1}y_1)} e^{-i(k_{xb}x)} e^{-i(k_{xc}x + k_{y_2}y_2)}$$

$$\cdot a_1(k_{xa}, k_{y_1}, k_{\eta_{2-}}, k) a_2(k_{xb}, k_{\eta_{2+}}, k_{\eta_{3-}}, k) a_1(k_{xc}, k_{\eta_{3+}}, k_{y_2}, k)$$

$$\cdot \delta(k_{\eta_{2-}} + k_{\eta_{2+}}) \delta(k_{\eta_{3-}} + k_{\eta_{3+}})$$

$$\cdot \delta\left(s_1(k_{xb}, k_{\eta_{2+}}, k_{\eta_{3-}}) - s_2(k_{xa}, k_{y_1}, k_{\eta_{2-}})\right)$$

$$\cdot \delta\left(s_2(k_{xb}, k_{\eta_{2+}}, k_{\eta_{3-}}) - s_1(k_{xc}, k_{\eta_{3+}}, k_{y_2})\right)$$

$$\cdot e^{is_1(k_{xa}, k_{y_1}, k_{\eta_{2-}})z} e^{is_2(k_{xc}, k_{\eta_{3+}}, k_{y_2})z} dk_{xa} dk_{xb} dk_{xc} dk_{y_1} dk_{y_2} dk_{\eta_{2-}} dk_{\eta_{2+}} dk_{\eta_{3-}} dk_{\eta_{3+}}$$

$$= \frac{1}{(2\pi)^5} \iiint \iiint \int e^{-i(k_{xa}x + k_{y_1}y_1)} e^{-i(k_{xb}x)} e^{-i(k_{xc}x + k_{y_2}y_2)}$$

$$\cdot a_1(k_{xa}, k_{y_1}, -k_{\eta_2}, k) a_2(k_{xb}, k_{\eta_2}, -k_{\eta_3}, k) a_1(k_{xc}, k_{\eta_3}, k_{y_2}, k)$$

$$\cdot \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right)$$

$$\cdot e^{is_1(k_{xa}, k_{y_1}, -k_{\eta_2})z} e^{is_2(k_{xc}, k_{\eta_3}, k_{y_2})z} dk_{xa} dk_{xb} dk_{xc} dk_{y_1} dk_{y_2} dk_{\eta_2} dk_{\eta_3}$$

$$\cdots (3-18)$$

Here, $\delta$ denotes a delta function, which corresponds to the fact that the input and output match at the connection point. (3-19) below is obtained by Fourier transforming (3-18) with respect to $(x, y_1, y_2)$ at z=0.
[Math. 64]

$$\tilde{\Psi}_3(k_x, k'_{y_1}, k'_{y_2}, 0, k)$$

$$= \iiint \Psi_3(x, y_1, y_2, z = 0, k) e^{ik_x x} e^{ik'_{y_1} y_1} e^{ik'_{y_2} y_2} dx dy_1 dy_2$$

$$= \frac{1}{(2\pi)^2} \iiint \iint a_1(k_{xa}, k'_{y_1}, -k_{\eta_2}, k) a_2(k_{xb}, k_{\eta_2}, -k_{\eta_3}, k) a_1(k_{xc}, k_{\eta_3}, k'_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k'_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k'_{y_2})\right) dk_{xa} dk_{xb} dk_{xc} dk_{\eta_2} dk_{\eta_3}$$

$$\cdots (3-19)$$

The scattering field function $\Psi(x, y_1, y_2, z, k)$ is expressed as shown in (3-20) below when multiple scattering is considered.
[Math. 65]

$$\Psi(x, y_1, y_2, z, k) = \Psi_1(x, y_1, y_2, z, k)$$
$$+ \Psi_2(x, y_1, y_2, z, k)$$
$$+ \Psi_3(x, y_1, y_2, z, k)$$
$$+ \cdots$$
$$\cdots (3-20)$$

Here, $\Psi_1$ is a scattering field function corresponding to the first-order scattering, $\Psi_2$ is a scattering field function corresponding to the second-order scattering, and $\Psi_3$ is a scattering field function corresponding to the third-order scattering. Based on Equation (2-11) and the like, (3-21) below holds true.
[Math. 66]

$$\Psi_1(x, y_1, y_2, 0, k)$$
$$= \phi_1(x, y_1, y_2, 0, k)$$
$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k) dk_x dk_{y_1} dk_{y_2}$$
$$\cdots (3-21)$$

For example, if the second term, and the fourth and subsequent terms on the right side in Equation (3-20) can be ignored, (3-22) below can be obtained by Fourier transforming the entire Equation (3-20).
[Math. 67]

$$\tilde{\Psi}(k_x, k_{y_1}, k_{y_2}, 0, k) = \frac{1}{(2\pi)^3} \int\limits_{-\infty}^{\infty} \int\limits_{-\infty}^{\infty} \int\limits_{-\infty}^{\infty} e^{i(k_x x + k_{y_1} y_1 + k_{y_2} y_2)}$$

$$\cdot \{\Psi_1(x, y_1, y_2, 0, k) + \Psi_3(x, y_1, y_2, 0, k)\} dx dy_1 dy_2$$

$$= a_1(k_x, k_{y_1}, k_{y_2}, k)$$

$$+ \frac{1}{(2\pi)^2} \iiint \iint a_1(k_{xa}, k_{y_1}, -k_{\eta_2}, k) a_2(k_{xb}, k_{\eta_2}, -k_{\eta_3}, k)$$

$$\cdot a_1(k_{xc}, k_{\eta_3}, k_{y_2}, k) \delta(k_{xa} + k_{xb} + k_{xc} - k_x)$$

$$\cdot \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right)$$

$$\cdot dk_{xa} dk_{xb} dk_{xc} dk_{\eta_2} dk_{\eta_3}$$

$$\cdots (3-22)$$

Using the measurement data $\Phi_1(k)$ at z=0, the left side of Equation (3-22) can be expressed as shown in (3-23) below.
[Math. 68]

$$\tilde{\Psi}(k_x, k_{y_1}, k_{y_2}, 0, k) = \Phi_1(k_x, k_{y_1}, k_{y_2}, k)$$

$$\cdots (3-23)$$

The right side of Equation (3-23) is the measurement data on the boundary surface. Accordingly, the left side of Equation (3-22) is determined. Equation (3-22) is therefore a usual non-linear integral equation with respect to $a_1(k_x, k_{y1}, k_{y2}, k)$ and $a_2(k_x, k_{y1}, k_{y2}, k)$.

A similar equation can be obtained on another boundary surface expressed by z=h. Although this integral equation is nonlinear, the solution of the integral equation can be found very easily using the Neumann series expansion. The inverse scattering problem can be solved as if it were a forward scattering problem.

<III-4 Basic equation of inverse scattering problem with all models considered>

FIG. 7 illustrates four types of scattering models related to third-order scattering. Specifically, D1, D2, D3, and D4 in FIG. 7 correspond to four types of scattering models related to the third-order scattering. A scattering model can also be referred to as a scattering diagram. In FIG. 7, the regions to which the fundamental solutions $E_1$ to $E_4$ are applied are indicated by broken lines. (3-24), (3-25), (3-26), (3-27), and (3-28) below denote the scattering field functions of D1 to D4.
[Math. 69]

$$P_1 \rightarrow S_1 \rightarrow S_{2-} \quad : \phi_{P_1 S_1 S_{2-}}(x, y_1, \eta_{2-}, z, \varsigma_{2-}, k)$$

$$S_{2-} \rightarrow S_2 \rightarrow S_{3-} \quad : \phi_{S_{2-1} S_2 S_{3-}}(x, \eta_{2-}, \eta_{3-}, \varsigma_{2-}, \varsigma_{3-}, k)$$

$$S_{3-} \rightarrow S_3 \rightarrow P_2 \quad : \phi_{S_{3-} S_3 P_2}(x, \eta_{3-}, y_2, \varsigma_{3-}, z, k)$$

$$\cdots (3-24)$$

[Math. 70]

[D1]

$$\phi_{P_1 S_1 S_{2-}}(x, y_1, \eta_{2-}, z, \varsigma_{2-}, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{\eta_{2-}} \eta_{2-})} a_1(k_x, k_{y_1}, k_{\eta_{2-}}, k)$$

$$\cdot e^{is_1(k_x, k_{y_1}, k_{\eta_{2-}})z} e^{is_2(k_x, k_{y_1}, k_{\eta_{2-}})\varsigma_{2-}} dk_x dk_{y_1} dk_{\eta_{2-}}$$

$$\phi_{S_{2-} S_2 S_{3-}}(x, \eta_{2-}, \eta_{3-}, \varsigma_{2-}, \varsigma_{3-}, k)$$

$$= \frac{1}{(2\pi)^3} \int_{-\infty}^{\infty} \int_{-\infty}^{\infty} \int_{-\infty}^{\infty} e^{-i(k_x x + k_{\eta_{2-}} \eta_{2-} + k_{\eta_{3-}} \eta_{3-})} a_2(k_x, k_{\eta_{2-}}, k_{\eta_{3-}}, k)$$

$$\cdot e^{-is_1(k_x, k_{\eta_{2-}}, k_{\eta_{3-}})\varsigma_{2-}} e^{-is_2(k_x, k_{\eta_{2-}}, k_{\eta_{3-}})\varsigma_{3-}} dk_x dk_{\eta_{2-}} dk_{\eta_{3-}}$$

$$\phi_{S_{3-} S_3 P_2}(x, \eta_{3-}, y_2, \varsigma_{3-}, z, k)$$

$$= \frac{1}{(2\pi)^3} \int_{-\infty}^{\infty} \int_{-\infty}^{\infty} \int_{-\infty}^{\infty} e^{-i(k_x x + k_{\eta_{3-}} \eta_{3-} + k_{y_2} y_2)} a_1(k_x, k_{\eta_{3-}}, k_{y_2}, k)$$

$$\cdot e^{is_1(k_x, k_{\eta_{3-}}, k_{y_2})\varsigma_{3-}} e^{is_2(k_x, k_{\eta_{3-}}, k_{y_2})z} dk_x dk_{\eta_{3-}} dk_{y_2}$$

$$\cdots (3-25)$$

[Math. 71]

[D2]

$$\phi_{P_1 S_1 S_{2-}}(x, y_1, \eta_{2-}, z, \varsigma_{2-}, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{\eta_{2-}} \eta_{2-})} a_3(k_x, k_{y_1}, k_{\eta_{2-}}, k)$$

$$\cdot e^{is_1(k_x, k_{y_1}, k_{\eta_{2-}})z} e^{-is_2(k_x, k_{y_1}, k_{\eta_{2-}})\varsigma_{2-}} dk_x dk_{y_1} dk_{\eta_{2-}}$$

$$\phi_{S_{2-} S_2 S_{3-}}(x, \eta_{2-}, \eta_{3-}, \varsigma_{2-}, \varsigma_{3-}, k)$$

$$= \frac{1}{(2\pi)^3} \int_{-\infty}^{\infty} \int_{-\infty}^{\infty} \int_{-\infty}^{\infty} e^{-i(k_x x + k_{\eta_{2-}} \eta_{2-} + k_{\eta_{3-}} \eta_{3-})} a_1(k_x, k_{\eta_{2-}}, k_{\eta_{3-}}, k)$$

$$\cdot e^{is_1(k_x, k_{\eta_{2-}}, k_{\eta_{3-}})\varsigma_{2-}} e^{is_2(k_x, k_{\eta_{2-}}, k_{\eta_{3-}})\varsigma_{3-}} dk_x dk_{\eta_{2-}} dk_{\eta_{3-}}$$

$$\phi_{S_{3-} S_3 P_2}(x, \eta_{3-}, y_2, \varsigma_{3-}, z, k)$$

$$= \frac{1}{(2\pi)^3} \int_{-\infty}^{\infty} \int_{-\infty}^{\infty} \int_{-\infty}^{\infty} e^{-i(k_x x + k_{\eta_{3-}} \eta_{3-} + k_{y_2} y_2)} a_4(k_x, k_{\eta_{3-}}, k_{y_2}, k)$$

$$\cdot e^{-is_1(k_x, k_{\eta_{3-}}, k_{y_2})\varsigma_{3-}} e^{is_2(k_x, k_{\eta_{3-}}, k_{y_2})z} dk_x dk_{\eta_{3-}} dk_{y_2}$$

$$\cdots (3-26)$$

[Math. 72]

[D3]

$$\phi_{P_1 S_1 S_{2-}}(x, y_1, \eta_{2-}, z, \varsigma_{2-}, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{\eta_{2-}} \eta_{2-})} a_1(k_x, k_{y_1}, k_{\eta_{2-}}, k)$$

$$\cdot e^{is_1(k_x, k_{y_1}, k_{\eta_{2-}})z} e^{is_2(k_x, k_{y_1}, k_{\eta_{2-}})\varsigma_{2-}} dk_x dk_{y_1} dk_{\eta_{2-}}$$

$$\phi_{S_{2-} S_2 S_{3-}}(x, \eta_{2-}, \eta_{3-}, \varsigma_{2-}, \varsigma_{3-}, k)$$

$$= \frac{1}{(2\pi)^3} \int_{-\infty}^{\infty} \int_{-\infty}^{\infty} \int_{-\infty}^{\infty} e^{-i(k_x x + k_{\eta_{2-}} \eta_{2-} + k_{\eta_{3-}} \eta_{3-})} a_4(k_x, k_{\eta_{2-}}, k_{\eta_{3-}}, k)$$

$$\cdot e^{-is_1(k_x, k_{\eta_{2-}}, k_{\eta_{3-}})\varsigma_{2-}} e^{is_2(k_x, k_{\eta_{2-}}, k_{\eta_{3-}})\varsigma_{3-}} dk_x dk_{\eta_{2-}} dk_{\eta_{3-}}$$

$$\phi_{S_2 S_3 P_2}(x, \eta_{3-}, y_2, \varsigma_{3-}, z, k)$$

$$= \frac{1}{(2\pi)^3} \int_{-\infty}^{\infty} \int_{-\infty}^{\infty} \int_{-\infty}^{\infty} e^{-i(k_x x + k_{\eta_{3-}} \eta_{3-} + k_{y_2} y_2)} a_4(k_x, k_{\eta_{3-}}, k_{y_2}, k)$$

$$\cdot e^{-is_1(k_x, k_{\eta_{3-}}, k_{y_2})\varsigma_{3-}} e^{is_2(k_x, k_{\eta_{3-}}, k_{y_2})z} dk_x dk_{\eta_{3-}} dk_{y_2}$$

$$\cdots (3-27)$$

[Math. 73]

[D4]

$$\phi_{P_1 S_1 S_{2-}}(x, y_1, \eta_{2-}, z, \varsigma_{2-}, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{\eta_{2-}} \eta_{2-})} a_3(k_x, k_{y_1}, k_{\eta_{2-}}, k)$$

$$\cdot e^{is_1(k_x, k_{y_1}, k_{\eta_{2-}})z} e^{-is_2(k_x, k_{y_1}, k_{\eta_{2-}})\varsigma_{2-}} dk_x dk_{y_1} dk_{\eta_{2-}}$$

$$\phi_{S_{2-} S_2 S_{3-}}(x, \eta_{2-}, \eta_{3-}, \varsigma_{2-}, \varsigma_{3-}, k)$$

$$= \frac{1}{(2\pi)^3} \int_{-\infty}^{\infty} \int_{-\infty}^{\infty} \int_{-\infty}^{\infty} e^{-i(k_x x + k_{\eta_{2-}} \eta_{2-} + k_{\eta_{3-}} \eta_{3-})} a_3(k_x, k_{\eta_{2-}}, k_{\eta_{3-}}, k)$$

$$\cdot e^{is_1(k_x, k_{\eta_{2-}}, k_{\eta_{3-}})\varsigma_{2-}} e^{-is_2(k_x, k_{\eta_{2-}}, k_{\eta_{3-}})\varsigma_{3-}} dk_x dk_{\eta_{2-}} dk_{\eta_{3-}}$$

$$\phi_{S_2 S_3 P_2}(x, \eta_{3-}, y_2, \varsigma_{3-}, z, k)$$

$$= \frac{1}{(2\pi)^3} \int_{-\infty}^{\infty} \int_{-\infty}^{\infty} \int_{-\infty}^{\infty} e^{-i(k_x x + k_{\eta_{3-}} \eta_{3-} + k_{y_2} y_2)} a_1(k_x, k_{\eta_{3-}}, k_{y_2}, k)$$

$$\cdot e^{is_1(k_x, k_{\eta_{3-}}, k_{y_2})\varsigma_{3-}} e^{is_2(k_x, k_{\eta_{3-}}, k_{y_2})z} dk_x dk_{\eta_{3-}} dk_{y_2}$$

$$\cdots (3-28)$$

In the above equations, $(\eta_{2-}, \varsigma_{2-})$ and $(\eta_{3-}, \varsigma_{3-})$ denote the coordinates of the point immediately before point $S_2$ and

the point immediately before point $S_3$, respectively.

The composition of the above functions corresponds to the third-order multiple scattering path $P_1 \to S_1 \to S_2 \to S_3 \to P_2$, which is expressed as shown in (3-29) below. [Math. 74]

$$
\begin{aligned}
&\Phi_3(x, y_1, y_2, z, k) \\
&= \phi_{P_1 S_1 S_{2-}}(x, y_1, \eta_{2-}, z, \varsigma_{2-}, k)\phi_{S_{2-} S_2 S_{3-}}(x, \eta_{2-}, \eta_{3-}, \varsigma_{2-}, \varsigma_{2-}, k) \\
&\qquad\qquad\qquad\qquad \cdot \phi_{S_{3-} S_3 P_2}(x, \eta_{3-}, y_2, \varsigma_{3-}, z, k) \\
&\quad \cdots (3-29)
\end{aligned}
$$

By applying $\eta_{2-} \to \eta_2$, $\eta_{3-} \to \eta_3$, $\varsigma_{2-} \to \varsigma_2$ and $\varsigma_{3-} \to \varsigma_3$ to Equation (3-29) and performing integration with respect to the coordinates $(\eta_2, \zeta_2)$ and $(\eta_3, \zeta_3)$ at points $S_2$ and $S_3$, (3-30) below is obtained. [Math. 75]

$$
\begin{aligned}
&\Psi_3(x, y_1, y_2, z, k) \\
&= \iint \iiint \phi_{P_1 S_1 S_{2-}}(x, y_1, \eta_2, z, \varsigma_2, k)\phi_{S_{2-} S_2 S_{3-}}(x, \eta_2, \eta_3, \varsigma_2, \varsigma_3, k) \\
&\qquad\qquad\qquad \cdot \phi_{S_{3-} S_3 P_2}(x, \eta_{3-}, y_2, \varsigma_{3-}, z, k) d\eta_2 d\varsigma_2 d\eta_3 d\varsigma_3 \\
&\quad \cdots (3-30)
\end{aligned}
$$

By performing integration with respect to $(\eta_2, \zeta_2)$ and $(\eta_3, \zeta_3)$ in (3-30) and Fourier transforming the results with respect to $(x, y_1, y_2)$ at z=0, (3-31), (3-32), (3-33) and (3-34) below are obtained.
[Math. 76]

$$
\begin{aligned}
&[D1] \\
&\tilde{\Psi}_3(k_x, k'_{y_1}, k'_{y_2}, 0, k) \\
&= \iiint \Psi_3(x, y_1, y_2, z=0, k)e^{ik_x x}e^{ik'_{y_1} y_1}e^{ik'_{y_2} y_2} dx\,dy_1\,dy_2 \\
&= \frac{1}{(2\pi)^2}\iiint\iint a_1(k_{xa}, k'_{y_1}, -k_{\eta_2}, k)a_2(k_{xb}, k_{\eta_2}, -k_{\eta_3}, k)a_1(k_{xc}, k_{\eta_3}, k'_{y_2}, k) \\
&\qquad\qquad \cdot \delta(k_{xa}+k_{xb}+k_{xc}-k_x)\delta\left(s_1(k_{xb}, k_{\eta_2}, -k_{\eta_3}) - s_2(k_{xa}, k'_{y_1}, -k_{\eta_2})\right) \\
&\qquad\qquad \cdot \delta\left(s_2(k_{xb}, k_{\eta_2}, -k_{\eta_3}) - s_1(k_{xc}, k_{\eta_3}, k'_{y_2})\right)dk_{xa}dk_{xb}dk_{xc}dk_{\eta_2}dk_{\eta_3} \\
&\quad \cdots (3-31)
\end{aligned}
$$

[Math. 77]

$[D2]$

$$\tilde{\Psi}_3(k_x, k'_{y_1}, k'_{y_2}, 0, k)$$

$$= \iiint \Psi_3(x, y_1, y_2, z = 0, k) e^{ik_x x} e^{ik'_{y1} y_1} e^{ik'_{y2} y_2} dx dy_1 dy_2$$

$$= \frac{1}{(2\pi)^2} \iiint \iint a_3(k_{xa}, k'_{y_1}, -k_{\eta_2}, k) a_1(k_{xb}, k_{\eta_2}, -k_{\eta_3}, k) a_4(k_{xc}, k_{\eta_3}, k'_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k'_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k'_{y_2})\right) dk_{xa} dk_{xb} dk_{xc} dk_{\eta_2} dk_{\eta_3}$$

$$\cdots (3-32)$$

[Math. 78]

$[D3]$

$$\tilde{\Psi}_3(k_x, k'_{y_1}, k'_{y_2}, 0, k)$$

$$= \iiint \Psi_3(x, y_1, y_2, z = 0, k) e^{ik_x x} e^{ik'_{y1} y_1} e^{ik'_{y2} y_2} dx dy_1 dy_2$$

$$= \frac{1}{(2\pi)^2} \iiint \iint a_1(k_{xa}, k'_{y_1}, -k_{\eta_2}, k) a_4(k_{xb}, k_{\eta_2}, -k_{\eta_3}, k) a_4(k_{xc}, k_{\eta_3}, k'_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k'_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k'_{y_2})\right) dk_{xa} dk_{xb} dk_{xc} dk_{\eta_2} dk_{\eta_3}$$

$$\cdots (3-33)$$

[Math. 79]

$[D4]$

$$\tilde{\Psi}_3(k_x, k'_{y_1}, k'_{y_2}, 0, k)$$

$$= \iiint \Psi_3(x, y_1, y_2, z = 0, k) e^{ik_x x} e^{ik'_{y1} y_1} e^{ik'_{y2} y_2} dx dy_1 dy_2$$

$$= \frac{1}{(2\pi)^2} \iiint \iint a_3(k_{xa}, k'_{y_1}, -k_{\eta_2}, k) a_3(k_{xb}, k_{\eta_2}, -k_{\eta_3}, k) a_1(k_{xc}, k_{\eta_3}, k'_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k'_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k'_{y_2})\right) dk_{xa} dk_{xb} dk_{xc} dk_{\eta_2} dk_{\eta_3}$$

$$\cdots (3-34)$$

<III-5 Integral equation of inverse scattering problem in multiple scattering>

The scattering field function $\Psi(x, y_1, y_2, z, k)$ is expressed as shown in (3-35) below when multiple scattering is

considered.
[Math. 80]

$$\Psi(x, y_1, y_2, z, k)$$
$$= \Psi_1(x, y_1, y_2, z, k) + \Psi_2(x, y_1, y_2, z, k) + \Psi_3(x, y_1, y_2, z, k) + \cdots$$
$$\cdots (3-35)$$

By Fourier transforming the entire Equation (3-35) at z=0, (3-36) and (3-37) below are obtained.
[Math. 81]

$$\tilde{\Psi}(k_x, k_{y_1}, k_{y_2}, 0, k)$$
$$= \frac{1}{(2\pi)^3} \int_{-\infty}^{\infty} \int_{-\infty}^{\infty} \int_{-\infty}^{\infty} e^{i(k_x x + k_{y_1} y_1 + k_{y_2} y_2)}$$
$$\cdot \{\Psi_1(x, y_1, y_2, 0, k) + \Psi_2(x, y_1, y_2, 0, k) + \Psi_3(x, y_1, y_2, 0, k) + \cdots\}$$
$$\cdot dx dy_1 dy_2$$
$$\cdots (3-36)$$

[Math. 82]

$$\tilde{\Psi}(k_x, k_{y_1}, k_{y_2}, 0, k)$$

$$= a_1(k_x, k_{y_1}, k_{y_2}, k)$$

$$+ \frac{1}{(2\pi)} \iiint a_1(k_{x_a}, k'_{y_1}, k_\eta, k) a_4(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$+ \frac{1}{(2\pi)^2} \iiint \iint a_1(k_{xa}, k'_{y_1}, -k_{\eta_2}, k) a_2(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_1(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_1(k_{xa}, k_{y_1}, -k_{\eta_2}, k) a_4(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_3(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ O(a^4)$$

$$\cdots (3-37)$$

Here,

[Math. 83]

$$\tilde{\Psi}(k_x, k_{y_1}, k_{y_2}, 0, k)$$

is a measurement value of the multistatic radar at z=0. Accordingly, (3-37) is an integral equation with respect to $a_1$ ($k_x$, $k_{y1}$, $k_{y2}$, k), $a_2$ ($k_x$, $k_{y1}$, $k_{y2}$, k), $a_3$ ($k_x$, $k_{y1}$, $k_{y2}$, k), and $a_4$ ($k_x$, $k_{y1}$, $k_{y2}$, k).

In order to solve the integral equation including the multiple scattering terms, measurement values on two z=const planes are used. It is extremely easy to solve this integral equation based on the measurement values. The result is obtained in the form of a Neumann series. Note that $O(a^4)$ in Equation (3-37) is the term corresponding to the fourth-order or higher-order scattering, and may be omitted.

<III-6 Solution of integral equation of inverse scattering problem in multiple scattering>

FIG. 8 illustrates definitions of four types of measurement data. In other words, four types of measurement data of multistatic scattering tomography are defined as in FIG. 8. From (3-31), (3-32), (3-33), (3-34), and the like, (3-38) below hold true.
[Math. 84]

$$\Phi_{11}(k_x, k_{y_1}, k_{y_2}, k) = \breve{\Psi}_{11}(k_x, k_{y_1}, k_{y_2}, 0, k)$$

$$\Phi_{22}(k_x, k_{y_1}, k_{y_2}, k) = \breve{\Psi}_{22}(k_x, k_{y_1}, k_{y_2}, h, k)$$

$$\Phi_{12}(k_x, k_{y_1}, k_{y_2}, k) = \breve{\Psi}_{12}(k_x, k_{y_1}, k_{y_2}, h, k)$$

$$\Phi_{21}(k_x, k_{y_1}, k_{y_2}, k) = \breve{\Psi}_{21}(k_x, k_{y_1}, k_{y_2}, 0, k)$$

$$\cdots (3-38)$$

The right sides of the four equations in (3-38) express four types of functions obtained by Fourier transforming the four types of scattering field functions of multiple scattering corresponding to four types of measurement methods.
Equation (3-37) yields $a_1(k_x, k_{y1}, k_{y2}, k)$ when multiple scattering is not considered. In the following, a suffix of "0" is given to each solution in which multiple scattering is not considered. The results as in (3-39) below are obtained corresponding to the four types of measurement data in FIG. 8.
[Math. 85]

$$a_{1,0}(k_x, k_{y_1}, k_{y_2}, k) = \Phi_{11}(k_x, k_{y_1}, k_{y_2}, k)$$

$$a_{2,0}(k_x, k_{y_1}, k_{y_2}, k) = \Phi_{22}(k_x, k_{y_1}, k_{y_2}, k)$$

$$a_{3,0}(k_x, k_{y_1}, k_{y_2}, k) = \Phi_{12}(k_x, k_{y_1}, k_{y_2}, k)$$

$$a_{4,0}(k_x, k_{y_1}, k_{y_2}, k) = \Phi_{21}(k_x, k_{y_1}, k_{y_2}, k)$$

$$\cdots (3-39)$$

By expanding $a_1$, $a_2$, $a_3$, and $a_4$ to the series corresponding to the scattering orders, (3-40) below is obtained. Note that a suffix related to the order of scattering is given to each of $a_1$, $a_2$, $a_3$, and $a_4$. [Math. 86]

$$a_1(k_x, k_{y_1}, k_{y_2}, k)$$
$$= \Phi_{11}(k_x, k_{y_1}, k_{y_2}, k) + a_{1,1}(k_x, k_{y_1}, k_{y_2}, k) + a_{1,2}(k_x, k_{y_1}, k_{y_2}, k) + \cdots$$
$$a_2(k_x, k_{y_1}, k_{y_2}, k)$$
$$= \Phi_{22}(k_x, k_{y_1}, k_{y_2}, k) + a_{2,1}(k_x, k_{y_1}, k_{y_2}, k) + a_{2,2}(k_x, k_{y_1}, k_{y_2}, k) + \cdots$$
$$a_3(k_x, k_{y_1}, k_{y_2}, k)$$
$$= \Phi_{12}(k_x, k_{y_1}, k_{y_2}, k) + a_{3,1}(k_x, k_{y_1}, k_{y_2}, k) + a_{3,2}(k_x, k_{y_1}, k_{y_2}, k) + \cdots$$
$$a_4(k_x, k_{y_1}, k_{y_2}, k)$$
$$= \Phi_{21}(k_x, k_{y_1}, k_{y_2}, k) + a_{4,1}(k_x, k_{y_1}, k_{y_2}, k) + a_{4,2}(k_x, k_{y_1}, k_{y_2}, k) + \cdots$$

$$\cdots (3-40)$$

By substituting the measurement data expressed by (3-38) into (3-37), (3-41) below can be obtained.
[Math. 87]

$$
\begin{aligned}
\Phi_{11}&(k_x, k_{y_1}, k_{y_2}, k) \\
&= a_1(k_x, k_{y_1}, k_{y_2}, k) \\
&+ \frac{1}{(2\pi)} \iiint a_1(k_{x_a}, k_{y_1}, k_\eta, k) a_4(k_{x_b}, -k_\eta, k_{y_2}, k) \delta(k_{xa} + k_{xb} - k_x) \\
&\qquad \cdot \delta\left(s_2(k_{xa}, k_{y_1}, k_\eta) - s_1(k_{xb}, -k_\eta, k_{y_2})\right) dk_{x_a} dk_{x_b} dk_\eta \\
&+ \frac{1}{(2\pi)^2} \iiint\!\iint a_1(k_{xa}, k_{y_1}, -k_{\eta_2}, k) a_2(k_{xb}, k_{\eta_2}, -k_{\eta_3}, k) a_1(k_{xc}, k_{\eta_3}, k_{y_2}, k) \\
&\qquad \cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right) \\
&\qquad \cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3} \\
&+ \frac{1}{(2\pi)^2} \iiint\!\iint a_3(k_{xa}, k_{y_1}, -k_{\eta_2}, k) a_1(k_{xb}, k_{\eta_2}, -k_{\eta_3}, k) a_4(k_{xc}, k_{\eta_3}, k_{y_2}, k) \\
&\qquad \cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right) \\
&\qquad \cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3} \\
&+ \frac{1}{(2\pi)^2} \iiint\!\iint a_1(k_{xa}, k_{y_1}, -k_{\eta_2}, k) a_4(k_{xb}, k_{\eta_2}, -k_{\eta_3}, k) a_4(k_{xc}, k_{\eta_3}, k_{y_2}, k) \\
&\qquad \cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right) \\
&\qquad \cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3} \\
&+ \frac{1}{(2\pi)^2} \iiint\!\iint a_3(k_{xa}, k_{y_1}, -k_{\eta_2}, k) a_3(k_{xb}, k_{\eta_2}, -k_{\eta_3}, k) a_1(k_{xc}, k_{\eta_3}, k_{y_2}, k) \\
&\qquad \cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right) \\
&\qquad \cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3} \\
&+ O(a^4) \\
&\qquad\qquad \cdots (3-41)
\end{aligned}
$$

From this Equation (3-41), it is possible to express $a_{1,1}(k_x, k_{y1}, k_{y2}, k)$ related to second-order scattering using only the measurement data. Similar equations are also obtained for the other $a_{2,\,1}$, $a_{3,\,1}$, $a_{4,\,1}$.

By substituting (3-40) into (3-41) and leaving only the $0^{th}$-order term in the integral sign, (3-42) below is obtained.
[Math. 88]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k) \Phi_{21}(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$- \frac{1}{(2\pi)^2} \iiint \iint \Phi_{11}(k_{xa}, k_{y_1}, -k_{\eta_2}, k) \Phi_{22}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{11}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{11}(k_{xa}, k_{y_1}, -k_{\eta_2}, k) \Phi_{21}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{12}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \cdots \cdots$$

$$\cdots (3-42)$$

The "+..." in (3-42) expresses terms corresponding to the fourth or higher order scattering, which may be omitted. By rearranging (3-42), (3-43) below is obtained.

[Math. 89]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k) \Phi_{21}(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$- \frac{1}{(2\pi)^2} \iiint \iint \left\{ \Phi_{11}(k_{xa}, k_{y_1}, -k_{\eta_2}, k) \Phi_{22}(k_{xb}, k_{\eta_2}, -k_{\eta_3}, k) \Phi_{11}(k_{xc}, k_{\eta_3}, k_{y_2}, k) \right.$$

$$+ \Phi_{12}(k_{xa}, k_{y_1}, -k_{\eta_2}, k) \Phi_{11}(k_{xb}, k_{\eta_2}, -k_{\eta_3}, k) \Phi_{21}(k_{xc}, k_{\eta_3}, k_{y_2}, k)$$

$$+ \Phi_{11}(k_{xa}, k_{y_1}, -k_{\eta_2}, k) \Phi_{21}(k_{xb}, k_{\eta_2}, -k_{\eta_3}, k) \Phi_{21}(k_{xc}, k_{\eta_3}, k_{y_2}, k)$$

$$\left. + \Phi_{12}(k_{xa}, k_{y_1}, -k_{\eta_2}, k) \Phi_{12}(k_{xb}, k_{\eta_2}, -k_{\eta_3}, k) \Phi_{11}(k_{xc}, k_{\eta_3}, k_{y_2}, k) \right\}$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) \quad dk_{xa} dk_{xb} dk_{xc} dk_{\eta_2} dk_{\eta_3}$$

$$\cdots (3-43)$$

In Equation (3-43), $a_1$ corresponds to the first-order scattering, second-order scattering, and third-order scattering. Specifically, $a_1$ is derived by removing the effects of second-order scattering and third-order scattering from the measurement data. A same procedure may be used to derive $a_1$ corresponding to the higher-order scattering. Moreover, $a_2$, $a_3$, and $a_4$ can also be derived by the same procedure. The general solution of the scattering field equation is expressed as shown in (3-44) below, using $a_1$. [Math.90]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$\cdots (3-44)$$

The imaging function ρ(x, y, z) is expressed as shown in (3-45) below, using $\varphi_1$ in (3-44) above. [Math. 91]

$$\rho(\text{x, y, z}) = \lim_{t \to 0} \left[ \frac{1}{2\pi} \int_{-\infty}^{\infty} \phi_1(x, y, y, z, z, k) e^{-ickt} dk \right]$$

$$\cdots (3-45)$$

The imaging function is a function from which the effects of multiple scattering have been removed, and which gives an explicit solution to the inverse scattering problem in the non-linear case.

Equation (3-41) may be generalized as shown in (3-46) below. Equation (3-46) may then be used as Equation (3-41).

[Math. 92]

$$\Phi_{ij}_{i,j=1,2} = a_{m_1}_{m_1=1,2,3,4}$$

$$+ \frac{1}{(2\pi)^1} \int f_2 \left[ a_{m_1} a_{m_2} \right]_{m_1,m_2=1,2,3,4} d\Bbbk_{f_2}$$

$$+ \frac{1}{(2\pi)^2} \int f_3 \left[ a_{m_1} a_{m_2} a_{m_3} \right]_{m_1,m_2,m_3=1,2,3,4} d\Bbbk_{f_3}$$

$$+ \cdots$$

$$+ \frac{1}{(2\pi)^{L-1}} \int f_L \left[ a_{m_1} a_{m_2} a_{m_3} \cdots a_{m_L} \right]_{m_1,m_2,m_3,\cdots,m_L=1,2,3,4} d\Bbbk_{f_L}$$

$$\cdots (3-46)$$

Here, $a_1$, $a_2$, $a_3$, and $a_4$ expressed by $a_{m1}$, $a_{m2}$, $a_{m3}$, ..., $a_{mL}$, correspond to the $a(k_x, k_{y1}, k_{y2}, k)$ in the analytical solution related to the four scattering states. Moreover, $f_2$, $f_3$, ..., $f_L$ are the products of 2, 3, ..., L variables in the square brackets corresponding to 2, 3, ..., L scattering, respectively.

Moreover,

[Math. 93]

$$\Bbbk_{f_2}, \Bbbk_{f_3}, \cdots, \Bbbk_{f_L}$$

denote the wave number vectors related to the coordinate variables included in 2, 3, ..., L variables in the square brackets of $f_2$, $f_3$, ..., $f_L$.

Moreover, Equation (3-42) may be generalized as shown in (3-47) below, and (3-47) may be used as (3-42).

[Math. 94]

$$a_m_{m=1,2,3,4} = \Phi_{ij}_{ij=1,2}$$

$$- \frac{1}{(2\pi)^1} \int g_2 \left[ \Phi_{m_1 n_1} \Phi_{m_2 n_2} \right]_{\substack{m_1,n_1=1,2 \\ m_2,n_2=1,2}} d\Bbbk_{g_2}$$

$$- \frac{1}{(2\pi)^2} \int g_3 \left[ \Phi_{m_1 n_1} \Phi_{m_2 n_2} \Phi_{m_3 n_3} \right]_{\substack{m_1,n_1=1,2 \\ m_2,n_2=1,2 \\ m_3,n_3=1,2}} d\Bbbk_{g_3}$$

$$- \cdots$$

$$- \frac{1}{(2\pi)^{L-1}} \int g_L \left[ \Phi_{m_1 n_1} \Phi_{m_2 n_2} \Phi_{m_3 n_3} \cdots \Phi_{m_L n_L} \right]_{\substack{m_1,n_1=1,2 \\ m_2,n_2=1,2 \\ m_3,n_3=1,2 \\ \cdots \\ m_L,n_L=1,2}} d\Bbbk_{g_L}$$

$$\cdots (3-47)$$

Here, $a_1$, $a_2$, $a_3$, and $a_4$ expressed by $a_m$ correspond to $a(k_x, k_{y1}, k_{y2}, k)$ in the analytical solution related to the four scattering states. Moreover, $\Phi_{11}$, $\Phi_{12}$, $\Phi_{21}$, and $\Phi_{22}$, expressed by $\Phi_{m1n1}$, $\Phi_{m2n2}$, $\Phi_{m3n3}$, ..., $\Phi_{mLnL}$, correspond to the measurement data related to the four scattering states. Moreover, $g_2$, $g_3$, ..., $g_L$ are the products of 2, 3, ..., L variables in the square brackets corresponding to 2, 3, ..., L scattering applied from wave transmission to wave reception, respectively.

Moreover,

$$[\text{Math. 95}]$$

$$\mathbb{k}_{g_2}, \mathbb{k}_{g_3}, \cdots, \mathbb{k}_{g_L}$$

denote the wave number vectors related to the coordinate variables included in 2, 3, ..., L variables in the square brackets of $g_2$, $g_3$, ..., $g_L$.

The scattering field function may be generalized as shown in (3-48) below.

[Math. 96]

$$\phi_m(x, y_1, y_2, z_1, z_2, k)$$
$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_m(k_x, k_{y_1}, k_{y_2}, k)$$
$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$m = 1, 2, 3, 4$$

$$\cdots (3-48)$$

The imaging function may be generalized as shown in (3-49) below.

[Math. 97]

$$\rho(\text{x, y, z}) = \lim_{t \to 0} \left[ \frac{1}{2\pi} \int_{-\infty}^{\infty} \phi_m(x, y, y, z, z, k) e^{-ickt} dk \right]$$

$$\cdots (3-49)$$

<IV Configuration and operation of imaging device>

Based on the above description, a configuration and operation of an imaging device that uses waves to visualize the three-dimensional structure of each scatterer included in an object in a region will be described below.

Here, waves are, for example, radio waves, and may be microwaves, millimeter waves, terahertz waves, and the like. Moreover, light, sound, or the like may be used as the waves. The object in the region may be a living body, a manufactured object, or a natural material. In particular, the imaging device may be used for mammography, and the object may be a breast.

Moreover, each scatterer included in an object in a region corresponds to a portion that has physical properties different from those of the surrounding medium. Specifically, this physical property corresponds to the wave reflectance. When radio waves are used as waves, the physical property may be dielectric constant. The scatterer included in the object may be a rebar in reinforced concrete or a tumor in a breast. The region to be measured may be equivalent to the region of the object.

FIG. 9 illustrates a basic configuration of the imaging device according to the present embodiment. Imaging device 100 illustrated in FIG. 9 includes a plurality of transmitters 101, a plurality of receivers 102, and information processing circuit 103. Imaging device 100 may also include display 104.

Each of transmitters 101 is a circuit that transmits a wave. Specifically, transmitters 101 sequentially transmit waves. Transmitters 101 are arranged on both sides of the region to be measured.

Each of receivers 102 is a circuit that receives the wave. Receivers 102 may receive waves simultaneously and in parallel. In a similar manner to transmitters 101, receivers 102 are arranged on both sides of the region to be measured. Receivers 102 may be located in substantially the same position as transmitters 101 or in the positions different from transmitters 101.

Transmitters 101 and receivers 102 may form a multistatic antenna or a monostatic antenna.

Information processing circuit 103 is a circuit that processes information. Specifically, information processing circuit 103 visualizes the three-dimensional structure of each scatterer included in an object in a region based on the measurement data obtained by transmitters 101 and receivers 102. For example, information processing circuit 103 performs the arithmetic processing shown in the theories described above when visualizing the three-dimensional structure of the scatterer based on the measurement data.

Information processing circuit 103 may be a computer or a computer processor. Information processing circuit 103 may perform information processing by reading a program from memory and executing the program. Information processing circuit 103 may also be a dedicated circuit that visualizes the three-dimensional structure of the scatterer based on the measurement data.

In addition, information processing circuit 103 may generate an image indicating the three-dimensional structure of the scatterer in order to visualize the three-dimensional structure of the scatterer.

Information processing circuit 103 may visualize the three-dimensional structure of the scatterer by outputting the image indicating the three-dimensional structure of the scatterer to display 104 or the like. Alternatively, information processing circuit 103 may visualize the three-dimensional structure of the scatterer by outputting the image indicating the three-dimensional structure of the scatterer to a printer (not illustrated). Alternatively, information processing circuit 103 may visualize the three-dimensional structure of the scatterer by transmitting the image as electronic data to another device (not illustrated) through wired or wireless communication.

Display 104 is a display device, such as a liquid crystal display. Note that display 104 is an optional structural element, but not an essential structural element. Display 104 may also be an external device that does not form imaging device 100.

FIG. 10 is a conceptual diagram illustrating an example of a relation between transmitters 101, receivers 102, and a region. As illustrated in FIG. 10, transmitters 101 are arranged on both sides of the region to be measured. Similarly, receivers 102 are arranged on both sides of the region to be measured. Transmitters 101 and receivers 102 may be arranged two-dimensionally on each of the two measurement surfaces. Alternatively, by causing transmitter 101 and receiver 102 arranged on the two measurement surfaces to move, transmission at a plurality of transmission positions and reception at a plurality of reception positions may be performed.

FIG. 11 is a conceptual diagram illustrating a variation of the relation between transmitters 101, receivers 102, and the region. As illustrated in FIG. 11, transmitters 101 and receivers 102 may be arranged on curved surfaces on both sides of the region.

FIG. 12 is a flowchart illustrating a basic operation of imaging device 100 illustrated in FIG. 9. Specifically, transmitters 101, receivers 102, and information processing circuit 103 in imaging device 100 illustrated in FIG. 9 perform the operations illustrated in FIG. 10.

First, a plurality of transmitters 101 transmit waves to a region to be measured (S101). For example, transmitters 101 sequentially transmit waves. A plurality of receivers 102 receive waves from the region to be measured (S102). For example, receivers 102 receive waves in parallel. The received waves can also be referred to as scattered waves. Information processing circuit 103 then visualizes the three-dimensional structure of each of scatterers included in an object in a region based on the measurement data obtained by transmitters 101 and receivers 102 (S103).

Specifically, information processing circuit 103 derives an imaging function corresponding to the scattering field function related to the scattering of the waves according to the correspondence between the measurement data and a composition of a plurality of functions related to multiple first-order scattering that form multiple scattering. Information processing circuit 103 then visualizes the three-dimensional structure of the scatterer included in the object in the region, using the imaging function.

This allows imaging device 100 to apply the correspondence between the measurement data and the composition of a plurality of functions related to multiple first-order scattering to derive an imaging function for visualizing the three-dimensional structure of each scatterer included in an object in a region. Multiple scattering is assumed to be a combination of multiple first-order scattering. Accordingly, imaging device 100 is capable of analytically solving the inverse problem of scattering, including multiple scattering, according to this correspondence. Hence, imaging device 100 is capable of visualizing, with high accuracy, the three-dimensional structure of each scatterer included in an object in a region.

For example, information processing circuit 103 may derive the imaging function corresponding to the scattering field function by solving the equation of the scattering field function based on the measurement data. Moreover, the scattering field function may be expressed by

[Math. 98]

$$\phi(x,y_1,y_2,z_1,z_2,k)=\iint_D \frac{e^{ik\rho_1}}{\rho_1}\frac{e^{ik\rho_2}}{\rho_2}\varepsilon(\xi,\eta,\zeta)d\xi d\eta d\zeta$$

Here $(x, y_1, z_1)$ denotes the transmission position of the wave, $(x, y_2, z_2)$ denotes the reception position of the wave, k denotes the wave number of the wave, D denotes the region, $(\xi, \eta, \zeta)$ corresponds to the reflection position of the wave, and $\varepsilon$ corresponds to an unknown reflectance at the reflection position. Moreover, $\rho_1$ denotes the distance from the transmission position to the reflection position, and $\rho_2$ denotes the distance from the reflection position to the reception position.

Moreover, the equation of the scattering field function may be expressed by

[Math. 99]

$$\left[\frac{1}{4}\Delta_5{}^2-\frac{1}{c^2}\partial_t{}^2\partial_x{}^2-(\partial_{y_1}{}^2+\partial_{z_1}{}^2)(\partial_{y_2}{}^2+\partial_{z_2}{}^2)\right]\phi=0$$

Here, $\Delta_5$ denotes the Laplace operator with respect to $x, y_1, y_2, z_1$, and $z_2$, c denotes the propagation velocity of the wave, and t denotes the time taken from the wave transmission to the wave reception.

This allows imaging device 100 to visualize, with high accuracy, the three-dimensional structure of each scatterer included in an object in a region, according to the scattering field function associated with the scattering phenomenon and the equation satisfied by the scattering field function.

For example, information processing circuit 103 may derive an analytical solution of the equation based on the measurement data. Information processing circuit 103 may then derive the imaging function based on the analytical solution. The analytical solution may be expressed by

[Math. 100]

$$\phi(x,y_1,y_2,z_1,z_2,k)$$

$$=\frac{1}{(2\pi)^3}\int_{-\infty}^{\infty}\int_{-\infty}^{\infty}\int_{-\infty}^{\infty}e^{-i(k_x x+k_{y_1}y_1+k_{y_2}y_2)}a(k_x,k_{y_1},k_{y_2},k)e^{is_1(k_x,k_{y_1},k_{y_2})z_1}e^{is_2(k_x,k_{y_1},k_{y_2})z_2}dk_x dk_{y_1}dk_{y_2}$$

Here, $k_x, k_{y_1}$, and $k_{y_2}$ denote wave numbers related to $x, y_1$ and $y_2$ of the scattering field function. Moreover, $a(k_x, k_{y_1}, k_{y_2}, k)$ denotes a function based on $k_x, k_{y_1}, k_{y_2}$ and k, $s_1(k_x, k_{y_1}, k_{y_2})$ denotes a function based on $k_x, k_{y_1}$ and $k_{y_2}$, and $s_2(k_x, k_{y_1}, k_{y_2})$ denotes a function based on $k_x, k_{y_1}$, and $k_{y_2}$.

This allows imaging device 100 to visualize, with high accuracy, the three-dimensional structure of each scatterer included in an object in a region according to the analytical solution of the equation satisfied by the scattering field function associated with the scattering phenomenon.

For example, the imaging function may be expressed by

[Math. 101]

$$\rho(x,y,z)=\underset{t\to0}{Lim}\left[\frac{1}{2\pi}\int_{-\infty}^{\infty}\phi(x,y,y,z,z,k)e^{-ickt}dk\right]$$

Here, (x, y, z) denotes the position of an imaging target.

This allows imaging device 100 to visualize, with high accuracy, the three-dimensional structure of each scatterer included in an object in a region according to the imaging function appropriately associated with the scattering field function.

Moreover, for example, multiple scattering may be expressed using four functions of a spectral space corresponding to the four fundamental solutions of the scattering field function equation. Additionally, the relation between the measurement data and the four functions may be expressed by a nonlinear integral equation. Information processing circuit 103 may then derive four functions from the measured data according to the nonlinear integral equation. Information processing circuit 103 may then use the four functions to derive the imaging function corresponding to the scattering field function.

This allows imaging device 100 to visualize, with high accuracy, the three-dimensional structure of each scatterer included in an object in a region according to relational expression that expresses multiple scattering.

For example, the measurement data may be expressed by

[Math. 102]

$$\Phi_{ij}_{i,j=1,2}$$

Here, $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions.

Information processing circuit 103 then uses

[Math. 103]

$$\Phi_{ij}_{i,j=1,2} = a_{m_1}_{m_1=1,2,3,4}$$

$$+ \frac{1}{(2\pi)^1} \int f_2 \left[ a_{m_1} a_{m_2} \right]_{m_1,m_2=1,2,3,4} d\Bbbk_{f_2}$$

$$+ \frac{1}{(2\pi)^2} \int f_3 \left[ a_{m_1} a_{m_2} a_{m_3} \right]_{m_1,m_2,m_3=1,2,3,4} d\Bbbk_{f_3}$$

$$+ \cdots$$

$$+ \frac{1}{(2\pi)^{L-1}} \int f_L \left[ a_{m_1} a_{m_2} a_{m_3} \cdots a_{m_L} \right]_{m_1,m_2,m_3,\cdots,m_L=1,2,3,4} d\Bbbk_{f_L}$$

,

to derive

[Math. 104]

$$a_{m_1}_{m_1=1,2,3,4}$$

from which the effects of multiple scattering have been removed.

Here, $a_1$, $a_2$, $a_3$, and $a_4$ expressed by $a_{m1}$, $a_{m2}$, $a_{m3}$, ..., $a_{mL}$, correspond to $a(k_x, k_{y1}, k_{y2}, k)$ in the analytical solution related to the four scattering states. Moreover, $f_2$, $f_3$, ..., $f_L$ denote the products of 2, 3, ..., L variables in the square brackets corresponding to 2, 3, ..., L scattering applied from wave transmission to wave reception, respectively.

[Math. 105]

$$\Bbbk_{f_2}, \Bbbk_{f_3}, \cdots, \Bbbk_{f_L}$$

denote the wave number vectors related to the coordinate variables included in 2, 3, ..., L variables in the square brackets of $f_2$, $f_3$, ..., $f_L$.

Information processing circuit 103 may then use, as a scattering field function,

[Math. 106]

$$\phi_{m_1}(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_{m_1}(k_x, k_{y_1}, k_{y_2}, k)$$

$$\cdot e^{is_1(k_x, k_{y_1}, k_{y_2})z_1} e^{is_2(k_x, k_{y_1}, k_{y_2})z_2} dk_x dk_{y_1} dk_{y_2}$$

$$m_1 = 1, 2, 3, 4$$

to derive, as an imaging function,

[Math. 107]

$$\rho(x, y, z) = \lim_{t \to 0} \left[ \frac{1}{2\pi} \int_{-\infty}^{\infty} \phi_{m_1}(x, y, y, z, z, k) e^{-ickt} dk \right]$$

This allows imaging device 100 to visualize, with high accuracy, the three-dimensional structure of each scatterer included in an object in a region according to the equation based on the multiple scattering theory.

For example, the measurement data is expressed by

[Math. 108]

$$\Phi_{ij}$$
$$i, j = 1, 2$$

Here, $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions.

Information processing circuit 103 may then use

[Math. 109]

$$a_m = \Phi_{ij} \atop {m=1,2,3,4 \quad ij=1,2}$$

$$-\frac{1}{(2\pi)^1}\int g_2 \left[ \Phi_{m_1 n_1} \Phi_{m_2 n_2} \right] d\mathbb{k}_{g_2} \atop {m_1,n_1=1,2 \atop m_2,n_2=1,2}$$

$$-\frac{1}{(2\pi)^2}\int g_3 \left[ \Phi_{m_1 n_1} \Phi_{m_2 n_2} \Phi_{m_3 n_3} \right] d\mathbb{k}_{g_3} \atop {m_1,n_1=1,2 \atop m_2,n_2=1,2 \atop m_3,n_3=1,2}$$

$$-\cdots$$

$$-\frac{1}{(2\pi)^{L-1}}\int g_L \left[ \Phi_{m_1 n_1} \Phi_{m_2 n_2} \Phi_{m_3 n_3} \cdots \Phi_{m_L n_L} \right] d\mathbb{k}_{g_L} \atop {m_1,n_1=1,2 \atop m_2,n_2=1,2 \atop m_3,n_3=1,2 \atop \cdots \atop m_L,n_L=1,2}$$

to derive

[Math. 110]

$$a_m \atop {m=1,2,3,4}$$

from which the effects of multiple scattering has been removed.

Here $a_1$, $a_2$, $a_3$, and $a_4$, expressed by $a_m$ correspond to $a(k_x, k_{y1}, k_{y2}, k)$ in the analytical solution related to the four scattering states. Moreover, $\Phi_{11}$, $\Phi_{12}$, $\Phi_{21}$, and $\Phi_{22}$, expressed by $\Phi_{m_1 n_1}$, $\Phi_{m_2 n_2}$, $\Phi_{m_3 n_3}$, ..., $\Phi_{m_L n_L}$, correspond to the measurement data related to the four scattering states. Moreover, $g_2$, $g_3$, ..., $g_L$ denote the products of 2, 3, ..., L variables in the square brackets corresponding to 2, 3, ..., L scattering applied from wave transmission to wave reception, respectively.

Moreover,

[Math. 111]

$$\mathbb{k}_{g_2}, \mathbb{k}_{g_3}, \cdots, \mathbb{k}_{g_L}$$

denote wave number vectors related to the coordinate variables included in 2, 3, ..., L variables in the square brackets of $g_2$, $g_3$, ..., $g_L$.

Information processing circuit 103 then may use, as a scattering field function,

[Math. 112]

$$\phi_m(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_m(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$m = 1, 2, 3, 4$$

to derive, as an imaging function,

[Math. 113]

$$\rho(x, y, z) = \lim_{t \to 0} \left[ \frac{1}{2\pi} \int_{-\infty}^{\infty} \phi_m(x, y, y, z, z, k) e^{-ickt} dk \right]$$

This allows imaging device 100 to visualize, with high accuracy, the three-dimensional structure of each scatterer included in an object in a region according to the equation in which the measurement data is properly associated based on the multiple scattering theory.
For example, the measurement data is expressed by

[Math. 114]

$$\Phi_{ij}$$
$$i, j = 1, 2$$

Here, $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions.
Information processing circuit 103 may then derive $a_1$ from which the effects of multiple scattering have been removed, using

[Math. 115]

$$\Phi_{11}(k_x, k_{y_1}, k_{y_2}, k)$$

$$= a_1(k_x, k_{y_1}, k_{y_2}, k)$$

$$+ \frac{1}{(2\pi)} \iiint a_1(k_{x_a}, k_{y_1}, k_\eta, k) a_4(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$+ \frac{1}{(2\pi)^2} \iiint \iint a_1(k_{xa}, k_{y_1}, -k_{\eta_2}, k) a_2(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_1(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_1(k_{xa}, k_{y_1}, -k_{\eta_2}, k) a_4(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_3(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ O(a^4)$$

Here, $\delta$ denotes a delta function, $k_{xa}$, $k_{xb}$, and $k_{xc}$ are variables corresponding to $k_x$, $k_\eta$ and $k_{\eta2}$ are variables corresponding to $k_{y1}$, $k_{\eta3}$ is a variable corresponding to $k_{y2}$, and $O(a^4)$ is a term corresponding to fourth or higher order scattering.

Information processing circuit 103 may then use, as a scattering field function,

[Math. 116]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

to derive, as an imaging function,

[Math. 117]

$$\rho(\mathrm{x},\ \mathrm{y},\ \mathrm{z}) = \underset{t\to0}{Lim}\left[\frac{1}{2\pi}\int_{-\infty}^{\infty}\phi_1(x,y,y,z,z,k)e^{-ickt}dk\right]$$

This allows imaging device 100 to visualize, with high accuracy, the three-dimensional structure of each scatterer included in an object in a region according to the equation in which the scattering phenomenon is concretely expressed based on the multiple scattering theory.

For example, the measurement data is expressed by

[Math. 118]

$$\Phi_{ij}$$
$$i,j=1,2$$

Here, $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions.

Information processing circuit 103 may derive $a_1$ from which the effects of multiple scattering have been removed, using

[Math. 119]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k) \Phi_{21}(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$- \frac{1}{(2\pi)^2} \iiint \iint \Phi_{11}(k_{xa}, k_{y_1}, -k_{\eta_2}, k) \Phi_{22}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{11}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{11}(k_{xa}, k_{y_1}, -k_{\eta_2}, k) \Phi_{21}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{12}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3} .$$

Here, $\delta$ denotes a delta function, $k_{xa}$, $k_{xb}$, and $k_{xc}$ are variables corresponding to $k_x$, $k_\eta$ and $k_{\eta 2}$ are variables corresponding to $k_{y1}$, and $k_{\eta 3}$ is a variable corresponding to $k_{y2}$.

Information processing circuit 103 may then use, as a scattering field function,

[Math. 120]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

to derive, as an imaging function,

[Math. 121]

$$\rho(\mathrm{x, y, z}) = \underset{t \to 0}{Lim} \left[ \frac{1}{2\pi} \int_{-\infty}^{\infty} \phi_1(x, y, y, z, z, k) e^{-ickt} dk \right]$$

This allows imaging device 100 to visualize, with high accuracy, the three-dimensional structure of each scatterer included in an object in a region according to the equation in which the scattering phenomenon is concretely expressed based on the multiple scattering theory and the measurement data is properly associated.

For example, the measurement data is expressed by

[Math. 122]

$$\Phi_{ij}$$
$$i, j = 1, 2$$

Here, $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions.

Information processing circuit 103 may then derive $a_1$ from which the effects of multiple scattering have been removed, using

[Math. 123]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k) \Phi_{21}(k_{x_b}, -k_\eta, k_{y_2}, k) \delta(k_{xa} + k_{xb} - k_x)$$

$$\cdot \delta\left( s_2(k_{xa}, k_{y_1}, k_\eta) - s_1(k_{xb}, -k_\eta, k_{y_2}) \right) dk_{x_a} dk_{x_b} dk_\eta$$

$$- \frac{1}{(2\pi)^2} \iiint \iint \Big\{ \Phi_{11}(k_{xa}, k_{y_1}, -k_{\eta_2}, k) \Phi_{22}(k_{xb}, k_{\eta_2}, -k_{\eta_3}, k) \Phi_{11}(k_{xc}, k_{\eta_3}, k_{y_2}, k)$$

$$+ \Phi_{12}(k_{xa}, k_{y_1}, -k_{\eta_2}, k) \Phi_{11}(k_{xb}, k_{\eta_2}, -k_{\eta_3}, k) \Phi_{21}(k_{xc}, k_{\eta_3}, k_{y_2}, k)$$

$$+ \Phi_{11}(k_{xa}, k_{y_1}, -k_{\eta_2}, k) \Phi_{21}(k_{xb}, k_{\eta_2}, -k_{\eta_3}, k) \Phi_{21}(k_{xc}, k_{\eta_3}, k_{y_2}, k)$$

$$+ \Phi_{12}(k_{xa}, k_{y_1}, -k_{\eta_2}, k) \Phi_{12}(k_{xb}, k_{\eta_2}, -k_{\eta_3}, k) \Phi_{11}(k_{xc}, k_{\eta_3}, k_{y_2}, k) \Big\}$$

$$\cdot \delta(k_{xa} + k_{xb} + k_{xc} - k_x) \delta\left( s_1(k_{xb}, k_{\eta_2}, -k_{\eta_3}) - s_2(k_{xa}, k_{y_1}, -k_{\eta_2}) \right)$$

$$\cdot \delta\left( s_2(k_{xb}, k_{\eta_2}, -k_{\eta_3}) - s_1(k_{xc}, k_{\eta_3}, k_{y_2}) \right) \; dk_{xa} dk_{xb} dk_{xc} dk_{\eta_2} dk_{\eta_3}$$

Here, $\delta$ denotes a delta function, $k_{xa}$, $k_{xb}$, and $k_{xc}$ are variables corresponding to $k_x$, $k_\eta$ and $k_{\eta 2}$ are variables corresponding to $k_{y1}$, and $k_{\eta 3}$ is a variable corresponding to $k_{y2}$.

Information processing circuit 103 may then use, as a scattering field function,

[Math. 124]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

to derive, as an imaging function,

[Math. 125]

$$\rho(\mathrm{x}, \mathrm{y}, \mathrm{z}) = \lim_{t \to 0} \left[ \frac{1}{2\pi} \int_{-\infty}^{\infty} \phi_1(x, y, y, z, z, k) e^{-ickt} dk \right]$$

This allows imaging device 100 to visualize, with high accuracy, the three-dimensional structure of a scatterer included in an object in a region according to the equations rearranged based on the multiple scattering theory.

For example, the scattering field function may be defined as a function in which the transmission position of the wave and the reception position of the wave are input and a value indicating the wave at the reception position is output. The imaging function may be defined based on the value output from the scattering field function by inputting the position of an imaging target as the transmission position and the reception position to the scattering field function. Information processing circuit 103 may use the measurement data as a boundary condition to derive a scattering field function, and may use the scattering field function to derive an imaging function.

For example, other structural elements, equations, expressions, variables, and the like described in the present embodiment may be appropriately applied to transmitters 101, receivers 102, information processing circuit 103, the scattering field functions, the imaging functions and the like described in the basic configuration and basic operation above.

The scattering field functions, imaging functions, and the like indicated in the present embodiment may be applied with modifications as appropriate. For example, other formulas that include substantially the same content as the formulas described above may be used, and other formulas that are derived based on the theories described above may be used.

In the description above, the expression of the fundamental solution and the expression of the analytical solution may be read interchangeably.

FIG. 13 is a block diagram illustrating a specific configuration of imaging device 100 illustrated in FIG. 9.

Transmitters 101 and receivers 102 in imaging device 100 illustrated in FIG. 9 may be included in multistatic antenna array 1008. Information processing circuit 103 in imaging device 100 illustrated in FIG. 9 may correspond to one or more of the structural elements illustrated in FIG. 13. Specifically, for example, information processing circuit 103 may correspond to signal processing calculator 1005. Display 104 illustrated in FIG. 9 may correspond to signal monitoring device 1006.

The microwave signal used in imaging device 100 is a pseudorandom time-series signal (pseudo noise code (PN code)) with a frequency component of DC to 20 GHz. This signal is output from FPGA board 1002 for PN code generation. More specifically, the signal is classified into two types. One type of the signal (local oscillator signal (LO signal)) is transmitted to an RF detection circuit (RF detection board 1007) via a delay circuit (digital control board 1003).

The other type of the signal (radio frequency (RF) signal) is transmitted to and radiated from a transmitting microwave UWB antenna of multistatic antenna array 1008. The scattered microwave signal is received by the UWB antenna for reception of multistatic antenna array 1008 and transmitted to the RF detection circuit (RF detection board 1007). Here, the transmitted and received signals pass through an antenna element selection switch (UWB antenna RF switch 1004).

The signal to be delayed (LO signal) is delayed by $1/2^n$ times (n is an integer greater than 2) the amount of time it takes for the PN code value to change. The detected signal undergoes analog-to-digital (AD) conversion performed by signal processing calculator 1005 and is stored as an intermediate frequency (IF) signal. Moreover, information indicating the detected signal may be displayed on signal monitoring device 1006.

The timing of these series of operations is controlled by the microcontroller in digital control board 1003 in synchronization with the signal (distance signal or free run signal) from distance meter 1001. For example, the microprocessor in digital control board 1003 transmits a switch signal, a PN code sweep trigger, and the like.

Moreover, signal processing calculator 1005 performs three-dimensional reconstruction using the stored signals after the AD conversion, and displays a three-dimensional image. Signal processing calculator 1005 may also perform signal calibration. Signal processing calculator 1005 may also perform raw wave display. For example, signal processing calculator 1005 may store a three-dimensional image, and the like in memory 1009.

The configuration illustrated in FIG. 13 is an example, and the configuration of imaging device 100 is not limited to the configuration illustrated in FIG. 13. The configuration illustrated in FIG. 13 may be partially omitted or changed.

(Supplemental information)

Although the aspects of the imaging device have been described above based on the embodiment, the aspects of the imaging device are not limited to such an embodiment. Various modifications conceivable by those skilled in the art may be made to the embodiment, and a plurality of structural elements in the embodiment may be combined arbitrarily. For example, a process executed by a specific structural element in the embodiment may be executed by a different structural element instead. Moreover, the processing order of the processes may be changed, and the processes may be performed in parallel.

An imaging method including steps performed by the structural elements included in the imaging device may be executed by an arbitrary device or system. For example, part or all of the imaging method may be executed by a computer including, for example, a processor, memory, and an input and output circuit. In such cases, the imaging method may be executed by a program for causing a computer to execute the imaging method being executed by the computer.

The program may be recorded on a non-transitory computer-readable recording medium.

Each of the structural elements of the imaging device may be configured in the form of dedicated hardware, in the form of general-purpose hardware that executes the above program or the like, or any combination thereof. Moreover, the general-purpose hardware may be configured in the form of memory on which a program is recorded and a general-purpose processor that reads the program from the memory and executes the program. Here, the memory may be semiconductor memory or a hard disk, and the general-purpose processor may be a central processing unit (CPU) or the like.

The dedicated hardware may be configured in the form of memory and a dedicated processor or the like. For example, the dedicated processor may reference the memory for recording the measurement data and execute the imaging method described above.

Each of the structural elements of the imaging device may be an electrical circuit. The electrical circuits may collectively form a single electrical circuit and, alternatively, may form individual electrical circuits. These electrical circuits may correspond to dedicated hardware or general-purpose hardware that executes the above program, for example.

[Industrial Applicability]

One aspect of the present disclosure is useful for an imaging device that uses waves to visualize the three-dimensional structure of each scatterer in an object in a region, and is applicable to, for example, geophysical exploration or medical diagnosis.

[Reference Signs List]

| | |
|---|---|
| 100 | imaging device |
| 101 | transmitter |
| 102 | receiver |
| 103 | information processing circuit |
| 104 | display |
| 1001 | distance meter |
| 1002 | FPGA board for PN code generation |
| 1003 | digital control board |
| 1004 | UWB antenna RF switch |
| 1005 | signal processing calculator |
| 1006 | signal monitoring device |
| 1007 | RF detection board |
| 1008 | multistatic antenna array |
| 1009 | memory |

**Claims**

1. An imaging device comprising:

   a plurality of transmitters (101) which are disposed on both sides of a region to be measured, and each of which transmits a wave to the region;
   a plurality of receivers (102) each of which receives the wave from the region; and
   an information processing circuit (103) which derives an imaging function corresponding to a scattering field function related to scattering of the wave according to a correspondence between (i) measurement data obtained by the plurality of transmitters (101) and the plurality of receivers (102) and (ii) a composition of a plurality of functions, and visualizes a three-dimensional structure of a scatterer included in an object in the region, using the imaging function,
   **characterized in that**
   the plurality of receivers (102) are disposed on the both sides, and
   the composition of the plurality of functions are a composition of a plurality of functions related to multiple first-order scattering forming multiple scattering.

2. The imaging device according to claim 1,

   wherein the information processing circuit (103) derives the imaging function corresponding to the scattering field function by solving an equation of the scattering field function based on the measurement data,
   the scattering field function is expressed by

   [Math. 1]

   $$\phi(x, y_1, y_2, z_1, z_2, k) = \iint_D \frac{e^{ik\rho_1}}{\rho_1} \frac{e^{ik\rho_2}}{\rho_2} \varepsilon(\xi, \eta, \zeta) d\xi d\eta d\zeta$$

   where $(x, y_1, z_1)$ denotes a transmission position of the wave, $(x, y_2, z_2)$ denotes a reception position of the wave, k denotes a wave number of the wave, D denotes the region, $(\xi, \eta, \zeta)$ corresponds to a reflection position of the wave, $\varepsilon$ corresponds to an unknown reflectance at the reflection position, $\rho_1$ denotes a distance from the transmission position to the reflection position, and $\rho_2$ denotes a distance from the reflection position to the reception position, and
   the equation is expressed by

   [Math. 2]

   $$\left[ \frac{1}{4}\Delta_5^{\ 2} - \frac{1}{c^2}\partial_t^{\ 2}\partial_x^{\ 2} - (\partial_{y_1}^{\ 2} + \partial_{z_1}^{\ 2})(\partial_{y_2}^{\ 2} + \partial_{z_2}^{\ 2}) \right]\phi = 0$$

   where $\Delta_5$ denotes a Laplace operator related to $x, y_1, y_2, z_1$, and $z_2$, c denotes a propagation velocity of the wave, and t denotes a time taken from transmission of the wave to reception of the wave.

3. The imaging device according to claim 2,

   wherein the information processing circuit (103) derives an analytical solution of the equation based on the measurement data, and derives the imaging function based on the analytical solution, and
   the analytical solution is expressed by

   [Math. 3]

   $$\phi(x, y_1, y_2, z_1, z_2, k)$$
   $$= \frac{1}{(2\pi)^3} \int_{-\infty}^{\infty}\int_{-\infty}^{\infty}\int_{-\infty}^{\infty} e^{-i(k_x x + k_{y_1} y_1 + k_{y_2} y_2)} a(k_x, k_{y_1}, k_{y_2}, k) e^{is_1(k_x, k_{y_1}, k_{y_2})z_1} e^{is_2(k_x, k_{y_1}, k_{y_2})z_2} dk_x dk_{y_1} dk_{y_2}$$

where $k_x$, $k_{y1}$, and $k_{y2}$ denote wave numbers related to x, $y_1$, and $y_2$ of the scattering field function, $a(k_x, k_{y1}, k_{y2}, k)$ denotes a function based on $k_x$, $k_{y1}$, $k_{y2}$, and k, $s_1(k_x, k_{y1}, k_{y2})$ denotes a function based on $k_x$, $k_{y1}$, and $k_{y2}$, and $s_2(k_x, k_{y1}, k_{y2})$ denotes a function based on $k_x$, $k_{y1}$, and $k_{y2}$.

4. The imaging device according to claim 3,

wherein the information processing circuit (103) derives the imaging function based on the analytical solution, and the imaging function is expressed by

[Math. 4]

$$\rho(x, y, z) = \lim_{t \to 0} \left[ \frac{1}{2\pi} \int_{-\infty}^{\infty} \phi(x, y, y, z, z, k) e^{-ickt} dk \right]$$

where (x, y, z) denotes a position of an imaging target.

5. The imaging device according to claim 1,

wherein the multiple scattering is expressed using four functions of a spectral space corresponding to four fundamental solutions of an equation of the scattering field function,
a relation between the measurement data and the four functions is expressed by a non-linear integral equation, and
the information processing circuit (103):

derives the four functions from the measurement data according to the non-linear integral equation; and
derives the imaging function corresponding to the scattering field function, using the four functions.

6. The imaging device according to claim 4,

wherein the measurement data is expressed by

[Math. 5]

$$\Phi_{ij}$$
$$i, j = 1, 2$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions,
the information processing circuit (103) uses

[Math. 6]

$$\Phi_{ij}\Big|_{i,j=1,2} = a_{m_1}\Big|_{m_1=1,2,3,4}$$
$$+ \frac{1}{(2\pi)^1}\int f_2\Big[a_{m_1}a_{m_2}\Big]_{m_1,m_2=1,2,3,4}d\Bbbk_{f_2}$$
$$+ \frac{1}{(2\pi)^2}\int f_3\Big[a_{m_1}a_{m_2}a_{m_3}\Big]_{m_1,m_2,m_3=1,2,3,4}d\Bbbk_{f_3}$$
$$+\cdots$$
$$+ \frac{1}{(2\pi)^{L-1}}\int f_L\Big[a_{m_1}a_{m_2}a_{m_3}\cdots a_{m_L}\Big]_{m_1,m_2,m_3,\cdots,m_L=1,2,3,4}d\Bbbk_{f_L}$$

to derive

[Math. 7]

$$a_{m_1}\Big|_{m_1=1,2,3,4}$$

from which an effect of multiple scattering has been removed,
where $a_1$, $a_2$, $a_3$, and $a_4$ expressed by $a_{m1}$, $a_{m2}$, $a_{m3}$, ..., $a_{mL}$ correspond to $a(k_x, k_{y1}, k_{y2}, k)$ in the analytical solution related to the four scattering states, $f_2$, $f_3$, ..., $f_L$ denote products of 2, 3, ..., L variables in square brackets corresponding to 2, 3, ..., L scattering applied from transmission of the wave to reception of the wave, respectively,

[Math. 8]

$$\Bbbk_{f_2}, \Bbbk_{f_3}, \cdots, \Bbbk_{f_L}$$

denote wave number vectors related to coordinate variables included in 2, 3, ..., L variables in square brackets of $f_2$, $f_3$, ..., $f_L$, and
the information processing circuit (103) uses, as the scattering field function,

[Math. 9]

$$\phi_{m_1}(x, y_1, y_2, z_1, z_2, k)$$
$$= \frac{1}{(2\pi)^3}\int_{-\infty}^{\infty}\int_{-\infty}^{\infty}\int_{-\infty}^{\infty} e^{-i(k_x x + k_{y_1}y_1 + k_{y_2}y_2)} a_{m_1}(k_x, k_{y_1}, k_{y_2}, k)$$
$$\cdot e^{is_1(k_x,k_{y_1},k_{y_2})z_1} e^{is_2(k_x,k_{y_1},k_{y_2})z_2} dk_x dk_{y_1} dk_{y_2}$$

$$m_1 = 1, 2, 3, 4$$

to derive, as the imaging function,

[Math. 10]

$$\rho(x,\ y,\ z) = \underset{t \to 0}{Lim}\left[\frac{1}{2\pi}\int_{-\infty}^{\infty}\phi_{m_1}(x,y,y,z,z,k)e^{-ickt}dk\right]$$

7. The imaging device according to claim 4,

wherein the measurement data is expressed by

[Math. 11]

$$\Phi_{ij} \atop i,j=1,2$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions,
the information processing circuit (103) uses

[Math. 12]

$$a_m \atop m=1,2,3,4 = \Phi_{ij} \atop ij=1,2$$

$$-\frac{1}{(2\pi)^1}\int g_2\left[\Phi_{m_1n_1}\Phi_{m_2n_2}\right]d\Bbbk_{g_2} \atop {m_1,n_1=1,2 \atop m_2,n_2=1,2}$$

$$-\frac{1}{(2\pi)^2}\int g_3\left[\Phi_{m_1n_1}\Phi_{m_2n_2}\Phi_{m_3n_3}\right]d\Bbbk_{g_3} \atop {m_1,n_1=1,2 \atop m_2,n_2=1,2 \atop m_3,n_3=1,2}$$

$$-\cdots$$

$$-\frac{1}{(2\pi)^{L-1}}\int g_L\left[\Phi_{m_1n_1}\Phi_{m_2n_2}\Phi_{m_3n_3}\cdots\Phi_{m_Ln_L}\right]d\Bbbk_{g_L} \atop {m_1,n_1=1,2 \atop m_2,n_2=1,2 \atop m_3,n_3=1,2 \atop \cdots \atop m_L,n_L=1,2}$$

to derive

[Math. 13]

$$a_m \atop m=1,2,3,4$$

from which an effect of multiple scattering has been removed,
where $a_1$, $a_2$, $a_3$, and $a_4$ expressed by $a_m$ correspond to $a(k_x, k_{y1}, k_{y2}, k)$ in the analytical solution related to the four scattering states, $\Phi_{11}$, $\Phi_{12}$, $\Phi_{21}$, and $\Phi_{22}$ expressed by $\Phi_{m1n1}$, $\Phi_{m2n2}$, $\Phi_{m3n3}$, ... , $\Phi_{mLnL}$ correspond to the measurement data related to the four scattering states, $g_2$, $g_3$, ..., $g_L$ denote products of 2, 3, ..., L variables in square brackets corresponding to 2, 3, ..., L scattering applied from transmission of the wave to reception of the wave, respectively,

[Math. 14]

$$\mathbb{k}_{g_2}, \mathbb{k}_{g_3}, \cdots, \mathbb{k}_{g_L}$$

denote wave number vectors related to coordinate variables included in 2, 3, ..., L variables in square brackets of $g_2$, $g_3$, ..., $g_L$, and
the information processing circuit (103) uses, as the scattering field function,

[Math. 15]

$$\phi_m(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_m(k_x, k_{y_1}, k_{y_2}, k)$$

$$\cdot e^{is_1(k_x, k_{y_1}, k_{y_2}) z_1} e^{is_2(k_x, k_{y_1}, k_{y_2}) z_2} dk_x dk_{y_1} dk_{y_2}$$

$$m = 1, 2, 3, 4$$

to derive, as the imaging function,

[Math. 16]

$$\rho(x, y, z) = \lim_{t \to 0} \left[ \frac{1}{2\pi} \int_{-\infty}^{\infty} \phi_m(x, y, y, z, z, k) e^{-ickt} dk \right]$$

8. The imaging device according to claim 4,

wherein the measurement data is expressed by

[Math. 17]

$$\Phi_{ij}$$
$$i, j = 1, 2$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions,
the information processing circuit (103) uses

[Math. 18]

$$\Phi_{11}(k_x, k_{y_1}, k_{y_2}, k)$$

$$= a_1(k_x, k_{y_1}, k_{y_2}, k)$$

$$+ \frac{1}{(2\pi)} \iiint a_1(k_{x_a}, k_{y_1}, k_\eta, k) a_4(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$+ \frac{1}{(2\pi)^2} \iiint \iint a_1(k_{xa}, k_{y_1}, -k_{\eta_2}, k) a_2(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_1(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_1(k_{xa}, k_{y_1}, -k_{\eta_2}, k) a_4(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_3(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ O(a^4)$$

to derive $a_1$ from which an effect of multiple scattering has been removed,
where $\delta$ denotes a delta function, $k_{xa}$, $k_{xb}$, and $k_{xc}$ are variables corresponding to $k_x$, $k_\eta$ and $k_{\eta2}$ are variables corresponding to $k_{y1}$, $k_{\eta3}$ is a variable corresponding to $k_{y2}$, and $O(a^4)$ is a term corresponding to a fourth or higher order scattering, and
the information processing circuit (103) uses, as the scattering field function,

[Math. 19]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2})z_1} e^{i s_2(k_x, k_{y_1}, k_{y_2})z_2} dk_x dk_{y_1} dk_{y_2}$$

to derive, as the imaging function,

[Math. 20]

$$\rho(\mathrm{x, y, z}) = \underset{t \to 0}{Lim} \left[ \frac{1}{2\pi} \int_{-\infty}^{\infty} \phi_1(x, y, y, z, z, k) e^{-ickt} dk \right]$$

.

9. The imaging device according to claim 4,

   wherein the measurement data is expressed by

   [Math. 21]

   $$\Phi_{ij} \\ {\scriptstyle i, j=1, 2}$$

   where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions,
   the information processing circuit (103) uses

[Math. 22]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k) \Phi_{21}(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$- \frac{1}{(2\pi)^2} \iiint \iint \Phi_{11}(k_{xa}, k_{y_1}, -k_{\eta_2}, k) \Phi_{22}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{11}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{11}(k_{xa}, k_{y_1}, -k_{\eta_2}, k) \Phi_{21}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{12}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

to derive $a_1$ from which an effect of multiple scattering has been removed,
where $\delta$ denotes a delta function, $k_{xa}$, $k_{xb}$, and $k_{xc}$ are variables corresponding to $k_x$, $k_\eta$ and $k_{\eta2}$ are variables corresponding to $k_{y1}$, $k_{\eta3}$ is a variable corresponding to $k_{y2}$, and
the information processing circuit (103) uses, as the scattering field function,

[Math. 23]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y1} y_1 + k_{y2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

to derive, as the imaging function,

[Math. 24]

$$\rho(\mathrm{x},\, \mathrm{y},\, \mathrm{z}) = \underset{t \to 0}{Lim}\left[ \frac{1}{2\pi} \int_{-\infty}^{\infty} \phi_1(x,y,y,z,z,k)e^{-ickt}dk \right]$$

**10.** The imaging device according to claim 4, wherein the

measurement data is expressed by

[Math. 25]

$$\underset{i,j=1,2}{\Phi_{ij}}$$

where $\Phi_{11}$, $\Phi_{12}$, $\Phi_{21}$, and $\Phi_{22}$ expressed by $\Phi_{ij}$ correspond to the measurement data related to four scattering states that include two forward scattering corresponding to two directions and two back scattering corresponding to two directions,
the information processing circuit (103) uses

[Math. 26]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k)\Phi_{21}(k_{x_b}, -k_\eta, k_{y_2}, k)\delta(k_{xa} + k_{xb} - k_x)$$

$$\cdot \delta\left( s_2(k_{xa}, k_{y_1}, k_\eta) - s_1(k_{xb}, -k_\eta, k_{y_2}) \right)dk_{x_a}dk_{x_b}dk_\eta$$

$$- \frac{1}{(2\pi)^2} \iiint \iint \left\{ \Phi_{11}(k_{xa}, k_{y_1}, -k_{\eta_2}, k)\Phi_{22}(k_{xb}, k_{\eta_2}, -k_{\eta_3}, k)\Phi_{11}(k_{xc}, k_{\eta_3}, k_{y_2}, k) \right.$$

$$+ \Phi_{12}(k_{xa}, k_{y_1}, -k_{\eta_2}, k)\Phi_{11}(k_{xb}, k_{\eta_2}, -k_{\eta_3}, k)\Phi_{21}(k_{xc}, k_{\eta_3}, k_{y_2}, k)$$

$$+ \Phi_{11}(k_{xa}, k_{y_1}, -k_{\eta_2}, k)\Phi_{21}(k_{xb}, k_{\eta_2}, -k_{\eta_3}, k)\Phi_{21}(k_{xc}, k_{\eta_3}, k_{y_2}, k)$$

$$\left. + \Phi_{12}(k_{xa}, k_{y_1}, -k_{\eta_2}, k)\Phi_{12}(k_{xb}, k_{\eta_2}, -k_{\eta_3}, k)\Phi_{11}(k_{xc}, k_{\eta_3}, k_{y_2}, k) \right\}$$

$$\cdot \delta(k_{xa} + k_{xb} + k_{xc} - k_x)\delta\left( s_1(k_{xb}, k_{\eta_2}, -k_{\eta_3}) - s_2(k_{xa}, k_{y_1}, -k_{\eta_2}) \right)$$

$$\cdot \delta\left( s_2(k_{xb}, k_{\eta_2}, -k_{\eta_3}) - s_1(k_{xc}, k_{\eta_3}, k_{y_2}) \right) \quad dk_{xa}dk_{xb}dk_{xc}dk_{\eta_2}dk_{\eta_3}$$

to derive $a_1$ from which an effect of multiple scattering has been removed,
where $\delta$ denotes a delta function, $k_{xa}$, $k_{xb}$, and $k_{xc}$ are variables corresponding to $k_x$, $k_\eta$ and $k_{\eta 2}$ are variables corresponding to $k_{y1}$, $k_{\eta 3}$ is a variable corresponding to $k_{y2}$, and
the information processing circuit (103) uses, as the scattering field function,

[Math. 27]

$$\phi_1(x, y_1, y_2, z_1, z_2, k)$$

$$= \frac{1}{(2\pi)^3} \int\limits_{-\infty}^{\infty}\int\limits_{-\infty}^{\infty}\int\limits_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

to derive, as the imaging function,

[Math. 28]

$$\rho(x, y, z) = \lim_{t \to 0}\left[ \frac{1}{2\pi} \int\limits_{-\infty}^{\infty} \phi_1(x, y, y, z, z, k) e^{-ickt} dk \right]$$

**11.** An imaging method comprising:

Transmitting (S101), by each of a plurality of transmitters (101) disposed on both sides of the region, a wave to a region to be measured;
receiving (S102), by each of a plurality of receivers (102), the wave from the region; and
deriving (S103) an imaging function corresponding to a scattering field function related to scattering of the wave according to a correspondence between (i) measurement data obtained by the plurality of transmitters (101) and the plurality of receivers (102) and a composition of a plurality of functions, and visualizing a three-dimensional structure of a scatterer included in an object in the region, using the imaging function,
**characterized in that**
the plurality of receivers (102) are disposed on the both sides, and
the composition of the plurality of functions are a composition of a plurality of functions related to multiple first-order scattering forming multiple scattering.

**Patentansprüche**

**1.** Bildgebungsvorrichtung, umfassend:

eine Vielzahl von Sendern (101), die auf beiden Seiten einer zu messenden Region angeordnet sind, und wobei jeder davon eine Welle auf die Region aussendet;
eine Vielzahl von Empfängern (102), von welchen jeder die Welle von der Region empfängt; und
eine Informationsverarbeitungsschaltung (103), die eine Bildfunktion entsprechend einer Streufeldfunktion ableitet, die mit der Streuung der Welle in Relation steht, gemäß einer Entsprechung zwischen (i) Messdaten, die von der Vielzahl von Sendern (101) und der Vielzahl von Empfängern (102) erhalten werden, und (ii) einer Zusammensetzung einer Vielzahl von Funktionen, und eine dreidimensionale Struktur eines Streuers, der in einem Objekt in der Region enthalten ist, unter Verwendung der Bildgebungsfunktion visualisiert,
**dadurch gekennzeichnet, dass**
die Vielzahl von Empfängern (102) auf beiden Seiten angeordnet ist, und
die Zusammensetzung der Vielzahl von Funktionen eine Zusammensetzung einer Vielzahl von Funktionen in Relation zu mehreren Streuungen erster Ordnung, die eine mehrfache Streuung bilden, ist.

**2.** Bildgebungsvorrichtung nach Anspruch 1,

wobei die Informationsverarbeitungsschaltung (103) die Bildgebungsfunktion entsprechend der Streufeldfunktion ableitet, indem sie eine Gleichung der Streufeldfunktion auf Grundlage der Messdaten löst,
die Streufeldfunktion ausgedrückt wird durch

[Math. 1]

$$\phi(x, y_1, y_2, z_1, z_2, k) = \iint_D \frac{e^{ik\rho_1}}{\rho_1} \frac{e^{ik\rho_2}}{\rho_2} \varepsilon(\xi, \eta, \zeta) d\xi d\eta d\zeta$$

wobei $(x, y_1, z_1)$ eine Sendeposition der Welle bezeichnet, $(x, y_2, z_2)$ eine Empfangsposition der Welle bezeichnet, k eine Wellenzahl der Welle bezeichnet, D die Region bezeichnet, $(\xi, \eta, \zeta)$ einer Reflexionsposition der Welle entspricht, $\varepsilon$ einem unbekannten Reflexionsgrad an der Reflexionsposition entspricht, $\rho_1$ einen Abstand von der Sendeposition zu der Reflexionsposition bezeichnet, und $\rho_2$ einen Abstand von der Reflexionsposition zu der Empfangsposition bezeichnet, und
die Gleichung ausgedrückt wird durch

[Math. 2]

$$\left[ \frac{1}{4} \Delta_5^2 - \frac{1}{c^2} \partial_t^2 \partial_x^2 - (\partial_{y_1}^2 + \partial_{z_1}^2)(\partial_{y_2}^2 + \partial_{z_2}^2) \right] \phi = 0$$

wobei $\Delta_5$ einen Laplace-Operator in Relation mit $x, y_1, y_2, z_1$ und $z_2$ bezeichnet, c eine Ausbreitungsgeschwin- digkeit der Welle bezeichnet, und t eine Zeit von dem Senden der Welle bis zu dem Empfang der Welle bezeichnet.

3. Bildgebungsvorrichtung nach Anspruch 2,

wobei die Informationsverarbeitungsschaltung (103) eine analytische Lösung der Gleichung auf Grundlage der Messdaten ableitet, und die Bildgebungsfunktion auf Grundlage der analytischen Lösung ableitet, und
die analytische Lösung ausgedrückt wird durch

[Math. 3]

$$\phi(x, y_1, y_2, z_1, z_2, k)$$
$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a(k_x, k_{y_1}, k_{y_2}, k) e^{is_1(k_x, k_{y_1}, k_{y_2})z_1} e^{is_2(k_x, k_{y_1}, k_{y_2})z_2} dk_x dk_{y_1} dk_{y_2}$$

wobei $k_x, k_{y1}$, und $k_{y2}$ Wellenzahlen in Relation zu $x, y_1$, und $y_2$ der Streufeldfunktion bezeichnen, $a(k_x, k_{y1}, k_{y2}, k)$ eine Funktion auf Grundlage von $k_x, k_{y1}, k_{y2}$ und k bezeichnet, $s_1(k_x, k_{y1}, k_{y2})$ eine Funktion auf Grundlage von $k_x$, $k_y$, und $k_{y2}$ bezeichnet, und $s_2(k_x, k_{y1}, k_{y2})$ eine Funktion auf Grundlage von $k_x, k_{y1}$ und $k_{y2}$ bezeichnet.

4. Bildgebungsvorrichtung nach Anspruch 3,

wobei die Informationsverarbeitungsschaltung (103) die Bildgebungsfunktion auf Grundlage der analytischen Lösung bezeichnet, und
die Bildgebungsfunktion ausgedrückt wird durch

[Math. 4]

$$\rho(x, y, z) = \lim_{t \to 0} \left[ \frac{1}{2\pi} \int_{-\infty}^{\infty} \phi(x, y, y, z, z, k) e^{-ickt} dk \right]$$

wobei $(x, y, z)$ eine Position eines Bildgebungsziels bezeichnet.

5. Bildgebungsvorrichtung nach Anspruch 1,

wobei die Mehrfachstreuung ausgedrückt wird unter Verwendung von vier Funktionen eines spektralen Raums entsprechend vier grundlegenden Lösungen einer Gleichung der Streufeldfunktion,

eine Relation zwischen den Messdaten und den vier Funktionen ausgedrückt wird durch eine nichtlineare Integralgleichung, und
die Informationsverarbeitungsschaltung (103):

die vier Funktionen aus den Messdaten gemäß der nichtlinearen Integralgleichung ableitet; und
die Bildgebungsfunktion entsprechend der Streufeldfunktion unter Verwendung der vier Funktionen ableitet.

6. Bildgebungsvorrichtung nach Anspruch 4,

wobei die Messdaten ausgedrückt werden durch

[Math. 5]

$$\Phi_{ij}\Big|_{i,j=1,2}$$

wobei $\Phi_{11}$, $\Phi_{12}$, $\Phi_{21}$, und $\Phi_{22}$, ausgedrückt durch $\Phi_{ij}$, den Messdaten in Relation zu vier Streuungszuständen entsprechen, welche zwei Vorwärts-Streuungen entsprechend zwei Richtungen und zwei Rückwärts-Streuungen entsprechend zwei Richtungen beinhalten,
die Informationsverarbeitungsschaltung (103)

[Math. 6]

$$\Phi_{ij}\Big|_{i,j=1,2} = a_{m_1}\Big|_{m_1=1,2,3,4}$$
$$+ \frac{1}{(2\pi)^1}\int f_2\Big[a_{m_1}a_{m_2}\Big]_{m_1,m_2=1,2,3,4}d\Bbbk_{f_2}$$
$$+ \frac{1}{(2\pi)^2}\int f_3\Big[a_{m_1}a_{m_2}a_{m_3}\Big]_{m_1,m_2,m_3=1,2,3,4}d\Bbbk_{f_3}$$
$$+ \cdots$$
$$+ \frac{1}{(2\pi)^{L-1}}\int f_L\Big[a_{m_1}a_{m_2}a_{m_3}\cdots a_{m_L}\Big]_{m_1,m_2,m_3,\cdots,m_L=1,2,3,4}d\Bbbk_{f_L}$$

verwendet, um

[Math. 7]

$$a_{m_1}\Big|_{m_1=1,2,3,4}$$

abzuleiten,
woraus ein Effekt der Mehrfachstreuung entfernt wurde,
wobei $a_1$, $a_2$, $a_3$ und $a_4$, ausgedrückt durch $a_{m1}$, $a_{m2}$, $a_{m3}$, ..., $a_{mL}$, $a(k_x, k_{y1}, k_{y2}, k)$ in der analytischen Lösung in Relation mit den vier Streuungszuständen entsprechen, $f_2$, $f_3$, ..., $f_L$ Produkte von 2, 3, ..., L Variablen in eckigen Klammern bezeichnen, die jeweils 2, 3, ..., L Streuungen entsprechen, die von dem Senden der Welle bis zu dem Empfang der Welle auftreten,

[Math. 8]

$$\Bbbk_{f_2}, \Bbbk_{f_3}, \cdots, \Bbbk_{f_L}$$

Wellenzahl-Vektoren bezeichnen, die mit Koordinaten-Variablen in Beziehung stehen, die in 2, 3, ..., L Variablen in eckigen Klammern von $f_2$, $f_3$, ..., $f_L$, entsprechen, und
die Informationsverarbeitungsschaltung (103) als die Streufeldfunktion

[Math. 9]

$$\phi_{m_1}(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_{m_1}(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$m_1 = 1, 2, 3, 4$$

verwendet, um als die Bildgebungsfunktion

[Math. 10]

$$\rho(x, y, z) = \lim_{t \to 0} \left[ \frac{1}{2\pi} \int_{-\infty}^{\infty} \phi_{m_1}(x, y, y, z, z, k) e^{-ickt} dk \right]$$

abzuleiten.

7. Bildgebungsvorrichtung nach Anspruch 4,

wobei die Messdaten ausgedrückt werden durch

[Math. 11]

$$\Phi_{ij} \atop {i,j=1,2}$$

wobei $\Phi_{11}$, $\Phi_{12}$, $\Phi_{21}$, und $\Phi_{22}$, ausgedrückt durch $\Phi_{ij}$, den Messdaten in Relation zu vier Streuungszuständen entsprechen, welche zwei Vorwärts-Streuungen entsprechend zwei Richtungen und zwei Rückwärts-Streuungen entsprechend zwei Richtungen beinhalten,
die Informationsverarbeitungsschaltung (103)

[Math. 12]

$$a_m \underset{m=1,2,3,4}{} = \Phi_{ij} \underset{ij=1,2}{}$$

$$-\frac{1}{(2\pi)^1} \int g_2 \left[ \Phi_{m_1 n_1} \Phi_{m_2 n_2} \right] d\Bbbk_{g_2}$$
$$\underset{\substack{m_1,n_1=1,2 \\ m_2,n_2=1,2}}{}$$

$$-\frac{1}{(2\pi)^2} \int g_3 \left[ \Phi_{m_1 n_1} \Phi_{m_2 n_2} \Phi_{m_3 n_3} \right] d\Bbbk_{g_3}$$
$$\underset{\substack{m_1,n_1=1,2 \\ m_2,n_2=1,2 \\ m_3,n_3=1,2}}{}$$

$$-\cdots$$

$$-\frac{1}{(2\pi)^{L-1}} \int g_L \left[ \Phi_{m_1 n_1} \Phi_{m_2 n_2} \Phi_{m_3 n_3} \cdots \Phi_{m_L n_L} \right] d\Bbbk_{g_L}$$
$$\underset{\substack{m_1,n_1=1,2 \\ m_2,n_2=1,2 \\ m_3,n_3=1,2 \\ \cdots \\ m_L,n_L=1,2}}{}$$

verwendet, um

[Math. 13]

$$a_m \underset{m=1,2,3,4}{}$$

abzuleiten,
woraus ein Effekt der Mehrfachstreuung entfernt wurde,
wobei $a_1$, $a_2$, $a_3$, und $a_4$, ausgedrückt durch $a_m$, $a(k_x, k_{y1}, k_{y2}, k)$ in der analytischen Lösung in Beziehung mit den vier Streuungs-Zuständen entsprechen, $\Phi_{11}$, $\Phi_{12}$, $\Phi_{21}$, und $\Phi_{22}$ , ausgedrückt durch $\Phi_{m1n1}$, $\Phi_{m2n2}$, $\Phi_{m3n3}$, ..., $\Phi_{mLnL}$ den Messdaten in Relation zu den vier Streuungs-Zuständen entsprechen, $g_2$, $g_3$, ..., $g_L$ Produkte von 2, 3, ..., L Variablen in eckigen Klammern bezeichnen, die jeweils 2, 3, ..., L Streuungen entsprechen, die von dem Senden der Welle bis zu dem Empfang der Welle auftreten,

[Math. 14]

$$\Bbbk_{g_2}, \Bbbk_{g_3}, \cdots, \Bbbk_{g_L}$$

Wellenzahl-Vektoren bezeichnen, die mit Koordinaten-Variablen in Beziehung stehen, die in 2, 3, ..., L Variablen in eckigen Klammern von $g_2$, $g_3$, ..., $g_L$ beinhaltet sind, und
die Informationsverarbeitungsschaltung (103) als die Streufeldfunktion

[Math. 15]

$$\phi_m(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_m(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$m = 1, 2, 3, 4$$

verwendet, um als die Bildgebungsfunktion

[Math. 16]

$$\rho(\mathrm{x, y, z}) = \underset{t \to 0}{Lim} \left[ \frac{1}{2\pi} \int_{-\infty}^{\infty} \phi_m(x, y, y, z, z, k) e^{-ickt} dk \right]$$

abzuleiten.

8. Bildgebungsvorrichtung nach Anspruch 4,

wobei die Messdaten ausgedrückt werden durch

[Math. 17]

$$\Phi_{ij}$$
$$_{i,j=1,2}$$

wobei $\Phi_{11}$, $\Phi_{12}$, $\Phi_{21}$, und $\Phi_{22}$, ausgedrückt durch $\Phi_{ij}$, den Messdaten in Relation zu vier Streuungszuständen entsprechen, welche zwei Vorwärts-Streuungen entsprechend zwei Richtungen und zwei Rückwärts-Streuungen entsprechend zwei Richtungen beinhalten,
die Informationsverarbeitungsschaltung (103)

[Math. 18]

$$\Phi_{11}(k_x, k_{y_1}, k_{y_2}, k)$$

$$= a_1(k_x, k_{y_1}, k_{y_2}, k)$$

$$+ \frac{1}{(2\pi)} \iiint a_1(k_{x_a}, k_{y_1}, k_\eta, k) a_4(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$+ \frac{1}{(2\pi)^2} \iiint \iint a_1(k_{xa}, k_{y_1}, -k_{\eta_2}, k) a_2(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_1(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_1(k_{xa}, k_{y_1}, -k_{\eta_2}, k) a_4(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_3(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ O(a^4)$$

um $a_1$ abzuleiten, woraus ein Effekt der Mehrfachstreuung entfernt wurde,
wobei $\delta$ eine Delta-Funktion bezeichnet, $k_{xa}$, $k_{xb}$, und $k_{xc}$ Variablen sind, die $k_x$ entsprechen, $k_\eta$ und $k_{\eta 2}$ Variablen sind, die $k_{y1}$ entsprechen, $k_{\eta 3}$ eine Variable ist, die $k_{y2}$ entspricht, und $O(a^4)$ ein Term ist, der einer Streuung vierter oder höherer Ordnung entspricht, und
die Informationsverarbeitungsschaltung (103) als die Streufeldfunktion

[Math. 19]

$$\phi_1(x, y_1, y_2, z_1, z_2, k)$$

$$= \frac{1}{(2\pi)^3} \int\limits_{-\infty}^{\infty} \int\limits_{-\infty}^{\infty} \int\limits_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

verwendet, um als die Bildgebungsfunktion

[Math. 20]

$$\rho(x, y, z) = \underset{t \to 0}{Lim} \left[ \frac{1}{2\pi} \int\limits_{-\infty}^{\infty} \phi_1(x, y, y, z, z, k) e^{-ickt} dk \right]$$

abzuleiten.

9. Bildgebungsvorrichtung nach Anspruch 4,

wobei die Messdaten ausgedrückt werden durch

[Math. 21]

$$\Phi_{ij}$$
$$i, j = 1, 2$$

wobei $\Phi_{11}$, $\Phi_{12}$, $\Phi_{21}$, und $\Phi_{22}$, ausgedrückt durch $\Phi_{ij}$, den Messdaten in Relation mit vier Streuungszuständen entsprechen, welche zwei Vorwärts-Streuungen entsprechend zwei Richtungen und zwei Rückwärts-Streuungen entsprechend zwei Richtungen beinhalten,
die Informationsverarbeitungsschaltung (103)

[Math. 22]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k) \Phi_{21}(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$- \frac{1}{(2\pi)^2} \iiint \iint \Phi_{11}(k_{xa}, k_{y_1}, -k_{\eta_2}, k) \Phi_{22}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{11}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{11}(k_{xa}, k_{y_1}, -k_{\eta_2}, k) \Phi_{21}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{12}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

verwendet, um $a_1$ abzuleiten, woraus ein Effekt der Mehrfachstreuung entfernt wurde, wobei $\delta$ eine Delta-Funktion bezeichnet, $k_{xa}$, $k_{xb}$, und $k_{xc}$ Variablen sind, die $k_x$ entsprechen, $k_\eta$ und $k_{\eta 2}$ Variablen sind, die $k_{y1}$ entsprechen, $k_{\eta 3}$ eine Variable ist, die $k_{y2}$ entspricht, und die Informationsverarbeitungsschaltung (103) als die Streufeldfunktion

[Math. 23]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{is_1(k_x, k_{y_1}, k_{y_2}) z_1} e^{is_2(k_x, k_{y_1}, k_{y_2}) z_2} dk_x dk_{y_1} dk_{y_2}$$

verwendet, um als die Bildgebungsfunktion

[Math. 24]

$$\rho(\mathrm{x},\, \mathrm{y},\, \mathrm{z}) = \operatorname*{Lim}_{t \to 0}\left[ \frac{1}{2\pi} \int_{-\infty}^{\infty} \phi_1(x,y,y,z,z,k)e^{-ickt}dk \right]$$

abzuleiten.

10. Bildgebungsvorrichtung nach Anspruch 4,

wobei die Messdaten ausgedrückt werden durch

[Math. 25]

$$\Phi_{ij}$$
$$_{i,j=1,2}$$

wobei $\Phi_{11}$, $\Phi_{12}$, $\Phi_{21}$, und $\Phi_{22}$, ausgedrückt durch $\Phi_{ij}$, den Messdaten in Relation mit vier Streuungszuständen entsprechen, welche zwei Vorwärts-Streuungen entsprechend zwei Richtungen und zwei Rückwärts-Streuungen entsprechend zwei Richtungen beinhalten,
die Informationsverarbeitungsschaltung (103)

[Math. 26]

$$a_1(k_x, k_{y_1}, k_{y_2}, k)$$
$$= \Phi_{11}(k_x, k_{y_1}, k_{y_2}, k)$$
$$- \frac{1}{(2\pi)}\iiint \Phi_{11}(k_{x_a}, k_{y_1}, k_\eta, k)\Phi_{21}(k_{x_b}, -k_\eta, k_{y_2}, k)\delta(k_{xa} + k_{xb} - k_x)$$
$$\cdot \delta\left(s_2(k_{xa}, k_{y_1}, k_\eta) - s_1(k_{xb}, -k_\eta, k_{y_2})\right)dk_{x_a}dk_{x_b}dk_\eta$$
$$- \frac{1}{(2\pi)^2}\iiint\iint \{\Phi_{11}(k_{xa}, k_{y_1}, -k_{\eta_2}, k)\Phi_{22}(k_{xb}, k_{\eta_2}, -k_{\eta_3}, k)\Phi_{11}(k_{xc}, k_{\eta_3}, k_{y_2}, k)$$
$$+ \Phi_{12}(k_{xa}, k_{y_1}, -k_{\eta_2}, k)\Phi_{11}(k_{xb}, k_{\eta_2}, -k_{\eta_3}, k)\Phi_{21}(k_{xc}, k_{\eta_3}, k_{y_2}, k)$$
$$+ \Phi_{11}(k_{xa}, k_{y_1}, -k_{\eta_2}, k)\Phi_{21}(k_{xb}, k_{\eta_2}, -k_{\eta_3}, k)\Phi_{21}(k_{xc}, k_{\eta_3}, k_{y_2}, k)$$
$$+ \Phi_{12}(k_{xa}, k_{y_1}, -k_{\eta_2}, k)\Phi_{12}(k_{xb}, k_{\eta_2}, -k_{\eta_3}, k)\Phi_{11}(k_{xc}, k_{\eta_3}, k_{y_2}, k)\}$$
$$\cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right)$$
$$\cdot \delta\left(s_2(k_{xb}, k_{\eta_2}, -k_{\eta_3}) - s_1(k_{xc}, k_{\eta_3}, k_{y_2})\right)\, dk_{xa}dk_{xb}dk_{xc}dk_{\eta_2}dk_{\eta_3}$$

verwendet, um $a_1$ abzuleiten, woraus ein Effekt der Mehrfachstreuung entfernt wurde,
wobei $\delta$ eine Delta-Funktion bezeichnet, $k_{xa}$, $k_{xb}$, und $k_{xc}$ Variablen sind, die $k_x$ entsprechen, $k_\eta$ und $k_{\eta 2}$ Variablen sind, die $k_{y1}$ entsprechen, $k_{\eta 3}$ eine Variable ist, die $k_{y2}$ entspricht, und
die Informationsverarbeitungsschaltung (103) als die Streufeldfunktion

[Math. 27]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

verwendet, um als die Bildgebungsfunktion

[Math. 28]

$$\rho(x, y, z) = \lim_{t \to 0}\left[ \frac{1}{2\pi} \int_{-\infty}^{\infty} \phi_1(x, y, y, z, z, k) e^{-ickt} dk \right]$$

abzuleiten.

11. Bildgebungsverfahren, umfassend:

Senden (S101) einer Welle auf eine zu messende Region durch jeden einer Vielzahl von Sendern (101), die auf beiden Seiten der Region angeordnet sind;
Empfangen (S102) der Welle von der Region durch jeden einer Vielzahl von Empfängern (102); und
Ableiten (S103) einer Bildgebungsfunktion entsprechend einer Streufeldfunktion in Relation auf eine Streuung der Well, gemäß einer Entsprechung zwischen (i) Messdaten, die von der Vielzahl von Sendern (101) und der Vielzahl von Empfängern (102) erhalten werden, und einer Zusammensetzung einer Vielzahl von Funktionen, und Visualisieren einer dreidimensionalen Struktur eines Streuers, der in einem Objekt in der Region enthalten ist, unter Verwendung der Bildgebungsfunktion,
**dadurch gekennzeichnet, dass**
die Vielzahl von Empfängern (102) auf beiden Seiten angeordnet ist, und
die Zusammensetzung der Vielzahl von Funktionen eine Zusammensetzung einer Vielzahl von Funktionen in Relation zu mehreren Streuungen erster Ordnung, die eine mehrfache Streuung bilden, ist.

**Revendications**

1. Dispositif d'imagerie comprenant

une pluralité d'émetteurs (101) disposés de part et d'autre d'une région à mesurer, chacun d'entre eux émettant une onde vers la région ;
une pluralité de récepteurs (102) dont chacun reçoit l'onde de la région ; et
un circuit de traitement de l'information (103) qui calcule une fonction d'imagerie correspondant à une fonction de champ de diffusion liée à la diffusion de l'onde en fonction d'une correspondance entre (i) les données de mesure obtenues par la pluralité d'émetteurs (101) et la pluralité de récepteurs (102) et (ii) une composition d'une pluralité de fonctions, et qui visualise une structure tridimensionnelle d'un diffuseur inclus dans un objet dans la région, à l'aide de la fonction d'imagerie,
**caractérisé par le fait que**
la pluralité de récepteurs (102) est disposée des deux côtés, et
la composition de la pluralité de fonctions est une composition d'une pluralité de fonctions liées à la diffusion multiple du premier ordre formant une diffusion multiple.

2. Dispositif d'imagerie selon la revendication 1,

dans lequel le circuit de traitement de l'information (103) dérive la fonction d'imagerie correspondant à la fonction de champ de diffusion en résolvant une équation de la fonction de champ de diffusion sur la base des données de mesure,

la fonction de champ de diffusion est exprimée par
La fonction de champ de diffusion est exprimée par

[Math. 1]

$$\phi(x, y_1, y_2, z_1, z_2, k) = \iint_D \frac{e^{ik\rho_1}}{\rho_1} \frac{e^{ik\rho_2}}{\rho_2} \varepsilon(\xi, \eta, \zeta) d\xi d\eta d\zeta$$

où $(x, y_1, z_1)$ désigne une position de transmission de l'onde, $(x, y_2, z_2)$ désigne une position de réception de l'onde, k désigne un nombre d'onde de l'onde, D désigne la région, $(\xi, \eta, \zeta)$ correspond à une position de réflexion de l'onde, $\varepsilon$ correspond à une réflectance inconnue à la position de réflexion, $\rho_1$ représente une distance entre la position de transmission et la position de réflexion, et $\rho_2$ représente une distance entre la position de réflexion et la position de réception, et
l'équation est exprimée par

[Math. 2]

$$\left[ \frac{1}{4}\Delta_5^2 - \frac{1}{c^2}\partial_t^2\partial_x^2 - (\partial_{y_1}^2 + \partial_{z_1}^2)(\partial_{y_2}^2 + \partial_{z_2}^2) \right]\phi = 0$$

où $\Delta_5$ désigne un opérateur de Laplace lié à x, $y_1$, $y_2$, $z_1$, et $z_2$, c désigne une vitesse de propagation de l'onde, et t désigne le temps écoulé entre l'émission de l'onde et la réception de l'onde.

3. Dispositif d'imagerie selon la revendication 2,

dans lequel le circuit de traitement de l'information (103) calcule une solution analytique de l'équation sur la base des données de mesure, et calcule la fonction d'imagerie sur la base de la solution analytique, et
la solution analytique est exprimée par
La solution analytique s'exprime par

[Math. 3]

$$\phi(x, y_1, y_2, z_1, z_2, k)$$
$$= \frac{1}{(2\pi)^3} \int_{-\infty}^{\infty}\int_{-\infty}^{\infty}\int_{-\infty}^{\infty} e^{-i(k_x x + k_{y_1}y_1 + k_{y_2}y_2)} a(k_x, k_{y_1}, k_{y_2}, k) e^{is_1(k_x, k_{y_1}, k_{y_2})z_1} e^{is_2(k_x, k_{y_1}, k_{y_2})z_2} dk_x dk_{y_1} dk_{y_2}$$

où $k_x$, $k_{y1}$, et $k_{y2}$ désignent les nombres d'onde liés à x, $y_1$, et $y_2$ de la fonction de champ de diffusion, $a(k_x, k_{y1}, k_{y2}, k)$ désigne une fonction basée sur $k_x$, $k_{y1}$, $k_{y2}$, et k, $s_1(k_x, k_{y1}, k_{y2})$ désigne une fonction basée sur $k_x$, $k_{y1}$, et $k_{y2}$, et $s_2(k_x, k_{y1}, k_{y2})$ désigne une fonction basée sur $k_x$, $k_{y1}$, et $k_{y2}$.

4. Dispositif d'imagerie selon la revendication 3,

dans lequel le circuit de traitement de l'information (103) dérive la fonction d'imagerie sur la base de la solution analytique, et
la fonction d'imagerie est exprimée par

[Math. 4]

$$\rho(x, y, z) = \lim_{t \to 0} \left[ \frac{1}{2\pi} \int_{-\infty}^{\infty} \phi(x, y, y, z, z, k) e^{-ickt} dk \right]$$

où $(x, y, z)$ représente la position d'une cible d'imagerie.

5. Dispositif d'imagerie selon la revendication 1,

dans lequel la diffusion multiple est exprimée à l'aide de quatre fonctions d'un espace spectral correspondant à quatre solutions fondamentales d'une équation de la fonction de champ de diffusion,
une relation entre les données de mesure et les quatre fonctions est exprimée par une équation intégrale non linéaire, et
le circuit de traitement de l'information (103) :

déduit les quatre fonctions des données de mesure conformément à l'équation intégrale non linéaire ; et
déduit la fonction d'imagerie correspondant à la fonction de champ de diffusion, en utilisant les quatre fonctions.

6.  Dispositif d'imagerie selon la revendication 4,

dans lequel les données de mesure sont exprimées par

[Math. 5]

$$\Phi_{ij}_{\substack{i,j=1,2}}$$

où $\Phi_{11}$, $\Phi_{12}$, $\Phi_{21}$, et $\Phi_{22}$ exprimés par $\Phi_{ij}$ correspondent aux données de mesure liées à quatre états de diffusion qui comprennent deux diffusions vers l'avant correspondant à deux directions et deux diffusions vers l'arrière correspondant à deux directions,
le circuit de traitement de l'information (103) utilise

[Math. 6]

$$\Phi_{ij}_{\substack{i,j=1,2}} = a_{m_1}_{\substack{m_1=1,2,3,4}}$$
$$+ \frac{1}{(2\pi)^1} \int f_2 \left[ a_{m_1} a_{m_2} \right]_{\substack{m_1,m_2=1,2,3,4}} d\Bbbk_{f_2}$$
$$+ \frac{1}{(2\pi)^2} \int f_3 \left[ a_{m_1} a_{m_2} a_{m_3} \right]_{\substack{m_1,m_2,m_3=1,2,3,4}} d\Bbbk_{f_3}$$
$$+ \cdots$$
$$+ \frac{1}{(2\pi)^{L-1}} \int f_L \left[ a_{m_1} a_{m_2} a_{m_3} \cdots a_{m_L} \right]_{\substack{m_1,m_2,m_3,\cdots,m_L=1,2,3,4}} d\Bbbk_{f_L}$$

pour dériver

[Math. 7]

$$a_{m_1}_{\substack{m_1=1,2,3,4}}$$

dont l'effet de la diffusion multiple a été supprimé,
où $a_1$, $a_2$, $a_3$, et $a_4$ exprimés par $a_{m1}$, $a_{m2}$, $a_{m3}$, ..., $a_{mL}$ correspondent à $a(k_x, k_{y1}, k_{y2}, k)$ dans la solution analytique relative aux quatre états de diffusion, $f_2$, $f_3$, ..., $f_L$ désignent les produits de 2, 3, ..., L variables entre crochets correspondant à 2, 3, ..., L diffusions appliquées de la transmission de l'onde à la réception de l'onde, respectivement,

[Math. 8]

$$\mathbb{k}_{f_2}, \mathbb{k}_{f_3}, \cdots, \mathbb{k}_{f_L}$$

désignent les vecteurs du nombre d'ondes liés aux variables de coordonnées incluses dans les variables 2, 3, ..., L entre crochets de $f_2$, $f_3$, ..., $f_L$, et
le circuit de traitement de l'information (103) utilise la fonction de champ de diffusion,

[Math. 9]

$$\phi_{m_1}(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_{m_1}(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

$$m_1 = 1, 2, 3, 4$$

pour dériver, comme fonction d'imagerie,

[Math. 10]

$$\rho(x, y, z) = \lim_{t \to 0} \left[ \frac{1}{2\pi} \int_{-\infty}^{\infty} \phi_{m_1}(x, y, y, z, z, k) e^{-ickt} dk \right]$$

7. Dispositif d'imagerie selon la revendication 4,

dans lequel les données de mesure sont exprimées par

[Math. 11]

$$\Phi_{ij}$$
$$i, j = 1, 2$$

où $\Phi_{(11)}$, $\Phi_{12}$, $\Phi_{21}$, et $\Phi_{22}$ exprimés par $\Phi_{ij}$ correspondent aux données de mesure liées à quatre états de diffusion qui comprennent deux diffusions vers l'avant correspondant à deux directions et deux diffusions vers l'arrière correspondant à deux directions,
le circuit de traitement de l'information (103) utilise

[Math. 12]

$$a_m \underset{m=1,2,3,4}{} = \Phi_{ij} \underset{ij=1,2}{}$$

$$-\frac{1}{(2\pi)^1}\int g_2 \left[ \Phi_{m_1 n_1} \Phi_{m_2 n_2} \right] d\Bbbk_{g_2} \underset{\substack{m_1,n_1=1,2 \\ m_2,n_2=1,2}}{}$$

$$-\frac{1}{(2\pi)^2}\int g_3 \left[ \Phi_{m_1 n_1} \Phi_{m_2 n_2} \Phi_{m_3 n_3} \right] d\Bbbk_{g_3} \underset{\substack{m_1,n_1=1,2 \\ m_2,n_2=1,2 \\ m_3,n_3=1,2}}{}$$

$$-\cdots$$

$$-\frac{1}{(2\pi)^{L-1}}\int g_L \left[ \Phi_{m_1 n_1} \Phi_{m_2 n_2} \Phi_{m_3 n_3} \cdots \Phi_{m_L n_L} \right] d\Bbbk_{g_L} \underset{\substack{m_1,n_1=1,2 \\ m_2,n_2=1,2 \\ m_3,n_3=1,2 \\ \cdots \\ m_L,n_L=1,2}}{}$$

pour dériver

[Math. 13]

$$a_m \underset{m=1,2,3,4}{}$$

dont l'effet de la diffusion multiple a été supprimé,
où $a_1$, $a_2$, $a_3$, et $a_4$ exprimés par $a_m$ correspondent à $a(k_x, k_{y1}, k_{y2}, k)$ dans la solution analytique liée aux quatre états de diffusion, $\Phi_{11}$, $\Phi_{12}$, $\Phi_{21}$, et $\Phi_{22}$ exprimés par $\Phi_{m1n1}$, $\Phi_{m2n2}$, $\Phi_{m3n3}$,....$\Phi_{mLnL}$ correspondent aux données de mesure liées aux quatre états de diffusion, $g_2$, $g_3$, ..., $g_L$ désignent les produits de 2, 3, ..., L variables entre crochets correspondant à 2, 3, ..., L diffusions appliquées de l'émission de l'onde à la réception de l'onde, respectivement,

[Math. 14]

$$\Bbbk_{g_2}, \Bbbk_{g_3}, \cdots, \Bbbk_{g_L}$$

désignent les vecteurs de nombres d'onde liés aux variables de coordonnées incluses dans les variables 2, 3, ..., L entre crochets de $g_2$, $g_3$, ..., $g_L$, et
le circuit de traitement de l'information (103) utilise la fonction de champ de diffusion,

[Math. 15]

$$\phi_m(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_m(k_x, k_{y_1}, k_{y_2}, k)$$

$$\cdot e^{i s_1(k_x, k_{y_1}, k_{y_2})z_1} e^{i s_2(k_x, k_{y_1}, k_{y_2})z_2} dk_x dk_{y_1} dk_{y_2}$$

$$m = 1, 2, 3, 4$$

pour dériver, comme fonction d'imagerie,

[Math. 16]

$$\rho(\mathrm{x, y, z}) = \underset{t \to 0}{Lim} \left[ \frac{1}{2\pi} \int_{-\infty}^{\infty} \phi_m(x, y, y, z, z, k) e^{-ickt} dk \right]$$

8. Dispositif d'imagerie selon la revendication 4,

dans lequel les données de mesure sont exprimées par

[Math. 17]

$$\Phi_{ij}$$
$$i, j = 1, 2$$

où $\Phi_{(11)}$, $\Phi_{12}$, $\Phi_{21}$, et $\Phi_{22}$ exprimés par $\Phi_{ij}$ correspondent aux données de mesure liées à quatre états de diffusion qui comprennent deux diffusions vers l'avant correspondant à deux directions et deux diffusions vers l'arrière correspondant à deux directions,
le circuit de traitement de l'information (103) utilise

(Math. 18)

$$\Phi_{11}(k_x, k_{y_1}, k_{y_2}, k)$$

$$= a_1(k_x, k_{y_1}, k_{y_2}, k)$$

$$+ \frac{1}{(2\pi)} \iiint a_1(k_{x_a}, k_{y_1}, k_\eta, k) a_4(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$+ \frac{1}{(2\pi)^2} \iiint \iint a_1(k_{xa}, k_{y_1}, -k_{\eta_2}, k) a_2(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_1(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_1(k_{xa}, k_{y_1}, -k_{\eta_2}, k) a_4(k_{xb}, k_{\eta_2}, -k_{\eta_3}, k) a_4(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ \frac{1}{(2\pi)^2} \iiint \iint a_3(k_{xa}, k_{y_1}, -k_{\eta_2}, k) a_3(k_{xb}, k_{\eta_2}, -k_{\eta_3}, k) a_1(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$+ O(a^4)$$

pour dériver $a_1$ dont l'effet de la diffusion multiple a été supprimé,

où $\delta$ représente une fonction delta, $k_{xa}$, $k_{xb}$, et $k_{xc}$ sont des variables correspondant à $k_x$, $k_\eta$ et $k_{\eta 2}$ sont des variables correspondant à $k_{y1}$, $k_{\eta 3}$ est une variable correspondant à $k_{y2}$, et $O(a^4)$ est un terme correspondant à une diffusion de quatrième ordre ou d'ordre supérieur, et

le circuit de traitement de l'information (103) utilise, comme fonction de champ de diffusion,

[Math. 19]

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

pour dériver, en tant que fonction d'imagerie,

[Math. 20]

$$\rho(x, y, z) = \lim_{t \to 0} \left[ \frac{1}{2\pi} \int_{-\infty}^{\infty} \phi_1(x, y, y, z, z, k) e^{-ickt} dk \right]$$

.

9. Dispositif d'imagerie selon la revendication 4,

dans lequel les données de mesure sont exprimées par

[Math. 21]

$$\Phi_{ij}$$
$$i, j = 1, 2$$

où $\Phi_{(11)}$, $\Phi_{12}$, $\Phi_{21}$, et $\Phi_{22}$ exprimés par $\Phi_{ij}$ correspondent aux données de mesure liées à quatre états de diffusion qui comprennent deux diffusions vers l'avant correspondant à deux directions et deux diffusions vers l'arrière correspondant à deux directions,
le circuit de traitement de l'information (103) utilise

[Math. 22]

$$a_1(k_x, k_{y_1}, k_{y_2}, k)$$

$$= \Phi_{11}(k_x, k_{y_1}, k_{y_2}, k)$$

$$- \frac{1}{(2\pi)} \iiint \Phi_{11}(k_{x_a}, k_{y_1}, k_\eta, k) \Phi_{21}(k_{x_b}, -k_\eta, k_{y_2}, k) \delta(k_{xa} + k_{xb} - k_x)$$

$$\cdot \delta\left(s_2(k_{xa}, k_{y_1}, k_\eta) - s_1(k_{xb}, -k_\eta, k_{y_2})\right) dk_{x_a} dk_{x_b} dk_\eta$$

$$- \frac{1}{(2\pi)^2} \iiint \iint \Phi_{11}(k_{xa}, k_{y_1}, -k_{\eta_2}, k) \Phi_{22}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{11}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{11}(k_{xa}, k_{y_1}, -k_{\eta_2}, k) \Phi_{21}(k_{xb}, k_{\eta_2}, -k_{\eta_3}, k) \Phi_{21}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

$$- \frac{1}{(2\pi)^2} \iiint \iint \Phi_{12}(k_{xa}, k_{y_1}, -k_{\eta_2}, k) \Phi_{12}(k_{xb}, k_{\eta_2}, -k_{\eta_3}, k) \Phi_{11}(k_{xc}, k_{\eta_3}, k_{y_2}, k)$$

$$\cdot \delta(k_{xa} + k_{xb} + k_{xc} - k_x) \delta\left(s_1(k_{xb}, k_{\eta_2}, -k_{\eta_3}) - s_2(k_{xa}, k_{y_1}, -k_{\eta_2})\right)$$

$$\cdot \delta\left(s_2(k_{xb}, k_{\eta_2}, -k_{\eta_3}) - s_1(k_{xc}, k_{\eta_3}, k_{y_2})\right) dk_{xa} dk_{xb} dk_{xc} dk_{\eta_2} dk_{\eta_3}$$

pour dériver $a_1$ dont l'effet de la diffusion multiple a été supprimé,
où $\delta$ désigne une fonction delta, $k_{xa}$, $k_{xb}$, et $k_{xc}$ sont des variables correspondant à $k_x$, $k_\eta$ et $k_{\eta 2}$ sont des variables correspondant à $k_{y1}$, $k_{\eta 3}$ est une variable correspondant à $k_{y2}$, et
le circuit de traitement de l'information (103) utilise comme fonction de champ de diffusion,

(Math. 23)

$$\phi_1(x, y_1, y_2, z_1, z_2, k)$$

$$= \frac{1}{(2\pi)^3} \int_{-\infty}^{\infty} \int_{-\infty}^{\infty} \int_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

pour dériver, en tant que fonction d'imagerie,

[Math. 24]

$$\rho(\mathrm{x},\ \mathrm{y},\ \mathrm{z}) = \underset{t \to 0}{Lim}\left[\frac{1}{2\pi}\int_{-\infty}^{\infty}\phi_1(x,y,y,z,z,k)e^{-ickt}dk\right]$$

**10.** Dispositif d'imagerie selon la revendication 4,

dans lequel les données de mesure sont exprimées par

[Math. 25]

$$\Phi_{ij}\atop{i,j=1,2}$$

où $\Phi_{(11)}$, $\Phi_{12}$, $\Phi_{21}$, et $\Phi_{22}$ exprimés par $\Phi_{ij}$ correspondent aux données de mesure liées à quatre états de diffusion qui comprennent deux diffusions vers l'avant correspondant à deux directions et deux diffusions vers l'arrière correspondant à deux directions,
le circuit de traitement de l'information (103) utilise

(Math. 26)

$$a_1(k_x, k_{y_1}, k_{y_2}, k)$$
$$= \Phi_{11}(k_x, k_{y_1}, k_{y_2}, k)$$
$$- \frac{1}{(2\pi)}\iiint \Phi_{11}(k_{x_a}, k_{y_1}, k_\eta, k)\Phi_{21}(k_{x_b}, -k_\eta, k_{y_2}, k)\delta(k_{xa} + k_{xb} - k_x)$$
$$\cdot \delta\left(s_2(k_{xa}, k_{y_1}, k_\eta) - s_1(k_{xb}, -k_\eta, k_{y_2})\right)dk_{x_a}dk_{x_b}dk_\eta$$
$$- \frac{1}{(2\pi)^2}\iiint\iint\left\{\Phi_{11}(k_{xa}, k_{y_1}, -k_{\eta_2}, k)\Phi_{22}(k_{xb}, k_{\eta_2}, -k_{\eta_3}, k)\Phi_{11}(k_{xc}, k_{\eta_3}, k_{y_2}, k)\right.$$
$$+ \Phi_{12}(k_{xa}, k_{y_1}, -k_{\eta_2}, k)\Phi_{11}(k_{xb}, k_{\eta_2}, -k_{\eta_3}, k)\Phi_{21}(k_{xc}, k_{\eta_3}, k_{y_2}, k)$$
$$+ \Phi_{11}(k_{xa}, k_{y_1}, -k_{\eta_2}, k)\Phi_{21}(k_{xb}, k_{\eta_2}, -k_{\eta_3}, k)\Phi_{21}(k_{xc}, k_{\eta_3}, k_{y_2}, k)$$
$$\left. + \Phi_{12}(k_{xa}, k_{y_1}, -k_{\eta_2}, k)\Phi_{12}(k_{xb}, k_{\eta_2}, -k_{\eta_3}, k)\Phi_{11}(k_{xc}, k_{\eta_3}, k_{y_2}, k)\right\}$$
$$\cdot \delta(k_{xa} + k_{xb} + k_{xc} - k_x)\delta\left(s_1(k_{xb}, k_{\eta_2}, -k_{\eta_3}) - s_2(k_{xa}, k_{y_1}, -k_{\eta_2})\right)$$
$$\cdot \delta\left(s_2(k_{xb}, k_{\eta_2}, -k_{\eta_3}) - s_1(k_{xc}, k_{\eta_3}, k_{y_2})\right)\ dk_{xa}dk_{xb}dk_{xc}dk_{\eta_2}dk_{\eta_3}$$

pour obtenir $a_1$ dont l'effet de la diffusion multiple a été supprimé,
où $\delta$ représente une fonction delta, $k_{xa}$, $k_{xb}$ et $k_{xc}$ sont des variables correspondant à $k_x$, $k_\eta$ et $k_{\eta 2}$ sont des variables correspondant à $k_{y1}$, $k_{\eta 3}$ est une variable correspondant à $k_{y2}$, et
le circuit de traitement de l'information (103) utilise comme fonction de champ de diffusion,

(Math. 27)

$$\phi_1(x, y_1, y_2, z_1, z_2, k)$$

$$= \frac{1}{(2\pi)^3} \int\limits_{-\infty}^{\infty} \int\limits_{-\infty}^{\infty} \int\limits_{-\infty}^{\infty} e^{-i(k_x x + k_{y_1} y_1 + k_{y_2} y_2)} a_1(k_x, k_{y_1}, k_{y_2}, k)$$

$$\cdot e^{i s_1(k_x, k_{y_1}, k_{y_2}) z_1} e^{i s_2(k_x, k_{y_1}, k_{y_2}) z_2} dk_x dk_{y_1} dk_{y_2}$$

pour dériver, en tant que fonction d'imagerie,

[Math. 28]

$$\rho(x, y, z) = \underset{t \to 0}{Lim}\left[ \frac{1}{2\pi} \int\limits_{-\infty}^{\infty} \phi_1(x, y, y, z, z, k) e^{-ickt} dk \right]$$

**11.** Méthode d'imagerie comprenant

la transmission (S101), par chacun d'une pluralité d'émetteurs (101) disposés de part et d'autre de la région, une onde vers une région à mesurer ;
la réception (S102), par chacun des récepteurs (102), de l'onde en provenance de la région ; et
la dérivation (S103) d'une fonction d'imagerie correspondant à une fonction de champ de diffusion liée à la diffusion de l'onde selon une correspondance entre (i) les données de mesure obtenues par la pluralité d'émetteurs (101) et la pluralité de récepteurs (102) et une composition d'une pluralité de fonctions, et visualisation d'une structure tridimensionnelle d'un diffuseur inclus dans un objet dans la région, à l'aide de la fonction d'imagerie,
**caractérisé par le fait que**
la pluralité de récepteurs (102) est disposée des deux côtés, et
la composition de la pluralité de fonctions est une composition d'une pluralité de fonctions liées à la diffusion multiple du premier ordre formant une diffusion multiple.

FIG. 1

# FIG. 2

$P_1(x, y_1, z_1)$

$P_2(x, y_2, z_2)$

$E_1(k_x, k_{y1}, k_{y2}, z_1, z_2) = \exp\{i(s_1 + s_2)z\}$
Back scattering

$P_1(x, y_1, z_1)$

$P_2(x, y_2, z_2)$

$E_2(k_x, k_{y1}, k_{y2}, z_1, z_2) = \exp\{-i(s_1 + s_2)z\}$
Back scattering

$P_2(x, y_2, z_2)$

$P_1(x, y_1, z_1)$

$E_3(k_x, k_{y1}, k_{y2}, z_1, z_2) = \exp\{i(s_1 - s_2)z\}$
Forward scattering

$P_1(x, y_1, z_1)$

$P_2(x, y_2, z_2)$

$E_4(k_x, k_{y1}, k_{y2}, z_1, z_2) = \exp\{i(-s_1 + s_2)z\}$
Forward scattering

EP 4 354 125 B1

FIG. 3

# FIG. 4

FIG. 5

# FIG. 6

FIG. 7

EP 4 354 125 B1

# FIG. 8

$P_1(x, y_1, z_1)$    $P_2(x, y_2, z_2)$

$\Phi_{11}(k_x, k_{y1}, k_{y2}, k)$

Back scattering

$P_1(x, y_1, z_1)$    $P_2(x, y_2, z_2)$

$\Phi_{22}(k_x, k_{y1}, k_{y2}, k)$

Back scattering

$P_2(x, y_2, z_2)$

$P_1(x, y_1, z_1)$

$\Phi_{12}(k_x, k_{y1}, k_{y2}, k)$

Forward scattering

$P_1(x, y_1, z_1)$

$P_2(x, y_2, z_2)$

$\Phi_{21}(k_x, k_{y1}, k_{y2}, k)$

Forward scattering

# FIG. 9

# FIG. 10

# FIG. 11

# FIG. 12

FIG. 13

100

Distance meter 1001

Distance signal or free run signal

Digital delay of LO signal

Digital control board 1003

FPGA board for PN code generation 1002

LO signal

PN code sweep trigger

Switch signal

PN code (RF signal) Sweep start signal

RF signal

Multistatic antenna array 1008

UWB antenna RF switch 1004

RF signal

A/D conversion
Signal calibration
Raw wave display
3D reconstruction
3D image display

Memory 1009

IF signal

Signal processing calculator 1005

RF detection board 1007

Delayed LO signal

Signal monitoring device 1006

Amplification, detection, filter

EP 4 354 125 B1

93

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S6266145 A
- WO 2014125815 A
- WO 2015136936 A
- WO 2021020387 A
- WO 2021053971 A